(19) **Europäisches Patentamt**
**European Patent Office**
**Office européen des brevets**

(11) **EP 3 605 977 B1**

(12) **EUROPEAN PATENT SPECIFICATION**

(45) Date of publication and mention
of the grant of the patent:
**03.05.2023 Bulletin 2023/18**

(21) Application number: **18772285.5**

(22) Date of filing: **24.03.2018**

(51) International Patent Classification (IPC):
**H04L 25/02** (2006.01)   **H04B 7/26** (2006.01)
**H04L 5/00** (2006.01)   **H04L 27/26** (2006.01)

(52) Cooperative Patent Classification (CPC):
**H04L 5/0023; H04L 5/0048; H04L 5/0082;**
**H04L 5/0091; H04L 25/02; H04L 27/26025;**
**H04L 27/261;** H04L 5/0012; H04L 5/0064;
Y02D 30/70

(86) International application number:
**PCT/CN2018/080387**

(87) International publication number:
**WO 2018/171783 (27.09.2018 Gazette 2018/39)**

(54) **METHOD, APPARATUS AND SYSTEM FOR SIGNAL TRANSMISSION**

VERFAHREN, VORRICHTUNG UND SYSTEM ZUR SIGNALÜBERTRAGUNG

PROCÉDÉ, APPAREIL ET SYSTÈME DE TRANSMISSION DE SIGNAL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **24.03.2017 CN 201710184763**
**11.09.2017 CN 201710814891**

(43) Date of publication of application:
**05.02.2020 Bulletin 2020/06**

(73) Proprietor: **Huawei Technologies Co., Ltd.**
**Longgang District**
**Shenzhen, Guangdong 518129 (CN)**

(72) Inventors:
• **SUN, Yu**
**Shenzhen**
**Guangdong 518129 (CN)**
• **QIN, Yi**
**Shenzhen**
**Guangdong 518129 (CN)**
• **LI, Zhongfeng**
**Shenzhen**
**Guangdong 518129 (CN)**
• **ZHANG, Leiming**
**Shenzhen**
**Guangdong 518129 (CN)**
• **DOU, Shengyue**
**Shenzhen**
**Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(56) References cited:
**CN-A- 104 170 275   CN-A- 105 052 227**
**CN-A- 105 846 976   US-A1- 2013 336 282**

• **CATT: "Further discussion on phase tracking for**
**UL", 3GPP DRAFT; R1-1700233, 3RD**
**GENERATION PARTNERSHIP PROJECT (3GPP),**
**MOBILE COMPETENCE CENTRE ; 650, ROUTE**
**DES LUCIOLES ; F-06921 SOPHIA-ANTIPOLIS**
**CEDEX ; FRANCE , vol. RAN WG1, no. Spokane,**
**USA; 20170116 - 20170120 16 January 2017**
**(2017-01-16), XP051207771, Retrieved from the**
**Internet:**
**URL:http://www.3gpp.org/ftp/Meetings_3GPP_**
**SYNC/RAN1/Docs/ [retrieved on 2017-01-16]**

- ERICSSON: "On phase tracking in DFT-S-OFDM waveform", 3GPP DRAFT; R1-1612338 ON PHASE TRACKING IN DFT-S-OFDM WAVEFORM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 13 November 2016 (2016-11-13), XP051176287, Retrieved from the Internet: URL:http://www.3gpp.org/ftp/Meetings_3GPP_ SYNC/RAN1/Docs/ [retrieved on 2016-11-13]
- ZTE ET AL: "Simulation results for downlink DMRS", 3GPP DRAFT; R1-1700137 SIMULATION RESULTS FOR DOWNLINK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051207680, Retrieved from the Internet: URL:http://www.3gpp.org/ftp/Meetings_3GPP_ SYNC/RAN1/Docs/ [retrieved on 2017-01-16]
- ZTE ET AL: "Discussion on downlink DMRS design", 3GPP DRAFT; R1-1700135 DISCUSSION ON DOWNLINK DMRS DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051207678, Retrieved from the Internet: URL:http://www.3gpp.org/ftp/Meetings_3GPP_ SYNC/RAN1/Docs/ [retrieved on 2017-01-16]
- ZTE ET AL: "Resource sharing between PDCCH and PDSCH", 3GPP DRAFT; R1-1701587 RESOURCE SHARING BETWEEN PDCCH AND PDSCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051208754, Retrieved from the Internet: URL:http://www.3gpp.org/ftp/Meetings_3GPP_ SYNC/RAN1/Docs/ [retrieved on 2017-02-12]

**Description**

**TECHNICAL FIELD**

This application relates to the field of wireless communications technologies, and in particular, to a signal transmission method, apparatus, and system.

**BACKGROUND**

With development of mobile internet technologies, requirements for a communication rate and a communication capacity increasingly grow, and existing low-spectrum resources are subject to increasing shortage and cannot meet the requirements. Therefore, high-frequency radio resources with rich spectrum resources become a research focus of wireless communications. In a wireless communications system, a frequency device, namely, a local oscillator, is non-ideal. Random jitter of the local oscillator causes phase noise in an output carrier signal. Magnitude of the phase noise is directly related to a carrier frequency: Phase noise power changes according to 20log(n), where n is a quantity of times of frequency increase, meaning that the phase noise power increases by 6 dB each time the carrier frequency is doubled. Therefore, impact of the phase noise cannot be ignored in high-frequency wireless communications. For a future evolved wireless system, new radio (New Radio, NR), the 3rd generation partnership project 3GPP (The 3rd Generation Partnership Project) has incorporated high frequencies into an adopted spectrum range. Therefore, related impact of the phase noise also needs to be considered during design.

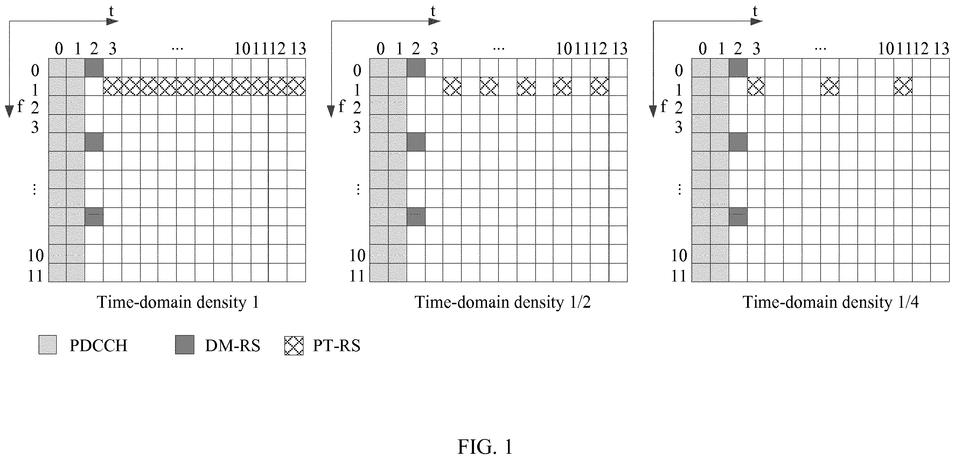

A most commonly used method for phase noise estimation is estimating a phase error by using an inserted phase tracking reference signal (phase tracking reference signal, PT-RS). Currently, new radio (new radio, NR) supports a plurality of types of symbol-level time-domain densities of the PT-RS. As shown in FIG. 1, in time domain, the PT-RS may be continuously mapped to every symbol of a PUSCH (or a PDSCH) (namely, a "time-domain density 1" shown in the figure), or may be mapped to every 2nd symbol of a PUSCH (or a PDSCH) (namely, a "time-domain density 1/2" shown in the figure), or may be mapped to every 4th symbol of a PUSCH (or a PDSCH) (namely, a "time-domain density 1/4" shown in the figure).

In a further discussion on an NR communications technology standard, the 3GPP working group has agreed on the following proposal:

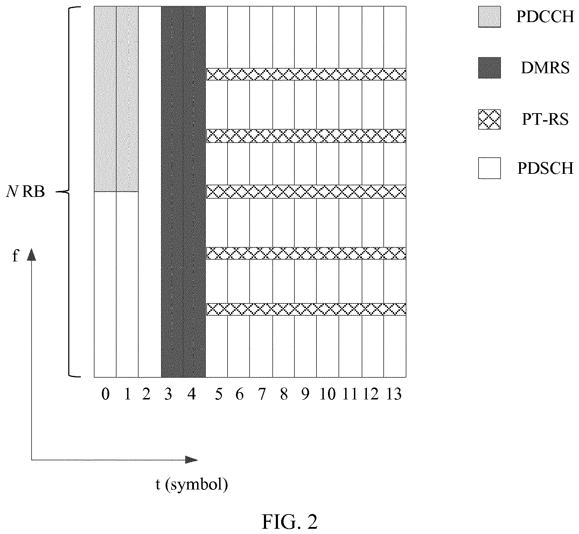

A physical downlink control channel (physical downlink control channel, PDCCH) and a physical downlink shared channel (physical downlink shared channel, PDSCH) may be sent on a same symbol through frequency division. As a result, the PDSCH is also mapped to a symbol preceding a symbol carrying a demodulation reference signal (Demodulation Reference Signal, DMRS). For example, as shown in FIG. 2, the DMRS is mapped to symbols 3 and 4, the PDCCH is mapped to symbols 0 and 1, and the PDSCH is also mapped to symbols 0 and 1.

CATT, "Further discussion on phase tracking for UL", vol. RAN WG1, no. Spokane, USA; 20170116 - 20170120, (20170116), 3GPP DRAFT; R1-1700233, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/Meetings_3GPP_SYNC/RAN1/Docs/, (20170116), XP051207771, discloses phase tracking for uplink, wherein Figure 2 discloses PTRS design for DFT-S-OFDM waveform.

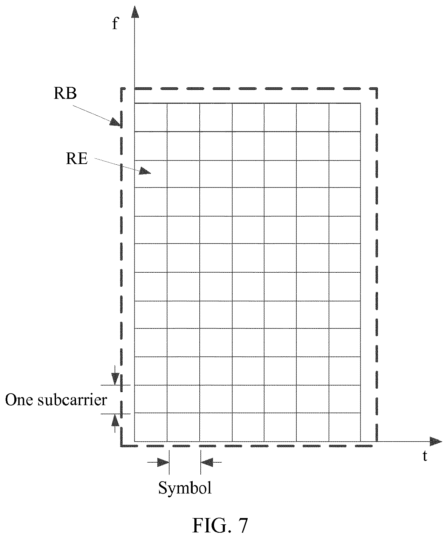

ZTE ET AL, "Simulation results for downlink DMRS", vol. RAN WG1, no. Spokane, USA; 20170116 - 20170120, (20170116), 3GPP DRAFT; R1-1700137 SIMULATION RESULTS FOR DOWNLINK, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/Meetings_3GPP_SYNC/RAN1/Docs/, (20170116), XP051207680, discloses DMRS for high speed, wherein Figures 7 and 7d show middle loaded DMRS and additional reference signals which are used for phase noise compensation, i.e. phase tracking.

ZTE ET AL: "Resource sharing between PDCCH and PDSCH",3GPP DRAFT; R1-1701587,, URL:http://www.3gpp.org/ftp/Meetings_3GPP_SYNC/RAN1/Docs/, (2017-02-12), XP051208754, discusses resource sharing between PDCCH and PDSCH for NR schemes, and discloses that control resource set (CORESET) is introduced to reserve a fractional of whole bandwidth for control monitoring, so that PRBs not reserved for DL control in the carrier bandwidth should be fully utilized by PDSCH. Moreover, within a CORESET, resources not used for PDCCH can be used for PDSCH, wherein the multiplexing between the two can be also in a FDM manner.

In addition, currently, there is no determined binding relationship between a time-domain symbol location of the DMRS and a quantity of symbols of the PDCCH. Likewise, the PDSCH is consequently mapped to the symbol preceding the symbol carrying the DMRS. For example, as shown in FIG. 2, the PDSCH is mapped to the symbol 2 preceding the symbols carrying the DMRS.

However, in all existing PT-RS symbol mapping solutions shown in FIG. 1, a symbol following a symbol carrying the DMRS is determined as a start symbol to which the PT-RS is mapped, and the PT-RS can be only used to estimate phase noise of a data channel mapped to a symbol following the symbol carrying the DMRS.

**EP 3 605 977 B1**

## SUMMARY

This application provides a signal transmission method, apparatus, and system, to ensure that a PT-RS is also mapped to a symbol to which a data channel is mapped and that precedes a symbol carrying a DMRS, thereby ensuring phase noise estimation performance.

The present invention is defined by the independent claims. Additional features of the invention are presented in the dependent claims. In the following, parts of the description and drawings referring to embodiments, which are not covered by the claims are not presented as embodiments of the invention, but as examples useful for understanding the invention.

According to a first aspect, this application provides a signal transmission method. The method is applied to a first device side (namely, a transmit end), and the method includes: sending, by a first device, a first reference signal to a second device, where the first reference signal is used for phase tracking; the first reference signal is mapped to a first symbol; the first symbol includes a symbol that carries a data signal and that precedes a second symbol in a time-domain unit; and the second symbol is the 1st symbol carrying a demodulation reference signal in the time-domain unit; or the second symbol is a plurality of consecutive symbols in the time-domain unit, and the plurality of consecutive symbols include the 1st symbol carrying the demodulation reference signal.

According to a second aspect, this application provides a signal transmission method. The method is applied to a second device side (namely, a receive end). The method includes: receiving, by a second device, a first reference signal sent by a first device, where the first reference signal is mapped to a first symbol; the first symbol includes a symbol that carries a data signal and that precedes a second symbol in a time-domain unit; and the second symbol is the 1st symbol carrying a demodulation reference signal in the time-domain unit; or the second symbol is a plurality of consecutive symbols in the time-domain unit, and the plurality of consecutive symbols include the 1st symbol carrying the demodulation reference signal.

In this application, the second symbol is a symbol carrying a front-loaded DMRS, and the first reference signal is a PT-RS.

According to the signal transmission method described in the first aspect and the second aspect, it can be ensured that a PT-RS is also mapped to a symbol to which a data channel is mapped and that precedes a symbol carrying a DMRS, thereby ensuring phase noise estimation performance.

With reference to the first aspect or the second aspect, PT-RS mapping may include the following two parts:

1. PT-RS mapping on a symbol that carries the data signal and that precedes the second symbol (the symbol carrying the front-loaded DMRS).
2. PT-RS mapping on a symbol that carries the data signal and that follows the second symbol (the symbol carrying the front-loaded DMRS).

Herein, a symbol preceding the second symbol is a symbol whose index is smaller than an index of the second symbol, and a symbol following the second symbol is a symbol whose index is larger than the index of the second symbol.

(1) Rule of time-domain PT-RS mapping on a symbol preceding the second symbol

According to a first mapping rule, the PT-RS may be mapped to the 1st symbol that carries the data signal and that precedes the second symbol. In other words, PT-RS mapping starts from the 1st symbol of a data channel (PUSCH/PDSCH). In this way, it can be ensured that the PT-RS is also mapped to a symbol to which a data channel is mapped and that precedes the second symbol, thereby ensuring phase noise estimation performance.

According to a second mapping rule, an index of a symbol that is used to carry the PT-RS and that precedes the second symbol is related to a first difference. The first difference ($H_2$) is a difference between an index ($I_0$) of the 1st symbol carrying the DMRS and an index of the 1st symbol carrying the data signal. In other words, the index of the symbol that is used to carry the PT-RS and that precedes the second symbol is related to a quantity of symbols preceding the second symbol.

(2) Rule of time-domain PT-RS mapping on a symbol following the second symbol

According to a first mapping rule, an index of a start symbol to which the PT-RS is mapped and that follows the second symbol may be determined based on a time-domain density of the PT-RS. In addition, in ascending order of index values of symbols, the PT-RS is mapped to a symbol with a smallest index among every L symbols. L is a reciprocal of the time-domain density of the PT-RS.

Specifically, the time-domain density of the PT-RS may be related to at least one of a CP type, a subcarrier spacing, and a modulation and coding scheme. Refer to subsequent content. Details are not described herein. Specifically, the time-domain density of the PT-RS and a mapping relationship between the time-domain density of the PT-RS and the index of the start symbol to which the PT-RS is mapped may be predefined by a protocol, or may be configured by a network device by using higher layer signaling (for example, RRC signaling) or a PDCCH.

According to a second mapping rule, the PT-RS may be evenly mapped to all time-domain symbols (including the second symbol, a symbol preceding the second symbol, and a symbol following the second symbol). In this way, the PT-RS is also evenly mapped to the symbol following the second symbol. Optionally, a mapping priority of the PT-RS is lower than that of a PDCCH, a PUCCH, an SS block, a CSI-RS, an SRS, or the like.

According to a third mapping rule, the PT-RS is mapped to the last symbol that carries the data signal and that follows the second symbol, and is evenly mapped to a symbol following the second symbol in descending order of index values of symbols.

According to a fourth mapping rule, an index of a symbol that is used to carry the PT-RS and that follows the second symbol is related to a quantity of symbols following the second symbol.

With reference to the first aspect or the second aspect, according to the foregoing time-domain PT-RS mapping rules, in Embodiment 1, the PT-RS is mapped to the 1st symbol carrying the data signal (PDSCH/PUSCH) in the time-domain unit. Optionally, in the time-domain unit, in ascending order of index values of symbols, the PT-RS is mapped to a symbol with a smallest index among every L symbols. In other words, starting from the 1st symbol carrying the data signal, the PT-RS may be evenly mapped within the time-domain unit. L is a reciprocal of a symbol-level time-domain density of the PT-RS. A value of L may be determined based on the symbol-level time-domain density of the PT-RS. For example, the value may be {1, 2, 4}.

With reference to the first aspect or the second aspect, according to the foregoing time-domain PT-RS mapping rules, in Embodiment 2, in the time-domain unit, a location of a symbol carrying the PT-RS may be related to a location of the symbol carrying the front-loaded DMRS (namely, the second symbol), and the 1st symbol and the last symbol that carry the data signal (PDSCH/PUSCH). Herein, the 1st symbol carrying the data signal is a symbol with a smallest index among symbols in the time-domain unit that carry the data signal (PDSCH/PUSCH). The last symbol carrying the data signal is a symbol with a largest index among symbols in the time-domain unit that carry the data signal (PDSCH/PUSCH).

Specifically, in the time-domain unit, starting from the 1st symbol carrying the data signal, the PT-RS may be evenly mapped to a symbol preceding the second symbol in ascending order of index values of symbols. In the time-domain unit, starting from the last symbol carrying the data signal, the PT-RS may be evenly mapped to a symbol following the second symbol in descending order of index values of symbols.

With reference to the first aspect or the second aspect, according to the foregoing time-domain PT-RS mapping rules, in Embodiment 3, a location of a symbol carrying the PT-RS may be related to a location of the symbol carrying the front-loaded DMRS (namely, the second symbol). Optionally, the location of the symbol carrying the PT-RS is further related to the symbol carrying the front-loaded DMRS (namely, the second symbol); a quantity of symbols, in the time-domain unit, whose symbol indexes are smaller than an index of the 1st symbol carrying the front-loaded DMRS; and a quantity of symbols, in the time-domain unit, whose symbol indexes are larger than an index of the last symbol carrying the front-loaded DMRS.

In Embodiment 3, specifically, in the time-domain unit, an index of the last symbol that carries the PT-RS and that precedes the second symbol is related to the first difference. In addition, starting from the index of the last symbol carrying the PT-RS, in descending order of symbol indexes, the PT-RS is evenly mapped to the symbol that carries the data signal and that precedes the second symbol. Specifically, in the time-domain unit, an index of the 1st symbol that carries the PT-RS and that follows the second symbol is related to the quantity of symbols following the second symbol. In addition, starting from the index of the 1st symbol carrying the PT-RS, the PT-RS is evenly mapped to a symbol following the second symbol in ascending order of symbol indexes.

In Embodiment 3, optionally, when the time-domain density of the PT-RS is 1/2, namely, L = 2, if a difference $H_1$ between the index of the last symbol carrying the front-loaded DMRS and an index of the last symbol that carries the data signal (PDSCH/PUSCH) and that follows the symbol carrying the front-loaded DMRS is an odd number, the PT-RS is mapped to a symbol whose index is $l_{DM-RS} + 1$. Optionally, starting from the symbol whose index is $l_{DM-RS} + 1$, the PT-RS may be evenly mapped to a symbol following the second symbol in ascending order of symbol indexes. If a difference $H_2$ between the index of the 1st symbol carrying the front-loaded DMRS and an index of the 1st symbol that carries the data signal (PDSCH/PUSCH) and that precedes the front-loaded DMRS is an odd number, the PT-RS is mapped to a symbol whose index is $l_0 - 1$. Optionally, starting from the symbol whose index is $l_0 - 1$, the PT-RS may be evenly mapped to a symbol preceding the second symbol in descending order of symbol indexes.

In Embodiment 3, optionally, when the time-domain density of the PT-RS is 1/2, namely, L = 2, if a difference $H_1$ between the index of the last symbol carrying the front-loaded DMRS and an index of the last symbol that carries the data signal (PDSCH/PUSCH) and that follows the symbol carrying the front-loaded DMRS is an even number, the PT-RS is mapped to a symbol whose index is $l_{DM-RS} + 2$. Optionally, starting from the symbol whose index is $l_{DM-RS} + 2$, the PT-RS may be evenly mapped to a symbol following the second symbol in ascending order of symbol indexes. If a difference $H_2$ between the index of the 1st symbol carrying the front-loaded DMRS and an index of the 1st symbol

that carries the data signal (PDSCH/PUSCH) and that precedes the front-loaded DMRS is an even number, the PT-RS is mapped to a symbol whose index is $l_0$ - 2. Optionally, starting from the symbol whose index is $l_0$ - 2, the PT-RS may be evenly mapped to a symbol preceding the second symbol in descending order of symbol indexes.

In Embodiment 3, optionally, when the time-domain density of the PT-RS is 1/4, namely, L = 4, if a difference $H_1$ between the index of the last symbol carrying the front-loaded DMRS and an index of the last symbol that carries the data signal (PDSCH/PUSCH) and that follows the symbol carrying the front-loaded DMRS is an integer multiple of 4, the PT-RS is mapped to a symbol whose index is $l_{DM-RS}$ + 4. Optionally, starting from the symbol whose index is $l_{DM-RS}$ + 4, the PT-RS may be evenly mapped to a symbol following the second symbol in ascending order of symbol indexes. If a difference $H_2$ between the index of the 1st symbol carrying the front-loaded DMRS and an index of the 1st symbol that carries the data signal (PDSCH/PUSCH) and that precedes the front-loaded DMRS is an integer multiple of 4, the PT-RS is mapped to a symbol whose index is $l_0$ - 4. Optionally, starting from the symbol whose index is $l_0$ - 4, the PT-RS may be evenly mapped to a symbol preceding the second symbol in descending order of symbol indexes.

In Embodiment 3, optionally, when the time-domain density of the PT-RS is 1/4, namely, L = 4, if a difference $H_1$ between the index of the last symbol carrying the front-loaded DMRS and an index of the last symbol that carries the data signal (PDSCH/PUSCH) and that follows the symbol carrying the front-loaded DMRS satisfies Himod4 = 1, the PT-RS is mapped to a symbol whose index is $l_{DM-RS}$ + 1. Optionally, starting from the symbol whose index is $l_{DM-RS}$ + 1, the PT-RS may be evenly mapped to a symbol following the second symbol in ascending order of symbol indexes. If a difference $H_2$ between the index of the 1st symbol carrying the front-loaded DMRS and an index of the 1st symbol that carries the data signal (PDSCH/PUSCH) and that precedes the front-loaded DMRS satisfies $H_2$mod4 = 2, the PT-RS is mapped to a symbol whose index is $l_0$ - 1. Optionally, starting from the symbol whose index is $l_0$ - 1, the PT-RS may be evenly mapped to a symbol preceding the second symbol in descending order of symbol indexes.

In Embodiment 3, optionally, when the time-domain density of the PT-RS is 1/4, namely, L = 4, if a difference $H_1$ between the index of the last symbol carrying the front-loaded DMRS and an index of the last symbol that carries the data signal (PDSCH/PUSCH) and that follows the symbol carrying the front-loaded DMRS satisfies Himod4 = 2, the PT-RS is mapped to a symbol whose index is $l_{DM-RS}$ + 2. Optionally, starting from the symbol whose index is $l_{DM-RS}$ + 2, the PT-RS may be evenly mapped to a symbol following the second symbol in ascending order of symbol indexes. If a difference $H_2$ between the index of the 1st symbol carrying the front-loaded DMRS and an index of the 1st symbol that carries the data signal (PDSCH/PUSCH) and that precedes the front-loaded DMRS satisfies $H_2$mod4 = 2, the PT-RS is mapped to a symbol whose index is $l_0$ - 2. Optionally, starting from the symbol whose index is $l_0$ - 2, the PT-RS may be evenly mapped to a symbol preceding the second symbol in descending order of symbol indexes.

In Embodiment 3, optionally, when the time-domain density of the PT-RS is 1/4, namely, L = 4, if a difference $H_1$ between the index of the last symbol carrying the front-loaded DMRS and an index of the last symbol that carries the data signal (PDSCH/PUSCH) and that follows the symbol carrying the front-loaded DMRS satisfies Himod4 = 3, the PT-RS is mapped to a symbol whose index is $l_{DM-RS}$ + 3. Optionally, starting from the symbol whose index is $l_{DM-RS}$ + 3, the PT-RS may be evenly mapped to a symbol following the second symbol in ascending order of symbol indexes. If a difference $H_2$ between the index of the 1st symbol carrying the front-loaded DMRS and an index of the 1st symbol that carries the data signal (PDSCH/PUSCH) and that precedes the front-loaded DMRS satisfies $H_2$mod4 = 3, the PT-RS is mapped to a symbol whose index is $l_0$ - 3. Optionally, starting from the symbol whose index is $l_0$ - 3, the PT-RS may be evenly mapped to a symbol preceding the second symbol in descending order of symbol indexes.

In Embodiment 3, an index *l* of a symbol carrying the PT-RS may be expressed by using the following formula:

$$l = \begin{cases} l_{\text{DM-RS}} + \left[ H_1 - \left( \left\lceil \frac{H_1}{L} \right\rceil - 1 \right) \times L \right] + L \cdot l', & if \ \ l > l_{\text{DM-RS}} \\ l_0 - \left[ H_2 - \left( \left\lceil \frac{H_2}{L} \right\rceil - 1 \right) \times L \right] - L \cdot l', & if \ \ l < l_0, H_2 > 0 \end{cases} ;$$

or

$$l = \begin{cases} l_{DM-RS} + [L - (-H_1) mod \ L] + L \cdot l', & if \ l > l_{DM-RS} \\ l_0 - [L - (-H_2) mo \ L] - L \cdot l', & if \ l < l_0, H_2 > 0 \end{cases}$$

where *l'* is a positive integer, *l'* = 0, 1, 2, ..., L represents the reciprocal of the symbol-level time-domain density of the PT-RS, $H_1$ represents the quantity of symbols following the second symbol, H2 represents the foregoing first difference, $l_0$ represents the index of the 1st symbol carrying the front-loaded DMRS, and $l_{DM-RS}$ represents the index of the last symbol carrying the front-loaded DMRS.

With reference to the first aspect or the second aspect, in some optional embodiments, a mapping priority of the phase tracking reference signal (PT-RS) may be lower than that of at least one of the following: a physical downlink control channel (PDCCH), a physical uplink control channel (physical uplink control channel, PUCCH), a synchronization signal block (synchronization signal block, SS block), a channel state information reference signal (channel state information reference signal, CSI-RS), a sounding reference signal (Sounding Reference Signal, SRS), a demodulation reference signal (DMRS), and the like. In other words, the PT-RS is not mapped to a resource to which any one of the foregoing signals needs to be mapped. In this way, mapping priorities of the PT-RS and other reference signals and physical channels are determined, and therefore when a resource conflict occurs between the PT-RS and the other reference signals and physical channels, the conflict can be avoided in a manner of skipping mapping the PT-RS.

According to a third aspect, this application provides a signal transmission method. The method is applied to a network device side. The method includes: sending, by a network device, first indication information, where the first indication information herein indicates a location of a time-frequency resource occupied by at least two groups of first reference signals, and antenna ports separately associated with the at least two groups of first reference signals are not quasi-co-located; and then sending, by the network device, a data signal, where the data signal is not mapped to the time-frequency resource occupied by the at least two groups of first reference signals.

According to a fourth aspect, this application provides a signal transmission method. The method is applied to a terminal device side. The method includes: receiving, by a terminal device, first indication information, where the first indication information indicates a location of a time-frequency resource occupied by at least two groups of first reference signals, and antenna ports separately associated with the at least two groups of first reference signals are not quasi-co-located; then determining, by the terminal device based on the first indication information, the time-frequency resource occupied by at least two groups of first reference signals; and receiving, by the terminal device, a data signal, where the data signal is not mapped to the time-frequency resource occupied by the at least two groups of first reference signals.

According to the signal transmission method described in the third aspect and the fourth aspect, in a non-coherent joint transmission (non-coherent joint transmission, NCJT) scenario, rate matching may be performed on data (that is, the data is not mapped) on a resource on which another transmission and reception point (transmission and reception point, TRP) sends a PT-RS. This can avoid PT-RS interference caused by data sent by different transmission and reception points, thereby ensuring PT-RS phase noise estimation performance.

With reference to the third aspect or the fourth aspect, in some optional embodiments, the first indication information (higher layer signaling, or a joint indication of higher layer signaling and physical layer signaling) may include first information and second information. The first information is used to determine a subcarrier occupied by a PT-RS, and the second information is used to determine a symbol occupied by the PT-RS. Specifically, the first information may include at least one of the following: transmission enabling information of the PT-RS, indication information of a DMRS port that is in a DMRS port group and that is associated with an antenna port of the PT-RS, indication information of a DMRS port group, or indication information of an association relationship between a frequency-domain density of the PT-RS and a schedulable bandwidth threshold. Specifically, the second information may include indication information of an association relationship between a time-domain density of the PT-RS and an MCS threshold.

With reference to the third aspect or the fourth aspect, in some optional embodiments, a subcarrier occupied by the first reference signals includes a subcarrier at a frequency-domain density corresponding to a maximum schedulable bandwidth that is scheduled by a third device to a fourth device.

With reference to the third aspect or the fourth aspect, in some optional embodiments, a symbol occupied by the first reference signals includes a symbol at a time-domain density corresponding to a maximum modulation and coding scheme that is scheduled by the third device to the fourth device.

According to a fifth aspect, this application provides a communications apparatus. The communications apparatus may include a plurality of function modules, configured to correspondingly perform the method provided in the first aspect or the method provided in any one of the possible implementations of the first aspect.

According to a sixth aspect, this application provides a communications apparatus. The communications apparatus may include a plurality of function modules, configured to correspondingly perform the method provided in the second aspect or the method provided in any one of the possible implementations of the second aspect.

According to a seventh aspect, this application provides a communications apparatus, configured to perform the signal transmission method described in the first aspect. The communications apparatus may include a memory, and a processor and a transceiver that are coupled to the memory. The transceiver is configured to communicate with another communications device. The memory is configured to store implementation code of the signal transmission method described in the first aspect. The processor is configured to execute program code stored in the memory, that is, perform the method provided in the first aspect or the method provided in any one of the possible implementations of the first aspect.

According to an eighth aspect, this application provides a communications apparatus, configured to perform the signal transmission method described in the first aspect. The communications apparatus may include a memory, and a processor and a transceiver that are coupled to the memory. The transceiver is configured to communicate with another communications device. The memory is configured to store implementation code of the signal transmission method described in the first aspect. The processor is configured to execute program code stored in the memory, that is, perform the method provided in the first aspect or the method provided in any one of the possible implementations of the first aspect.

According to a ninth aspect, this application provides a chip. The chip may include a processor, and one or more interfaces coupled to the processor. The processor may be configured to: invoke, from a memory, an implementation program of the signal transmission method provided in the first aspect or the signal transmission method provided in any one of the possible implementations of the first aspect, and execute an instruction included in the program. The interface may be configured to output a processing result of the processor.

According to a tenth aspect, this application provides a chip. The chip may include a processor, and one or more interfaces coupled to the processor. The processor may be configured to: invoke, from a memory, an implementation program of the signal transmission method provided in the first aspect or the signal transmission method provided in any one of the possible implementations of the first aspect, and execute an instruction included in the program. The interface may be configured to output a processing result of the processor.

According to an eleventh aspect, this application provides a network device. The network device may include a plurality of function modules, configured to correspondingly perform the method provided in the third aspect or the method provided in any one of the possible implementations of the third aspect.

According to a twelfth aspect, this application provides a terminal device. The terminal device may include a plurality of function modules, configured to correspondingly perform the method provided in the fourth aspect or the method provided in any one of the possible implementations of the fourth aspect.

According to a thirteenth aspect, this application provides a network device, configured to perform the signal transmission method described in the third aspect. The network device may include a memory, and a processor and a transceiver that are coupled to the memory. The transceiver is configured to communicate with another communications device (for example, a terminal device). The memory is configured to store implementation code of the signal transmission method described in the third aspect. The processor is configured to execute program code stored in the memory, that is, perform the method provided in the third aspect or the method provided in any one of the possible implementations of the third aspect.

According to a fourteenth aspect, this application provides a terminal device, configured to perform the signal transmission method described in the fourth aspect. The terminal device may include a memory, and a processor and a transceiver that are coupled to the memory. The transceiver is configured to communicate with another communications device (for example, a terminal). The memory is configured to store implementation code of the signal transmission method described in the fourth aspect. The processor is configured to execute program code stored in the memory, that is, perform the method provided in the fourth aspect or the method provided in any one of the possible implementations of the fourth aspect.

According to a fifteenth aspect, this application provides a chip. The chip may include a processor, and one or more interfaces coupled to the processor. The processor may be configured to: invoke, from a memory, an implementation program of the signal transmission method provided in the third aspect or the signal transmission method provided in any one of the possible implementations of the third aspect, and execute an instruction included in the program. The interface may be configured to output a processing result of the processor.

According to a sixteenth aspect, this application provides a chip. The chip may include a processor, and one or more interfaces coupled to the processor. The processor may be configured to: invoke, from a memory, an implementation program of the signal transmission method provided in the fourth aspect or the signal transmission method provided in any one of the possible implementations of the fourth aspect, and execute an instruction included in the program. The interface may be configured to output a processing result of the processor.

According to a seventeenth aspect, this application provides a wireless communications system, including a first device and a second device. The first device may be configured to perform the signal transmission method provided in the first aspect or the signal transmission method provided in any one of the possible implementations of the first aspect. The second device may be configured to perform the signal transmission method provided in the second aspect or the signal transmission method provided in any one of the possible implementations of the second aspect.

Specifically, the first device may be the communications apparatus described in the fifth aspect or the seventh aspect, and the second device may be the communications apparatus described in the sixth aspect or the eighth aspect.

According to an eighteenth aspect, this application provides a wireless communications system, including a terminal device and a network device. The terminal device may be configured to perform the signal transmission method provided in the third aspect or the signal transmission method provided in any one of the possible implementations of the third aspect. The network device may be configured to perform the signal transmission method provided in the fourth aspect or the signal transmission method provided in any one of the possible implementations of the fourth aspect.

Specifically, the network device may be the network device described in the eleventh aspect or the thirteenth aspect, and the terminal device may be the terminal device described in the twelfth aspect or the fourteenth aspect.

According to a nineteenth aspect, a computer readable storage medium is provided. The readable storage medium stores program code for implementing the signal transmission method provided in the first aspect or the signal transmission method provided in any one of the possible implementations of the first aspect. The program code includes an executable instruction for performing the signal transmission method provided in the first aspect or the signal transmission method provided in any one of the possible implementations of the first aspect.

According to a twentieth aspect, a computer readable storage medium is provided. The readable storage medium stores program code for implementing the signal transmission method provided in the second aspect or the signal transmission method provided in any one of the possible implementations of the second aspect. The program code includes an executable instruction for performing the signal transmission method provided in the second aspect or the signal transmission method provided in any one of the possible implementations of the second aspect.

According to a twenty-first aspect, a computer readable storage medium is provided. The readable storage medium stores program code for implementing the signal transmission method provided in the third aspect or the signal transmission method provided in any one of the possible implementations of the third aspect. The program code includes an executable instruction for performing the signal transmission method provided in the third aspect or the signal transmission method provided in any one of the possible implementations of the third aspect.

According to a twenty-second aspect, a computer readable storage medium is provided. The readable storage medium stores program code for implementing the signal transmission method provided in the fourth aspect or the signal transmission method provided in any one of the possible implementations of the fourth aspect. The program code includes an executable instruction for performing the signal transmission method provided in the fourth aspect or the signal transmission method provided in any one of the possible implementations of the fourth aspect.

## BRIEF DESCRIPTION OF DRAWINGS

To describe the technical solutions in the embodiments of the present invention or in the background more clearly, the following briefly describes the accompanying drawings required for describing the embodiments of the present invention or the background.

FIG. 1 is a schematic diagram of a time-domain PT-RS mapping rule in the prior art;
FIG. 2 is a schematic diagram of mapping a PDSCH to a symbol preceding a DMRS;
FIG. 3 is a schematic architectural diagram of a wireless communications system according to this application;
FIG. 4 is a schematic diagram of a hardware architecture of a terminal according to an embodiment of this application;
FIG. 5 is a schematic diagram of a hardware architecture of a network device according to an embodiment of this application;
Fig.6 is a schematic diagram of resource mapping of a DMRS according to this application;
FIG. 7 is a schematic diagram of a time-frequency resource according to this application;
FIG. 8 is a schematic flowchart of a signal transmission method according to this application;
FIG. 9A to FIG. 9L are schematic diagrams of time-domain PT-RS mapping rules according to an embodiment of this application;
FIG. 10A to FIG. 10L are schematic diagrams of time-domain PT-RS mapping rules according to another embodiment of this application;
FIG. 11A to FIG. 11C are schematic diagrams of time-domain PT-RS mapping rules according to still another embodiment of this application;
FIG. 12A to FIG. 12D are schematic diagrams of time-domain PT-RS mapping rules according to still another embodiment of this application;
FIG. 13 is a schematic diagram of a non-coherent joint transmission scenario according to this application;
FIG. 14 is a schematic flowchart of another signal transmission method according to this application;
FIG. 15 is a schematic flowchart of still another signal transmission method according to this application;
FIG. 16 is a functional block diagram of a wireless communications system and related devices according to this application;
FIG. 17 is a functional block diagram of another wireless communications system and related devices according to this application;
FIG. 18 is a schematic structural diagram of an apparatus according to this application; and
FIG. 19 is a schematic structural diagram of an apparatus according to this application.

## DESCRIPTION OF EMBODIMENTS

Terms used in an implementation part of this application are merely used to interpret specific embodiments of this application, but are not intended to limit this application.

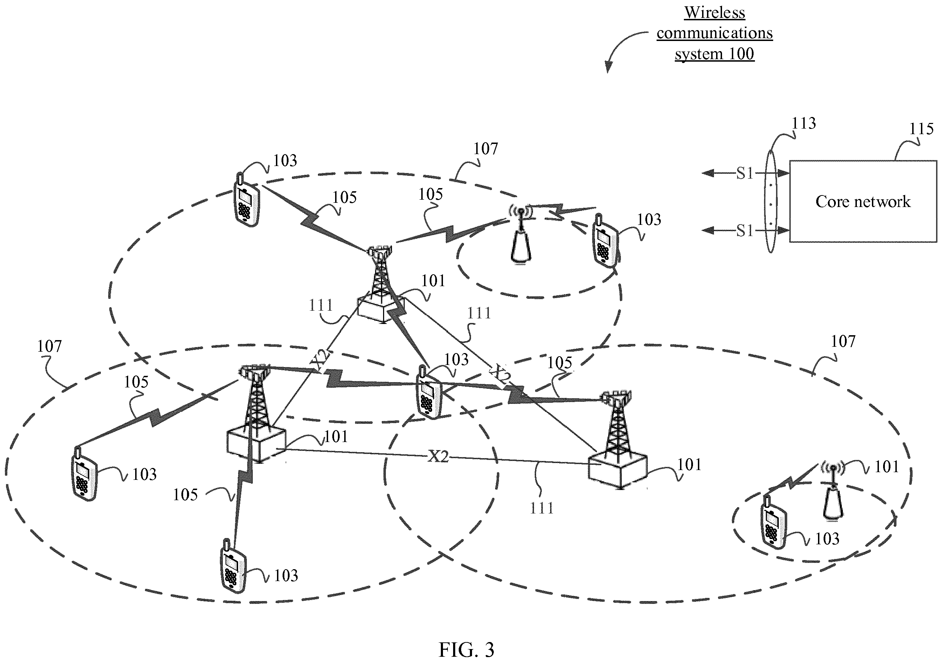

FIG. 3 shows a wireless communications system in this application. The wireless communications system may work at a high frequency band, and is not limited to a long term evolution (Long Term Evolution, LTE) system, but may be alternatively a future evolved 5th generation (the 5th Generation, 5G) mobile communications system, a new radio (NR) system, a machine-to-machine (Machine-to-Machine, M2M) communications system, or the like. As shown in FIG. 3, the wireless communications system 100 may include: one or more network devices 101, one or more terminals 103, and a core network 115.

The network device 101 may be a base station. The base station may be configured to communicate with one or more terminals, or may be configured to communicate with one or more base stations provided with some terminal functions (for example, communication between a macro base station and a micro base station such as an access point). The base station may be a base transceiver station (Base Transceiver Station, BTS) in a time division synchronous code division multiple access (Time Division Synchronous Code Division Multiple Access, TD-SCDMA) system; or may be an evolved NodeB (Evolved Node B, eNB) in an LTE system, or a base station in a 5G system or a new radio (NR) system. Alternatively, the base station may be an access point (Access Point, AP), a transmission and reception point (TRP), a central unit (Central Unit, CU), or another network entity, and may include some or all of functions of these network entities.

The terminal 103 may be distributed in the entire wireless communications system 100, and may be stationary or moving. In some embodiments of this application, the terminal 103 may be a mobile device, a mobile station (mobile station), a mobile unit (mobile unit), an M2M terminal, a radio unit, a remote unit, a user agent, a mobile client, or the like.

Specifically, the network device 101 may be configured to communicate with the terminal 103 through one or more antennas under control of a network device controller (not shown). In some embodiments, the network device controller may be a part of the core network 115, or may be integrated in the network device 101. Specifically, the network device 101 may be configured to transmit control information or user data to the core network 115 through a backhaul (backhaul) interface 113 (for example, an S1 interface). Specifically, network devices 101 may also directly or indirectly communicate with each other through a backhaul (backhaul) interface 111 (for example, an X2 interface).

The wireless communications system shown in FIG. 3 is merely intended to describe the technical solutions in this application more clearly, but not to limit this application. A person of ordinary skill in the art may know that with evolution of network architectures and emergence of new service scenarios, the technical solutions provided in the embodiments of the present invention are also applicable to similar technical problems. FIG. 3 shows a wireless communications system in this application. The wireless communications system may work at a high frequency band, and is not limited to a long term evolution (Long Term Evolution, LTE) system, but may be alternatively a future evolved 5th generation (the 5th Generation, 5G) mobile communications system, a new radio (NR) system, a machine-to-machine (Machine to Machine, M2M) communications system, or the like. As shown in FIG. 3, the wireless communications system 10 may include: one or more network devices 101, one or more terminals 103, and a core network 115.

The network device 101 may be a base station. The base station may be configured to communicate with one or more terminals, or may be configured to communicate with one or more base stations provided with some terminal functions (for example, communication between a macro base station and a micro base station such as an access point). The base station may be a base transceiver station (Base Transceiver Station, BTS) in a time division synchronous code division multiple access (Time Division Synchronous Code Division Multiple Access, TD-SCDMA) system; or may be an evolved NodeB (Evolutional Node B, eNB) in an LTE system, or a base station in a 5G system or a new radio (NR) system. Alternatively, the base station may be an access point (Access Point, AP), a transmission node (Trans TRP), a central unit (Central Unit, CU), or another network entity, and may include some or all of functions of these network entities.

The terminal 103 may be distributed in the entire wireless communications system 100, and may be stationary or moving. In some embodiments of this application, the terminal 103 may be a mobile device, a mobile station (mobile station), a mobile unit (mobile unit), an M2M terminal, a radio unit, a remote unit, a user agent, a mobile client, or the like.

Specifically, the network device 101 may be configured to communicate with the terminal 103 through one or more antennas under control of a network device controller (not shown). In some embodiments, the network device controller may be a part of the core network 115, or may be integrated in the network device 101. Specifically, the network device 101 may be configured to transmit control information or user data to the core network 115 through a backhaul (backhaul) interface 113 (for example, an S1 interface). Specifically, network devices 101 may also directly or indirectly communicate with each other through a backhaul (backhaul) interface 111 (for example, an X2 interface).

The wireless communications system shown in FIG. 3 is merely intended to describe the technical solutions in this application more clearly, but not to limit this application. A person of ordinary skill in the art may know that with evolution of network architectures

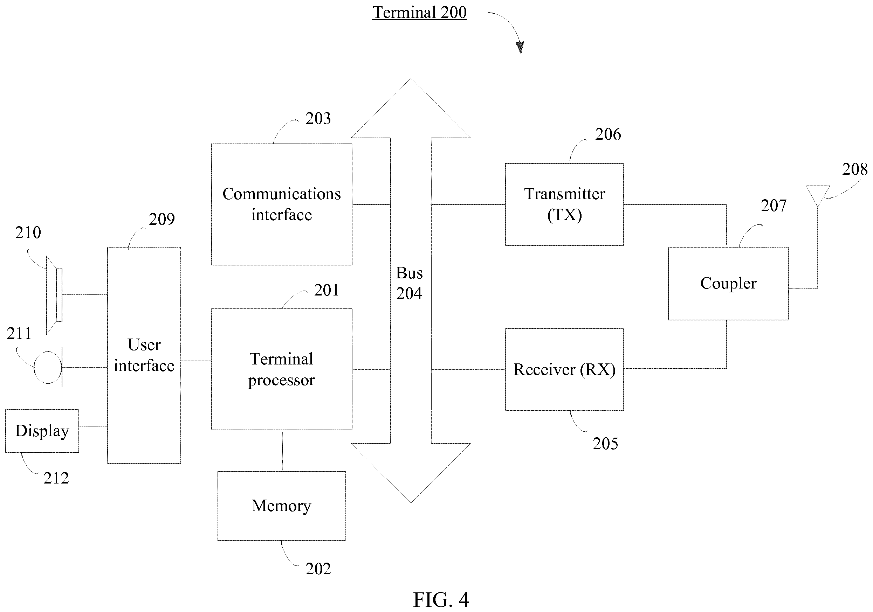

FIG. 4 shows a terminal 200 provided in some embodiments of this application. As shown in FIG. 4, the terminal 200 may include: one or more terminal processors 201, a memory 202, a communications interface 203, a receiver 205, a transmitter 206, a coupler 207, an antenna 208, a user interface 209, and input/output modules (including an audio input/output module 210, a key input module 211, a display 212, and the like). These components may be connected by using a bus 204 or in other manners. FIG. 4 shows an example in which these components are connected by using a bus.

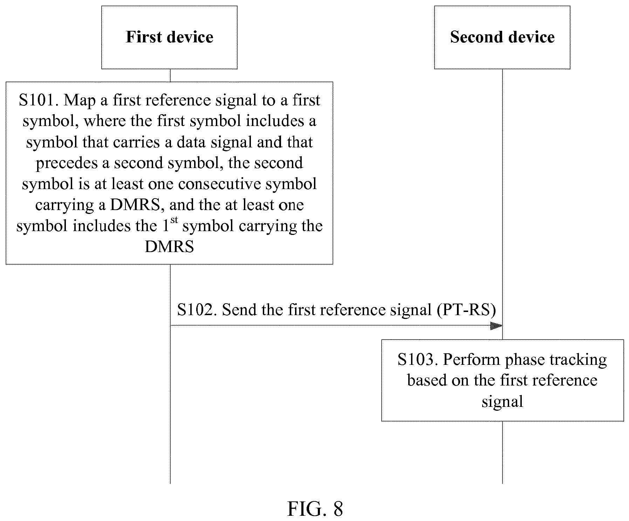

The communications interface 203 may be used by the terminal 200 to communicate with another communications device, for example, a network device. Specifically, the network device may be a network device 300 shown in FIG. 8. Specifically, the communications interface 203 may be a long term evolution (LTE) (4G) communications interface, or may be a 5G communications interface or a future new radio communications interface. In addition to a wireless communications interface, the terminal 200 may be further configured with a wired communications interface 203, for example, a local access network (Local Access Network, LAN) interface.

The transmitter 206 may be configured to perform transmission processing, for example, signal modulation, on a signal output by the terminal processor 201. The receiver 205 may be configured to perform reception processing, for example, signal demodulation, on a mobile communication signal received by the antenna 208. In some embodiments of this application, the transmitter 206 and the receiver 205 may be regarded as a wireless modem. In the terminal 200, there may be one or more transmitters 206 and receivers 205. The antenna 208 may be configured to convert electromagnetic energy in a transmission line into an electromagnetic wave in free space, or convert an electromagnetic wave in free space into electromagnetic energy in a transmission line. The coupler 207 is configured to divide a mobile communication signal received by the antenna 208 into a plurality of signals, and distribute the signals to a plurality of receivers 205.

In addition to the transmitter 206 and the receiver 205 shown in FIG. 4, the terminal 200 may further include other communications components, for example, a GPS module, a Bluetooth (Bluetooth) module, and a wireless fidelity (Wireless Fidelity, Wi-Fi) module. In addition to the foregoing wireless communication signals, the terminal 200 may further support other wireless communication signals, for example, a satellite signal and a short-wave signal. In addition to wireless communications, the terminal 200 may be further configured with a wired network interface (for example, a LAN interface) to support wired communications.

The input/output modules may be configured to implement interaction between the terminal 200 and a user or an external environment, and may mainly include the audio input/output module 210, the key input module 211, the display 212, and the like. Specifically, the input/output modules may further include a camera, a touchscreen, a sensor, and the like. All the input/output modules communicate with the terminal processor 201 through the user interface 209.

The memory 202 is coupled to the terminal processor 201, and is configured to store various software programs and/or a plurality of instructions. Specifically, the memory 202 may include a high-speed random access memory, and may also include a nonvolatile memory, for example, one or more magnetic disk storage devices, a flash memory device, or another nonvolatile solid-state storage device. The memory 202 may store an operating system (hereinafter referred to as system), for example, an embedded operating system such as Android, iOS, Windows, or Linux. The memory 202 may further store a network communication program. The network communication program may be used to communicate with one or more auxiliary devices, one or more terminal devices, and one or more network devices. The memory 202 may further store a user interface program. The user interface program may vividly display content of an application program by using a graphical operation interface, and receive control operations of a user for the application program by using input controls such as menus, dialog boxes, and keys.

In some embodiments of this application, the memory 202 may be configured to store an implementation program, on a side of the terminal 200, of a signal transmission method provided in one or more embodiments of this application. For implementations of a resource mapping method provided in one or more embodiments of this application, refer to subsequent embodiments.

The terminal processor 201 may be configured to read and execute a computer readable instruction. Specifically, the terminal processor 201 may be configured to invoke a program stored in the memory 212, for example, the implementation program, on the side of the terminal 200, of the resource mapping method provided in the one or more embodiments of this application; and execute an instruction included in the program.

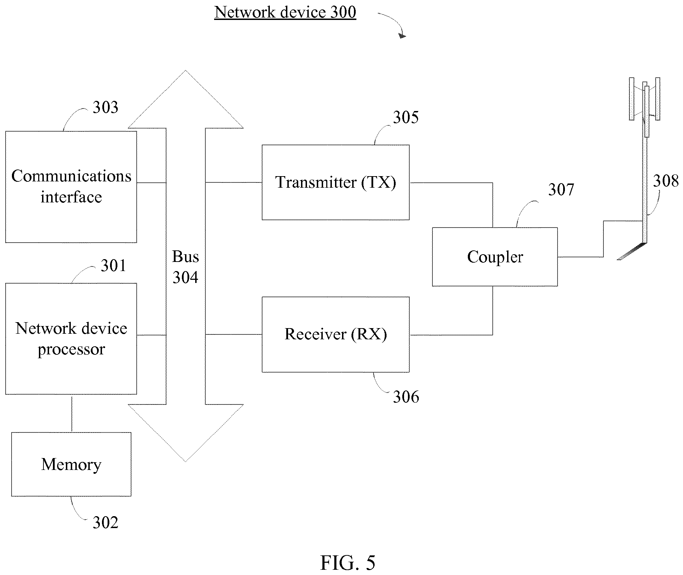

It can be understood that the terminal 200 may be the terminal 103 in the wireless communications system 100 shown in FIG. 5, and may be implemented as a mobile device, a mobile station (mobile station), a mobile unit (mobile unit), a radio unit, a remote unit, a user agent, a mobile client, or the like.

It should be noted that the terminal 200 shown in FIG. 4 is merely an implementation of this embodiment of this application. In actual applications, the terminal 200 may alternatively include more or fewer components. This is not limited herein.

FIG. 5 shows a network device 300 provided in some embodiments of this application. As shown in FIG. 5, the network device 300 may include: one or more network device processors 301, a memory 302, a communications interface 303, a transmitter 305, a receiver 306, a coupler 307, and an antenna 308. These components may be connected by using a bus 304 or in other manners. FIG. 5 shows an example in which these components are connected by using a bus.

The communications interface 303 may be used by the network device 300 to communicate with another communications device, for example, a terminal device or another network device. Specifically, the terminal device may be the terminal 200 shown in FIG. 5. Specifically, the communications interface 303 may be a long term evolution (LTE) (4G) communications interface, or may be a 5G communications interface or a future new radio communications interface. In addition to a wireless communications interface, the network device 300 may be further configured with a wired communications interface 303 to support wired communications. For example, a backhaul link between one network device 300 and another network device 300 may be a wireless communications connection.

The transmitter 305 may be configured to perform transmission processing, for example, signal modulation, on a signal output by the network device processor 301. The receiver 306 may be configured to perform reception processing, for example, signal demodulation, on a mobile communication signal received by the antenna 308. In some embodiments of this application, the transmitter 305 and the receiver 306 may be regarded as a wireless modem. In the network device 300, there may be one or more transmitters 305 and receivers 306. The antenna 308 may be configured to convert electromagnetic energy in a transmission line into an electromagnetic wave in free space, or convert an electromagnetic wave in free space into electromagnetic energy in a transmission line. The coupler 307 may be configured to divide a mobile communication signal into a plurality of signals, and distribute the signals to a plurality of receivers 306.

The memory 302 is coupled to the network device processor 301, and is configured to store various software programs and/or a plurality of instructions. Specifically, the memory 302 may include a high-speed random access memory, and may also include a nonvolatile memory, for example, one or more magnetic disk storage devices, a flash memory device, or another nonvolatile solid-state storage device. The memory 302 may store an operating system (hereinafter referred to as system), for example, an embedded operating system such as uCOS, VxWorks, or RTLinux. The memory 302 may further store a network communication program. The network communication program may be used to communicate with one or more auxiliary devices, one or more terminal devices, and one or more network devices.

The network device processor 301 may be configured to manage radio channels, implement calls, establish and remove communication links, provide cell handover control for users within a local control area, and the like. Specifically, the network device processor 301 may include: an administration module/communication module (Administration Module/Communication Module, AM/CM) (a center used for speech channel switching and information exchange), a basic module (Basic Module, BM) (configured to perform call processing, signaling processing, radio resource management, radio link management, and circuit maintenance functions), a transcoder and submultiplexer (Transcoder and SubMultiplexer, TCSM) (configured to perform multiplexing, demultiplexing, and transcoding functions), and the like.

In this embodiment of this application, the network device processor 301 may be configured to read and execute a computer readable instruction. Specifically, the network device processor 301 may be configured to invoke a program stored in the memory 302, for example, an implementation program, on a side of the network device 300, of a resource mapping method provided in one or more embodiments of this application; and execute an instruction included in the program.

It can be understood that the network device 300 may be the base station 101 in the wireless communications system 100 shown in FIG. 5, and may be implemented as a base transceiver station, a wireless transceiver, a basic service set (BSS), an extended service set (ESS), a NodeB, an eNodeB, an access point, a TRP, or the like.

It should be noted that the network device 300 shown in FIG. 5 is merely an implementation of this embodiment of this application. In actual applications, the network device 300 may alternatively include more or fewer components. This is not limited herein.

Based on the embodiments corresponding to the wireless communications system 100, the terminal 200, and the network device 300, this application provides a resource mapping method.

A main principle of this application may include the following: A phase tracking reference signal (PT-RS) is also mapped to a symbol that carries a data signal and that precedes a symbol carrying a front-loaded DMRS (front-loaded DMRS). In this way, it can be ensured that a PT-RS is also mapped to a symbol to which a data channel is mapped and that precedes a symbol carrying a DMRS, thereby ensuring phase noise estimation performance.

In this application, the symbol carrying the front-loaded DMRS may be referred to as a second symbol. The second symbol is one or more consecutive symbols carrying a DMRS, and the one or more symbols include the 1st symbol carrying the DMRS.

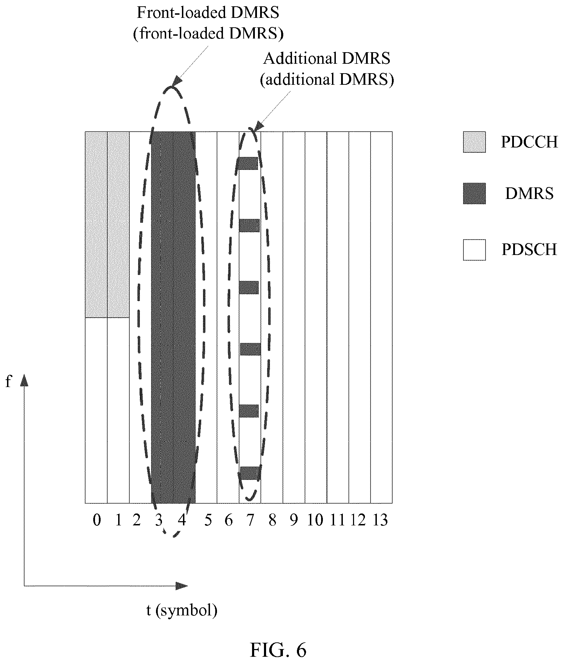

As shown in FIG. 6, DMRSs may include a front-loaded DMRS (front-loaded DMRS) and an additional DMRS (additional-DMRS). The front-loaded DMRS is a DMRS that continuously occupies one or more DMRS symbols with a smallest index among DMRS symbols. The additional DMRS is a DMRS other than the front-loaded DMRS. Herein, a DMRS symbol is a symbol carrying a DMRS.

For example, in an example shown in FIG. 6, DMRS symbols are a symbol 3, a symbol 4, and a symbol 7. Symbols carrying the front-loaded DMRS are two consecutive symbols: the symbol 3 and the symbol 4. The symbol 3 is the 1st symbol carrying the DMRS, namely, the 1st DMRS symbol. This example is merely used to explain this application, and should not be construed as a limitation.

In this application, a mapping priority of a phase tracking reference signal (PT-RS) may be lower than that of at least one of the following: a physical downlink control channel (PDCCH), a physical uplink control channel (physical uplink control channel, PUCCH), a synchronization signal block (synchronization signal block, SS block), a channel state information reference signal (channel state information reference signal, CSI-RS), a sounding reference signal (Sounding Reference Signal, SRS), a demodulation reference signal (DMRS), and the like. In other words, the PT-RS is not mapped to a resource to which any one of the foregoing signals needs to be mapped. In this way, mapping priorities of the PT-RS and other reference signals and physical channels are determined, and therefore when a resource conflict occurs between the PT-RS and the other reference signals and physical channels, the conflict can be avoided in a manner of skipping mapping the PT-RS.

In this application, PT-RS mapping may include the following two parts:

1. PT-RS mapping on a symbol that carries the data signal and that precedes the second symbol (the symbol carrying the front-loaded DMRS).
2. PT-RS mapping on a symbol that carries the data signal and that follows the second symbol (the symbol carrying the front-loaded DMRS).

Herein, a symbol preceding the second symbol is a symbol whose index is smaller than an index of the second symbol, and a symbol following the second symbol is a symbol whose index is larger than the index of the second symbol. For example, in the example shown in FIG. 6, the second symbol includes the symbol 3 and the symbol 4, symbols preceding the second symbol are symbols 0 to 2, and symbols following the second symbol are symbols 5 to 13. This example is merely used to explain this application, and should not be construed as a limitation.

(1) Rule of time-domain PT-RS mapping on a symbol preceding the second symbol

According to a first mapping rule, the PT-RS is mapped to the 1st symbol that carries the data signal and that precedes the second symbol. In other words, PT-RS mapping starts from the 1st symbol of a data channel (PUSCH/PDSCH). In this way, it can be ensured that the PT-RS is also mapped to a symbol to which a data channel is mapped and that precedes the second symbol, thereby ensuring phase noise estimation performance. Embodiment 1 and Embodiment 2 subsequently describe this mapping manner in detail. Details are not described herein.

According to a second mapping rule, an index of a symbol that is used to carry the PT-RS and that precedes the second symbol is related to a first difference. The first difference ($H_2$) is a difference between an index ($I_0$) of the 1st symbol carrying the DMRS and an index of the 1st symbol carrying the data signal. In other words, the index of the symbol that is used to carry the PT-RS and that precedes the second symbol is related to the difference between the index of the 1st symbol of the data channel and the index of the 1st symbol that carries the DMRS and that precedes the second symbol. Embodiment 3 subsequently describes this mapping manner in detail. Details are not described herein.

In addition to the foregoing two manners, the PT-RS may be further mapped, in another manner, to a symbol that carries the data signal and that precedes the second symbol. This is not limited in this application.

(2) Rule of time-domain PT-RS mapping on a symbol following the second symbol

According to a first mapping rule, an index of a start symbol to which the PT-RS is mapped and that follows the second symbol may be determined based on a time-domain density of the PT-RS. In addition, in ascending order of index values of symbols, the PT-RS is mapped to a symbol with a smallest index among every L symbols. L is a reciprocal of the time-domain density of the PT-RS.

For example, in an example shown in FIG. 1, if the time-domain density of the PT-RS is "1", the start symbol to which the PT-RS is mapped is the 1st symbol following the second symbol, namely, the symbol 3. If the time-domain density of the PT-RS is "1/2", the start symbol to which the PT-RS is mapped is the 2nd symbol following the second symbol, namely, the symbol 4. If the time-domain density of the PT-RS is "1/4", the start symbol to which the PT-RS is mapped is the 1st symbol following the second symbol, namely, the symbol 3. This example is merely used to explain this application, and should not be construed as a limitation. In actual applications, the time-domain density of the PT-RS and a mapping relationship between the time-domain density of the PT-RS and the index of the start symbol to which the PT-RS is mapped may be alternatively different. This is not limited in this application.

Specifically, the time-domain density of the PT-RS may be related to at least one of a CP type, a subcarrier spacing, and a modulation and coding scheme. Refer to subsequent content. Details are not described herein.

Specifically, the time-domain density of the PT-RS and the mapping relationship between the time-domain density of the PT-RS and the index of the start symbol to which the PT-RS is mapped may be predefined by a protocol, or may be configured by a network device by using higher layer signaling (for example, RRC signaling) or a PDCCH.

According to a second mapping rule, PT-RS mapping starts from the 1st symbol of a physical data shared channel (PDSCH/PUSCH), and the PT-RS is evenly mapped to time-domain symbols (including the second symbol, a symbol preceding the second symbol, and a symbol following the second symbol) in a time-domain unit. In this way, the PT-RS is also evenly mapped to the symbol following the second symbol. Optionally, a mapping priority of the PT-RS is lower than that of a PDCCH, a PUCCH, an SS block, a CSI-RS, an SRS, or the like. Embodiment 1 subsequently describes this mapping manner in detail. Details are not described herein.

According to a third mapping rule, the PT-RS is mapped to the last symbol that carries the data signal and that follows the second symbol, and is evenly mapped to a symbol following the second symbol in descending order of index values of symbols. Embodiment 2 subsequently describes this mapping manner in detail. Details are not described herein.

According to a fourth mapping rule, an index of a symbol that is used to carry the PT-RS and that follows the second symbol is related to a quantity of symbols following the second symbol. Embodiment 3 subsequently describes this mapping manner in detail. Details are not described herein.

The PT-RS can be evenly mapped to the symbol following the second symbol in all of the foregoing four mapping manners. In addition to the foregoing four manners, the PT-RS may be further mapped, in another manner, to the symbol following the second symbol. This is not limited in this application.

In this application, the PT-RS may have a same time-domain density or different time-domain densities in locations before and after the second symbol.

A resource described in this application is a time-frequency resource, includes a time-domain resource and a frequency-domain resource, and is usually represented by using a resource element (Resource Element, RE), a resource block (Resource Block, RB), a symbol (symbol), a subcarrier (subcarrier), or a transmission time interval (Transmission Time Interval, TTI). As shown in FIG. 7, an entire system resource includes grids obtained through division in frequency domain and time domain. One grid represents one RE, and one RE includes one subcarrier in frequency domain and one symbol in time domain. One RB includes T (T is a positive integer) consecutive symbols in time domain and M (M is a positive integer) consecutive subcarriers in frequency domain. For example, in LTE, T = 7, and M = 12.

In this application, symbol index values are corresponding to time sequences in ascending order. In other words, in time sequences, a symbol with a smaller symbol index value precedes a symbol with a larger symbol index value. A correspondence between a symbol index and a time sequence in specific implementation is not limited in this application. For example, symbol index values may be alternatively corresponding to time sequences in descending order.

It should be noted that the accompanying drawings provided in this application are merely intended to explain the embodiments of the present invention, and a size of a resource block, a quantity of symbols and subcarriers included in a resource block, and the like may be different in a future communication standard. The resource block described in this application is not limited to that shown in the accompanying drawings.

Based on the foregoing invention principle, FIG. 8 shows an overall process of a signal transmission method provided in this application. Details are described below.

S101. A first device maps a first reference signal (PT-RS) to a first symbol. With reference to the foregoing invention principle, it can be learned that the first symbol includes a symbol that carries a data signal and whose index is smaller than an index of a second symbol (a symbol carrying a front-loaded DMRS). The second symbol is one or more consecutive symbols carrying a DMRS. The one or more symbols include the 1st symbol carrying the DMRS.

Specifically, the first device may map the PT-RS in time domain based on a time-domain density of the PT-RS and according to a time-domain PT-RS mapping rule predefined by a protocol. For a time-domain PT-RS mapping rule on a symbol preceding the second symbol and a time-domain PT-RS mapping rule on a symbol following the second symbol, refer to the foregoing prevention principle and subsequent embodiments. Details are not described herein.

S 102. The first device sends the first reference signal (PT-RS) to a second device. Correspondingly, the second device receives the first reference signal (PT-RS) sent by the first device. Specifically, the second device may determine a symbol carrying the first reference signal (PT-RS) (namely, the first symbol) based on the time-domain density of the first reference signal (PT-RS) and according to a time-domain PT-RS mapping rule configured by using higher layer signaling or statically defined by a protocol, and receive the first reference signal (PT-RS) on these time-domain symbols.

S 103. The second device performs phase tracking based on the first reference signal (PT-RS).

Specifically, the time-domain PT-RS mapping rule may be configured by using the higher layer signaling or statically defined by the protocol. Symbols to which the first reference signal (PT-RS) is mapped may be determined based on the time-domain density of the first reference signal (PT-RS) (refer to subsequent Embodiment 1). Alternatively, symbols to which the first reference signal (PT-RS) is mapped may be determined based on the time-domain density of the first reference signal (PT-RS) and a location of the symbol carrying the front-loaded DMRS (namely, the second symbol) (refer to subsequent Embodiment 2 and Embodiment 3).

Specifically, the time-domain density of the PT-RS may be related to at least one of a CP type, a subcarrier spacing, and a modulation and coding scheme (MCS). To be specific, the first device does not need to additionally notify the second device of the time-domain density of the PT-RS, and the second device may determine the time-domain density of the PT-RS based on at least one of the CP type, the subcarrier spacing, and the modulation and coding scheme (MCS). Specifically, the symbol carrying the front-loaded DMRS may learn the location of the second symbol from a DMRS resource pattern (a protocol defines DMRS resource patterns used for different antenna ports). To be specific, the first device does not need to additionally notify the second device of the location of the second symbol, and the second device may determine the location of the second symbol based on a DMRS antenna port.

In this way, if the time-domain PT-RS mapping rule is configured by using the higher layer signaling or statically defined by the protocol, the first device does not need to additionally perform notification, and the second device may determine a symbol carrying the first reference signal (PT-RS) based on another parameter (for example, an MCS or a DMRS antenna port). This can significantly reduce signaling overheads.

It should be understood that in an uplink transmission process, the first device may be a terminal device, and the second device may be a network device. In a downlink transmission process, the first device may be a network device, and the second device may be a terminal device. Optionally, both the first device and the second device may be terminal devices or network devices.

According to the signal transmission method shown in FIG. 8, the first reference signal (PT-RS) is mapped to a symbol preceding the symbol carrying the front-loaded DMRS. Therefore, it can be ensured that the PT-RS is also mapped to a symbol to which a data channel is mapped and that precedes a symbol carrying a DMRS, thereby ensuring phase noise estimation performance.

The following describes how to map a PT-RS in time domain by using a plurality of embodiments.

### (1) Embodiment 1

In this embodiment, a PT-RS is mapped to the 1st symbol, in a time-domain unit, that carries a data signal (PDSCH/PUSCH). Optionally, in the time-domain unit, in ascending order of index values of symbols, the PT-RS is mapped to a symbol with a smallest index among every L symbols. In other words, starting from the 1st symbol carrying the data signal, the PT-RS may be evenly mapped within the time-domain unit. L is a reciprocal of a symbol-level time-domain density of the PT-RS. A value of L may be determined based on the symbol-level time-domain density of the PT-RS. For example, the value may be {1, 2, 4}.

In this application, the time-domain unit may be a slot, an aggregate slot, a subframe, a transmission time interval (Transmission Time Interval, TTI), or the like.

In this embodiment, an index *l* of a symbol carrying the PT-RS may be expressed by using the following formula:

$$l = l_{data}^{first} + L \times l'$$

where *l'* is a positive integer, $l' = 0, 1, 2, ...,$ $l_{data}^{first}$ represents an index of the 1st symbol carrying the data signal (PDSCH/PUSCH), and *L* represents the reciprocal of the symbol-level time-domain density of the PT-RS.

In this embodiment, a mapping priority of the PT-RS is lower than that of at least one of the following: a physical downlink control channel (PDCCH), a physical uplink control channel (PUCCH), a synchronization signal block (SS block), a channel state information reference signal (CSI-RS), a sounding reference signal (SRS), a demodulation reference signal (DMRS), and a physical broadcast channel (PBCH). Herein, that the mapping priority is lower than that of the PDCCH/PUCCH/SS block/CSI-RS/SRS/DMRS means: According to a time-domain or frequency-domain PT-RS mapping rule, if special signals such as the PDCCH/PUCCH/SS block/CSI-RS/SRS/DMRS also need to be mapped to a resource element (RE) to which the PT-RS needs to be mapped, the PT-RS is not mapped to the resource element. It can be understood that if these special signals are mapped to a symbol with a smallest index among every L symbols, the PT-RS is not mapped to an RE to which these special signals are mapped. It can be understood that according to the time-domain PT-RS mapping rule, if these special signals are mapped to all subcarriers on one or more symbols to which the PT-RS needs to be mapped, the PT-RS is not mapped to the one or more symbols.

Optionally, according to the time-domain or frequency-domain PT-RS mapping rule, if the special signals such as the PDCCH/PUCCH/SS block/CSI-RS/SRS/DMRS also need to be mapped to the resource element (RE) to which the PT-RS is mapped, a zero-power PT-RS (ZP-PT-RS) or a muted PT-RS (Muted-PT-RS) is sent on the resource element.

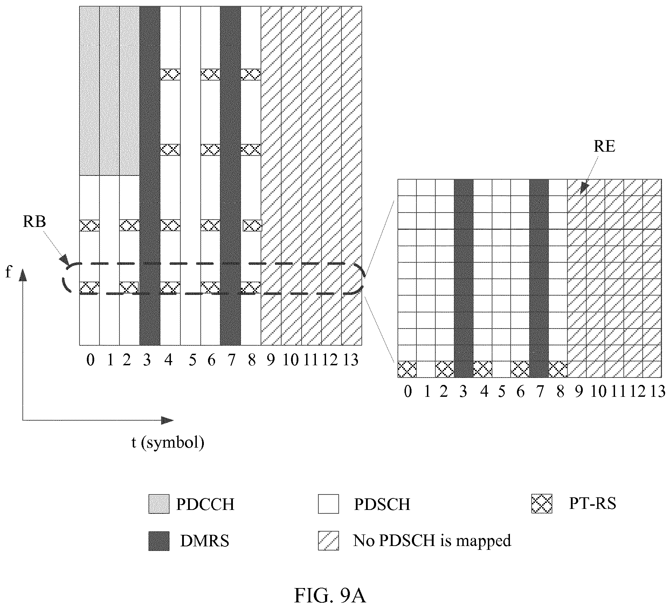

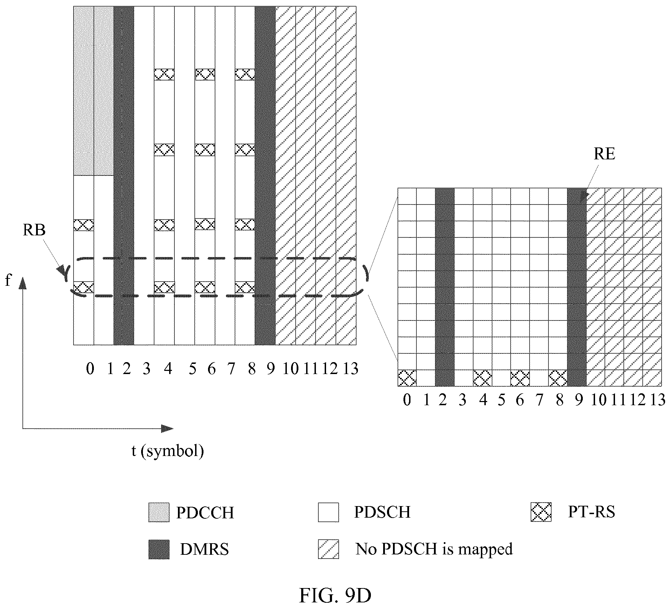

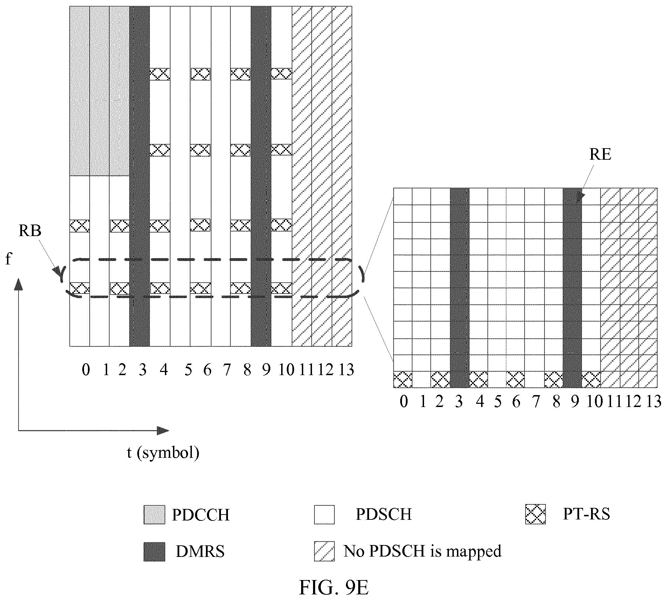

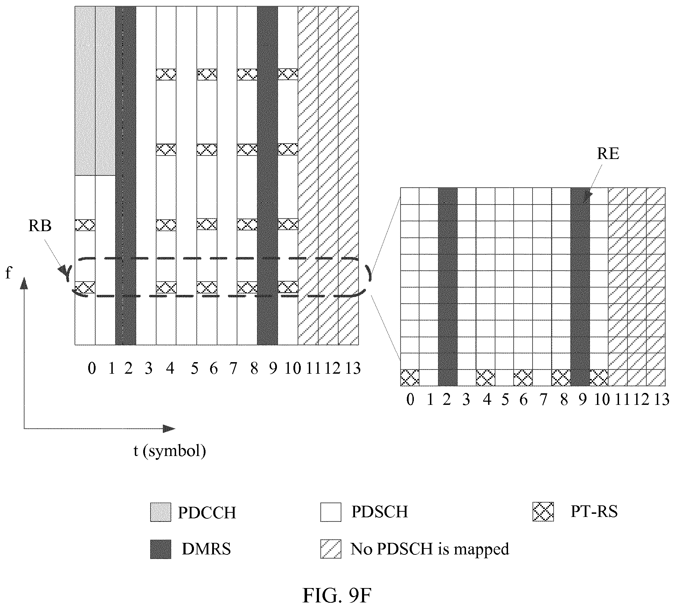

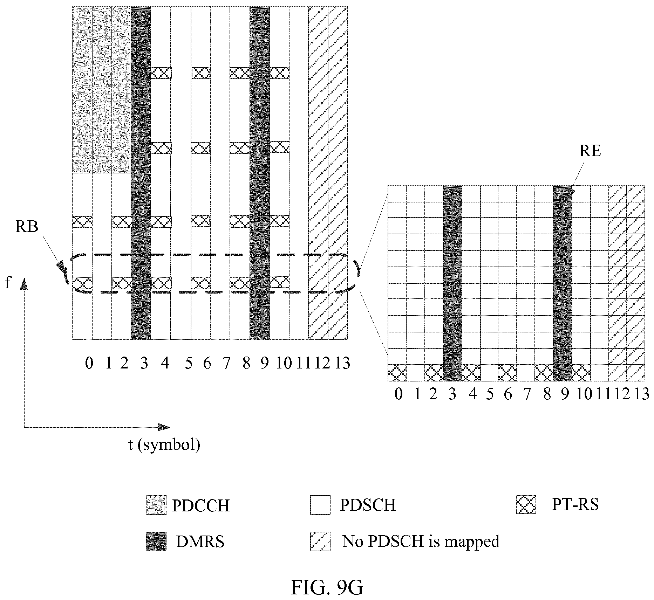

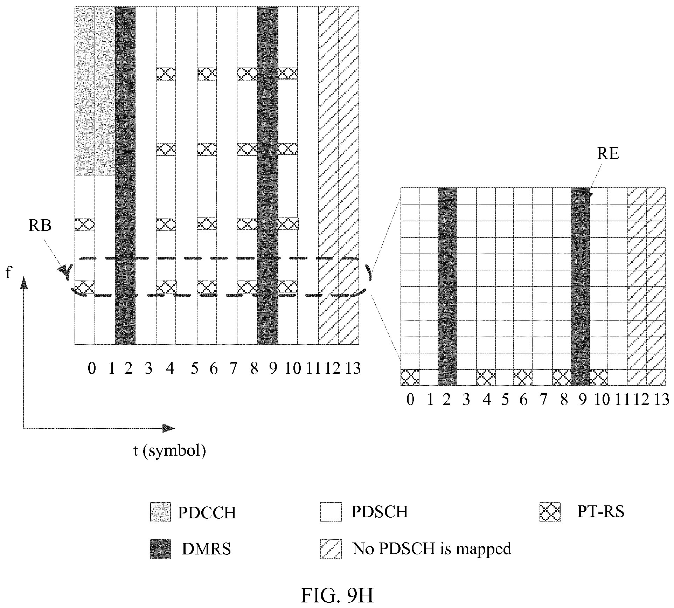

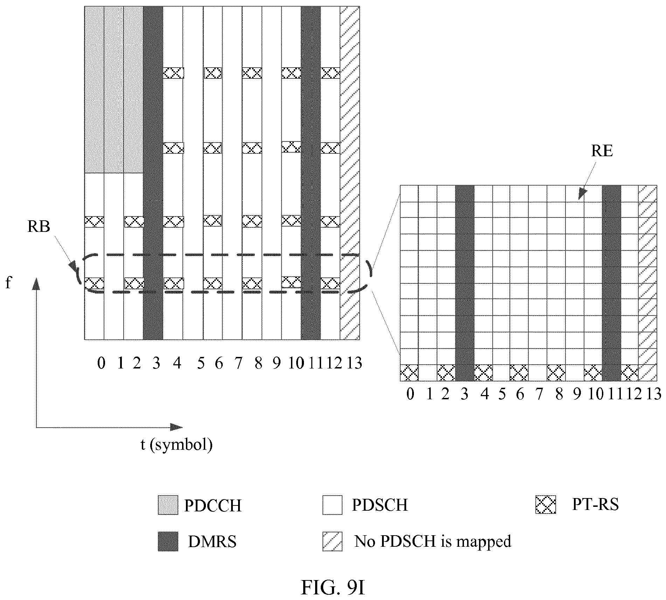

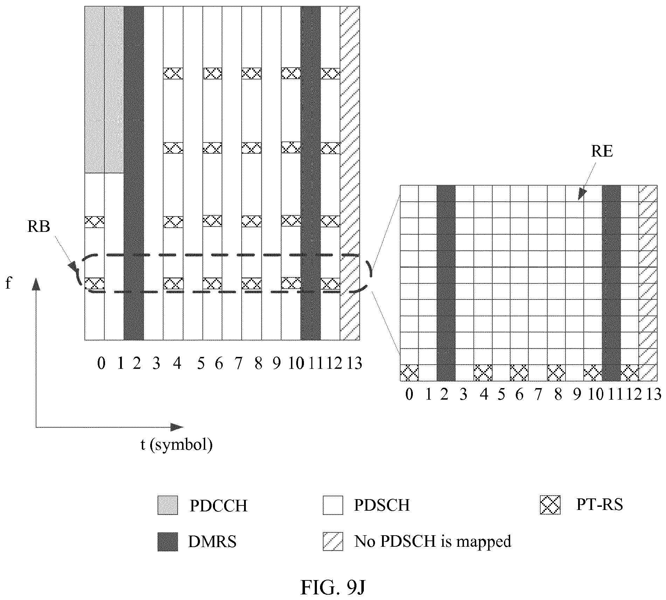

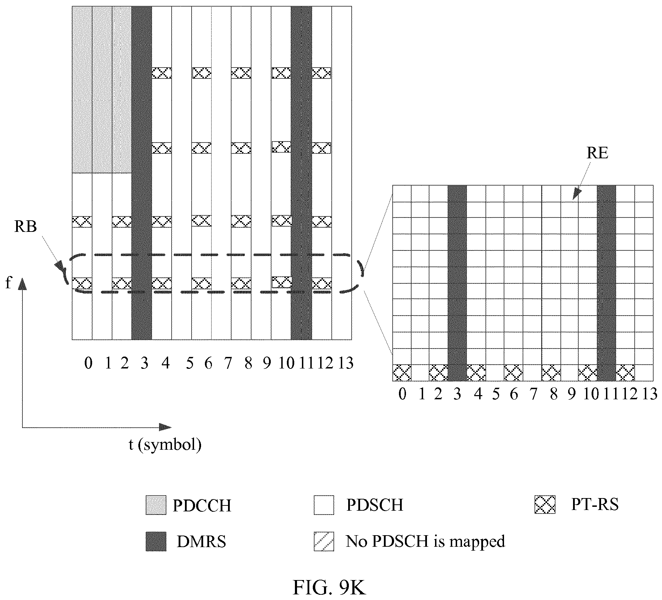

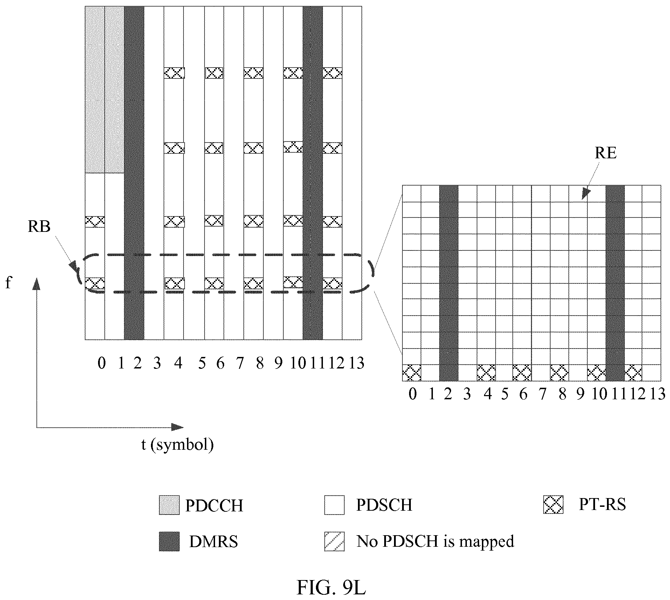

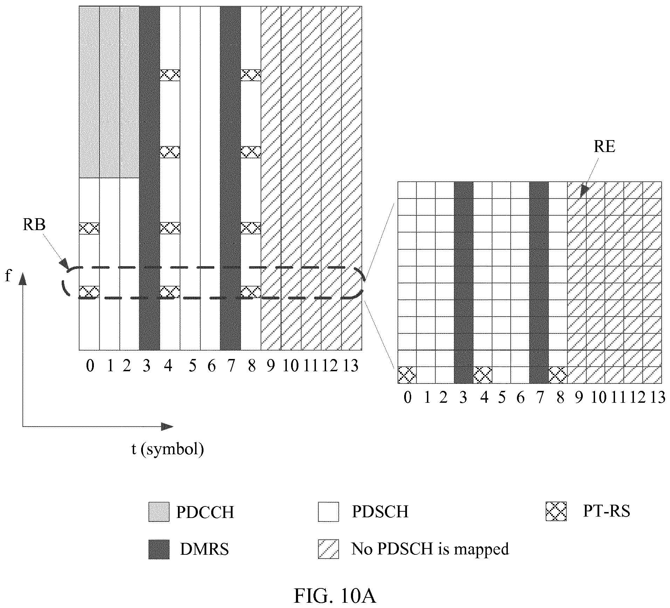

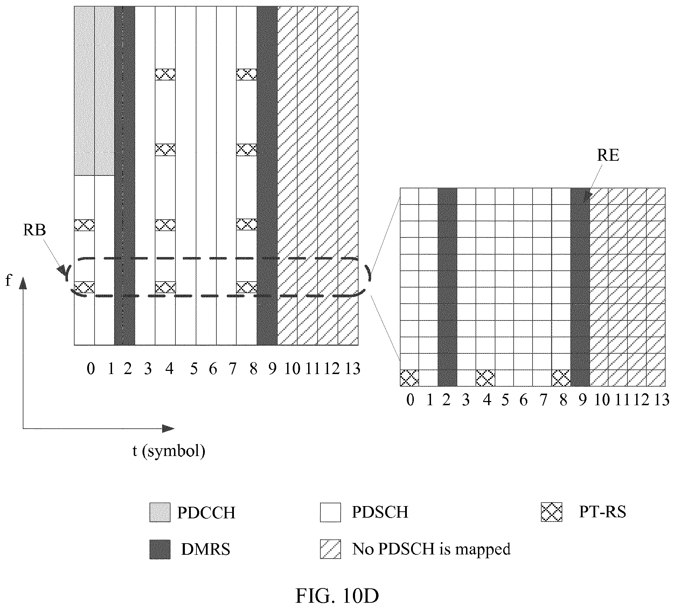

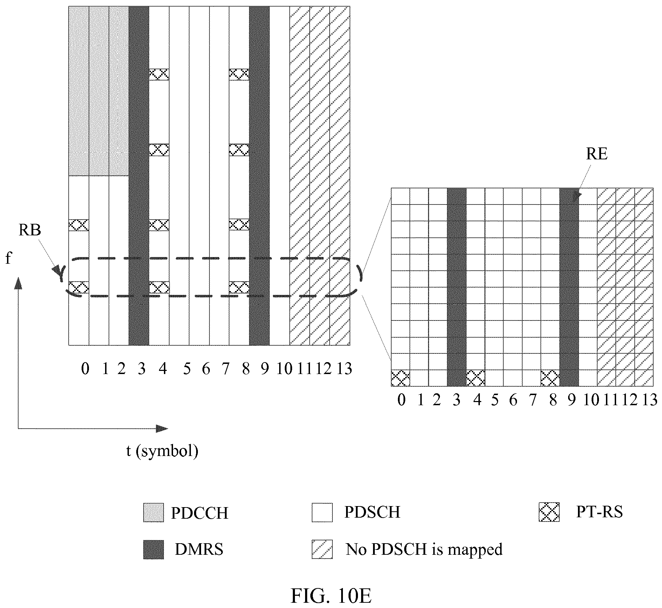

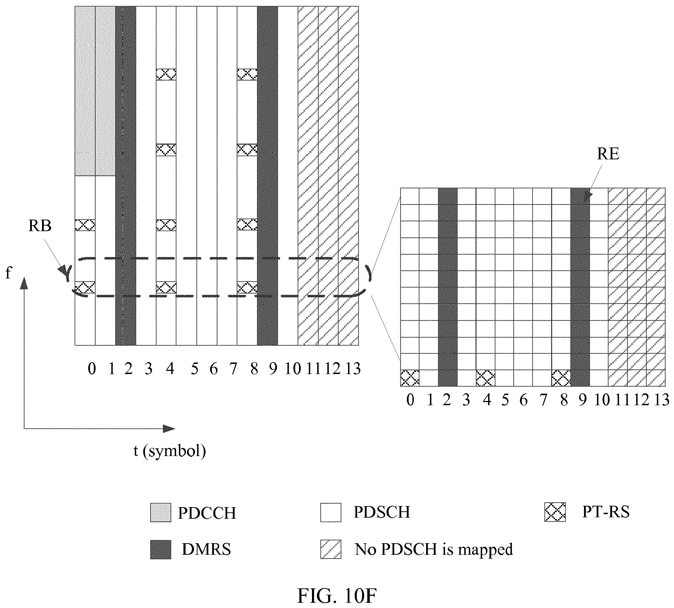

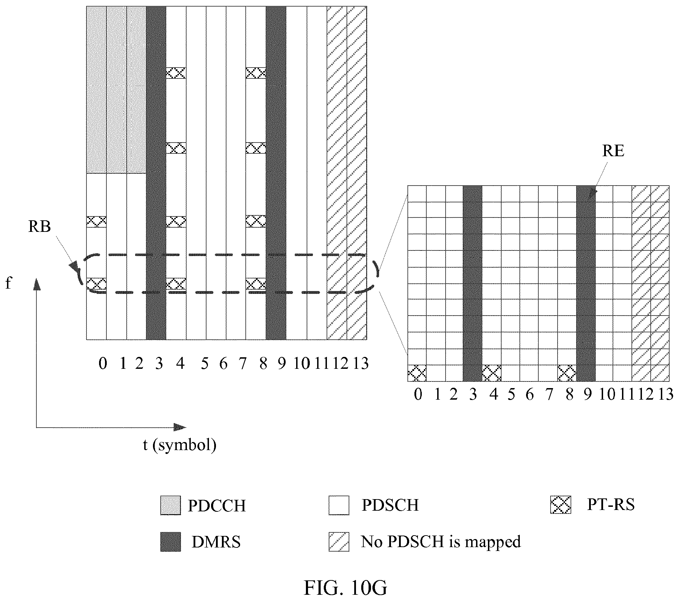

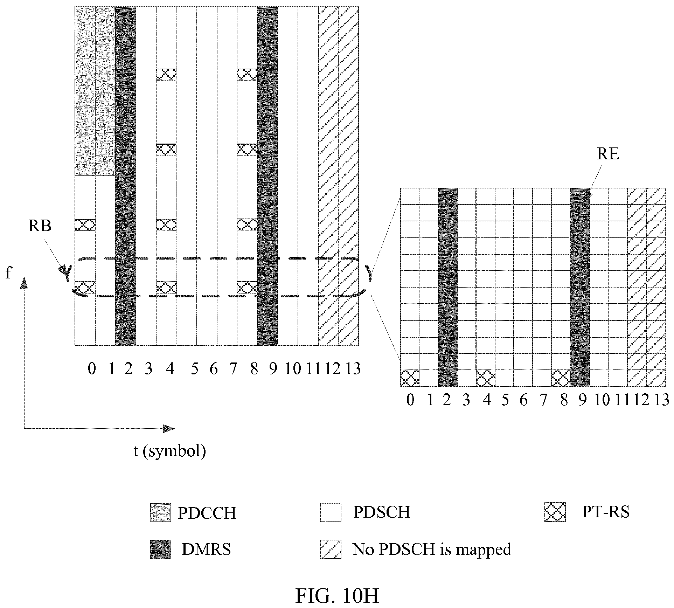

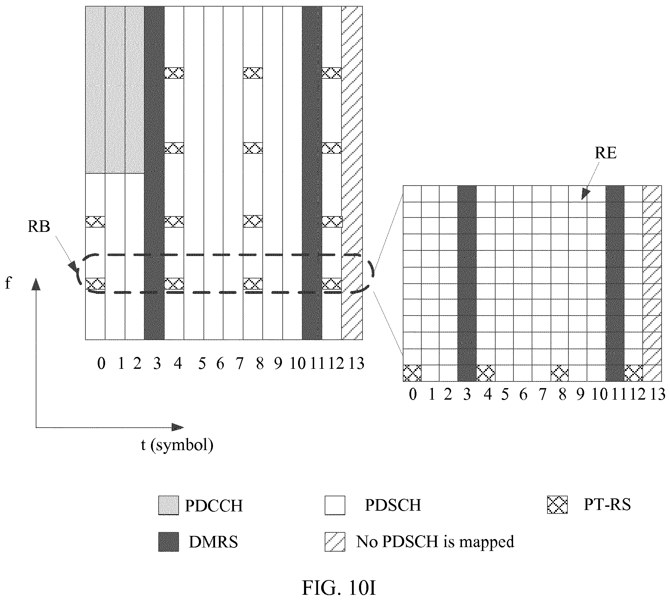

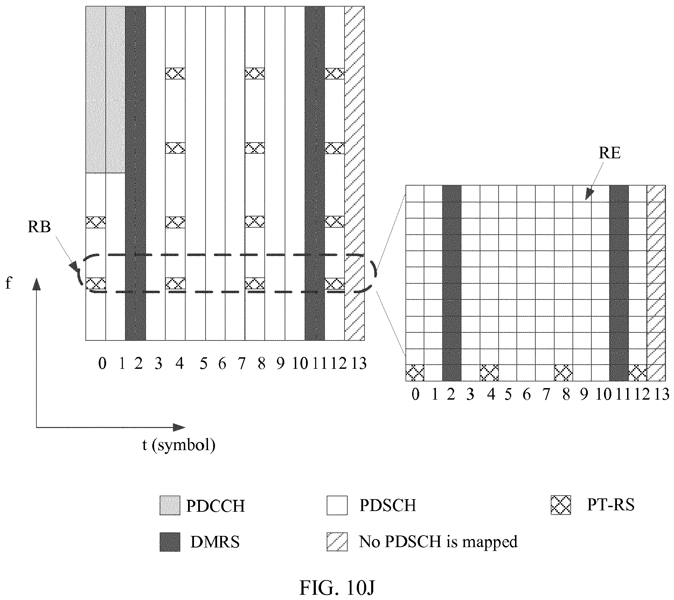

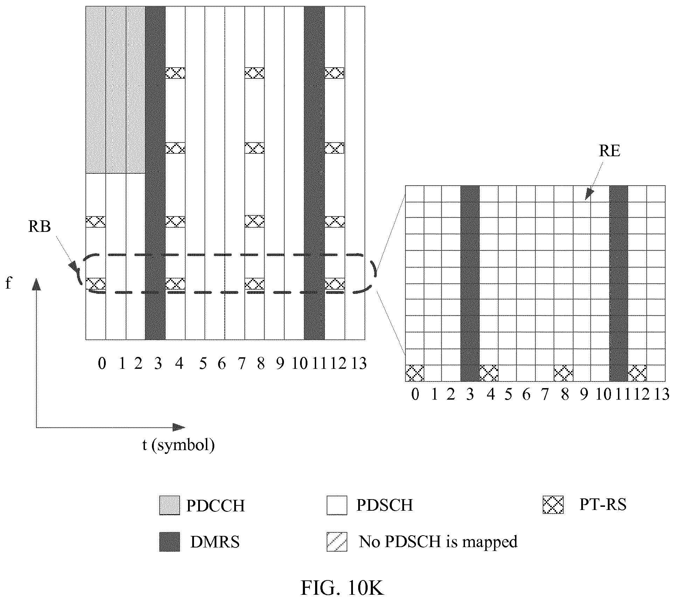

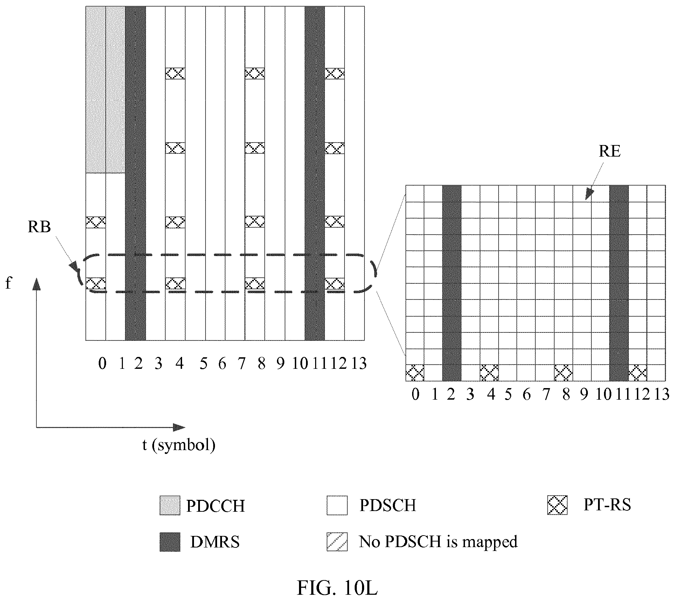

Downlink transmission is used as an example. FIG. 9A to FIG. 9L and FIG. 10A to FIG. 10L show examples of schematic diagrams of a time-domain PT-RS mapping rule provided in this embodiment. FIG. 9A to FIG. 9L and FIG. 10A to FIG. 10L show examples of several typical schematic PT-RS mapping diagrams obtained through mapping according to the time-domain PT-RS mapping rule provided in this embodiment under different DMRS configurations, PDCCH configurations, or PDSCH configurations.

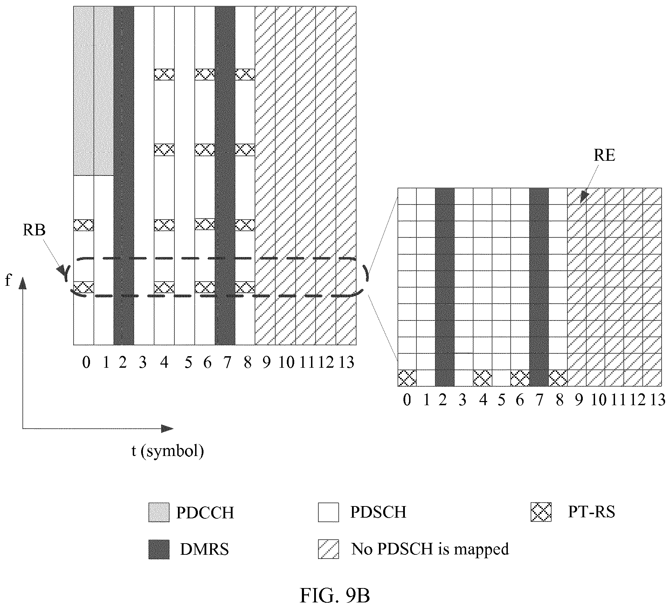

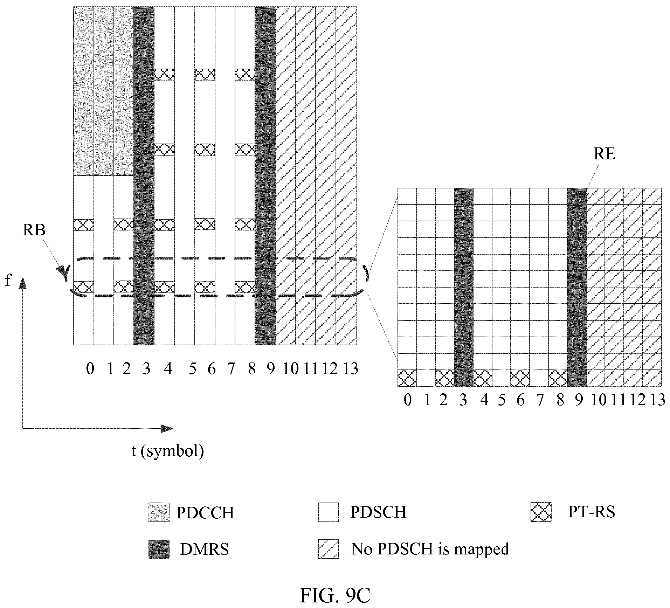

In examples shown in FIG. 9A to FIG. 9L, a time-domain density of the PT-RS is 1/2, that is, L = 2. The following provides descriptions by using FIG. 9A and FIG. 9B as an example. Time-domain PT-RS mapping in FIG. 9C to FIG. 9L can be learned from the figures. Details are not described herein.

As shown in FIG. 9A, a front-loaded DMRS is mapped to a symbol 3, that is, a second symbol is the symbol 3. An additional DMRS is mapped to a symbol 7. A PDCCH and a PDSCH share symbols 0 to 2, that is, symbols preceding the symbol carrying the front-loaded DMRS, in a manner of frequency division multiplexing. The PDSCH is not mapped to last five symbols (namely, symbols 9 to 13) in a time-domain unit (namely, a slot). In other words, the symbols 9 to 13 do not carry a downlink data signal. In an example shown in FIG. 9A, in the time-domain unit (namely, the slot), the PT-RS is mapped to the 1st symbol carrying a data signal (namely, the symbol 0). In addition, in ascending order of symbol indexes, the PT-RS is mapped to a symbol with a smallest index among every two (L = 2) symbols. Finally, the PT-RS is mapped to the symbol 0, the symbol 2, a symbol 4, a symbol 6, and a symbol 8.

As shown in FIG. 9B, a front-loaded DMRS is mapped to a symbol 2, that is, a second symbol is the symbol 2. An additional DMRS is mapped to a symbol 7. A PDCCH and a PDSCH share symbols 0 and 1, that is, symbols preceding the symbol carrying the front-loaded DMRS, in a manner of frequency division multiplexing. The PDSCH is not mapped to last five symbols (namely, symbols 9 to 13) in a time-domain unit (namely, a slot). In other words, the symbols 9 to 13 do not carry a downlink data signal. In an example shown in FIG. 9B, in the time-domain unit (namely, the slot), the PT-RS is mapped to the 1st symbol carrying a data signal (namely, the symbol 0). In addition, in ascending order of symbol indexes, the PT-RS is mapped to a symbol with a smallest index among every two (L = 2) symbols. Finally, the PT-RS needs to be mapped to the symbol 0, the symbol 2, a symbol 4, a symbol 6, and a symbol 8. The DMRS needs to be mapped to the symbol 2, and a mapping priority of the DMRS is higher than that of the PT-RS. Therefore, the PT-RS is actually not mapped to the symbol 2.

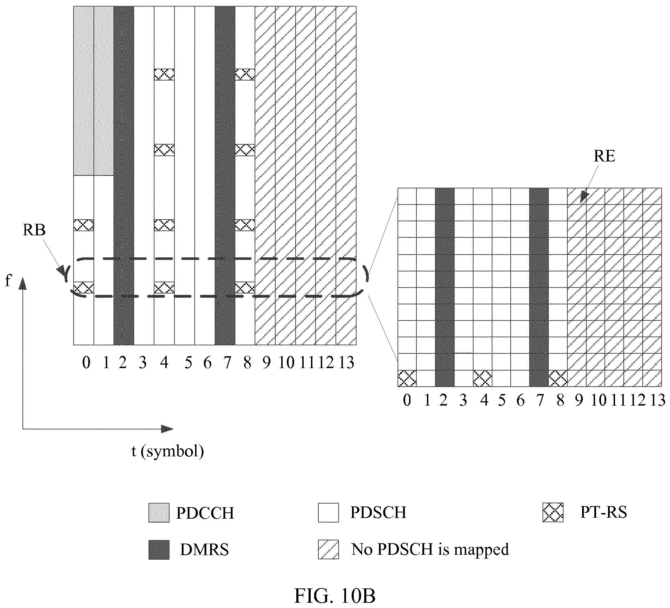

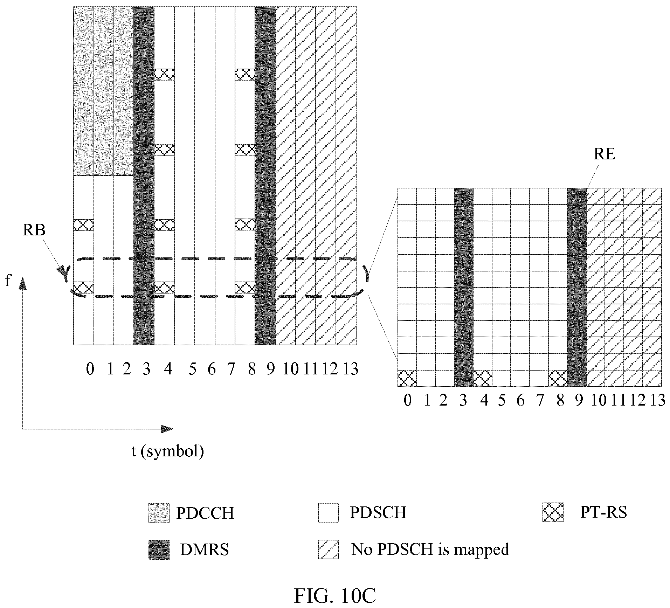

In examples shown in FIG. 10A to FIG. 10L, a time-domain density of the PT-RS is 1/4, that is, L = 4. The following provides descriptions by using FIG. 10A and FIG. 10B as examples. Time-domain PT-RS mapping in FIG. 10C to FIG. 10L can be learned from the figures. Details are not described herein.

As shown in FIG. 10A, a front-loaded DMRS is mapped to a symbol 3, that is, a second symbol is the symbol 3. An additional DMRS is mapped to a symbol 7. A PDCCH and a PDSCH share symbols 0 to 2, that is, symbols preceding the symbol carrying the front-loaded DMRS, in a manner of frequency division multiplexing. The PDSCH is not mapped to last five symbols (namely, symbols 9 to 13) in a time-domain unit (namely, a slot). In other words, the symbols 9 to 13 do not carry a downlink data signal. In an example shown in FIG. 10A, in the time-domain unit (namely, the slot), the PT-RS is mapped to the 1st symbol carrying a data signal (namely, the symbol 0). In addition, in ascending order of symbol indexes, the PT-RS is mapped to a symbol with a smallest index among every four (L = 4) symbols. Finally, the PT-RS is mapped to the symbol 0, a symbol 4, and a symbol 8.

As shown in FIG. 10B, a front-loaded DMRS is mapped to a symbol 3, that is, a second symbol is the symbol 3. An additional DMRS is mapped to a symbol 8. A PDCCH and a PDSCH share symbols 0 to 2, that is, symbols preceding the symbol carrying the front-loaded DMRS, in a manner of frequency division multiplexing. The PDSCH is not mapped to last five symbols (namely, symbols 9 to 13) in a time-domain unit (namely, a slot). In other words, the symbols 9 to 13 do not carry a downlink data signal. In an example shown in FIG. 10B, in the time-domain unit (namely, the slot), the PT-RS is mapped to the 1st symbol carrying a data signal (namely, the symbol 0). In addition, in ascending order of symbol indexes, the PT-RS is mapped to a symbol with a smallest index among every four (L = 4) symbols. Finally, the PT-RS needs to be mapped to the symbol 0, a symbol 4, and the symbol 8. The DMRS needs to be mapped to the symbol 8, and a mapping priority of the DMRS is higher than that of the PT-RS. Therefore, the PT-RS is actually not mapped to the symbol 8.

It should be noted that FIG. 9A to FIG. 9L and FIG. 10A to FIG. 10L show merely examples of some implementations of this embodiment. In actual applications, a resource (a subcarrier and a symbol) to which a DMRS is mapped, a resource (a subcarrier and a symbol) to which a PDCCH is mapped, a resource (a subcarrier and a symbol) to which a PDSCH is mapped, and the like may be alternatively different. This should not be construed as a limitation.

It can be learned from the foregoing that according to the time-domain PT-RS mapping rule provided in Embodiment 1, PT-RS mapping starts from the 1st symbol of a data channel. It is ensured that the PT-RS is also mapped to a symbol to which a data channel is mapped and that precedes the symbol carrying the front-loaded DMRS, thereby ensuring phase noise estimation performance. In addition, mapping priorities of the PT-RS and special signals, such as other reference signals and physical channels, are determined, and therefore when a resource conflict occurs between a resource to which the PT-RS is mapped and a resource to which the special signals, such as other reference signals and physical channels, are mapped, the conflict can be avoided in a manner of skipping mapping the PT-RS.

**(2) Embodiment 2**

In this embodiment, in a time-domain unit, a location of a symbol carrying a PT-RS may be related to a location of a symbol carrying a front-loaded DMRS (namely, a second symbol), and the 1st symbol and the last symbol that carry a data signal (PDSCH/PUSCH). Herein, the 1st symbol carrying the data signal is a symbol with a smallest index among symbols in the time-domain unit that carry the data signal (PDSCH/PUSCH). The last symbol carrying the data signal is a symbol with a largest index among symbols in the time-domain unit that carry the data signal (PDSCH/PUSCH).

In this application, the time-domain unit may be a slot, an aggregate slot, a subframe, a transmission time interval (Transmission Time Interval, TTI), or the like.

Specifically, in the time-domain unit, the PT-RS may be mapped to the 1st symbol that carries the data signal and that precedes the second symbol (namely, the symbol carrying the front-loaded DMRS). In addition, in ascending order of index values of symbols, the PT-RS may be mapped to a symbol with a smallest index among every L symbols preceding the second symbol. To be specific, starting from the 1st symbol carrying the data signal, the PT-RS may be evenly mapped to a symbol preceding the second symbol in ascending order of index values of symbols. L is a reciprocal of a symbol-level time-domain density of the PT-RS. A value of L may be determined based on the symbol-level time-domain density of the PT-RS. For example, the value may be {1, 2, 4}.

Specifically, in the time-domain unit, the PT-RS may be mapped to the last symbol that carries the data signal and that follows the second symbol (namely, the symbol carrying the front-loaded DMRS). In addition, in descending order of index values of symbols, the PT-RS may be mapped to a symbol with a largest index among every L symbols following the second symbol. To be specific, starting from the last symbol carrying the data signal, the PT-RS may be evenly mapped to a symbol following the second symbol in descending order of index values of symbols. L is a reciprocal of a symbol-level time-domain density of the PT-RS. A value of L may be determined based on the symbol-level time-domain density of the PT-RS. For example, the value may be {1,2, 4}.

In this embodiment, an index *l* of a symbol carrying the PT-RS may be expressed by using the following formula:

$$ l = \begin{cases} l_{data}^{last} - L \cdot l', \text{ if } l > l_{\text{DM-RS}} \\ l_{data}^{first} + L \cdot l', \text{ if } l < l_0 \end{cases} $$

where *l* is a positive integer, $l' = 0, 1, 2, ..., l_{data}^{first}$ represents an index of the 1st symbol carrying the data signal (PDSCH/PUSCH), $l_{data}^{last}$ represents an index of the last symbol carrying the data signal (PDSCH/PUSCH), L represents the reciprocal of the symbol-level time-domain density of the PT-RS, $l_{\text{DM-RS}}$ represents the last symbol carrying the front-loaded DMRS, and $l_0$ represents the 1st symbol carrying the front-loaded DMRS. For example, when the DMRS occupies one symbol, $l_{\text{DM-RS}}$ is equal to $l_0$; or when the DMRS occupies two symbols, $l_{\text{DM-RS}}$ is equal to $l_0 + 1$.

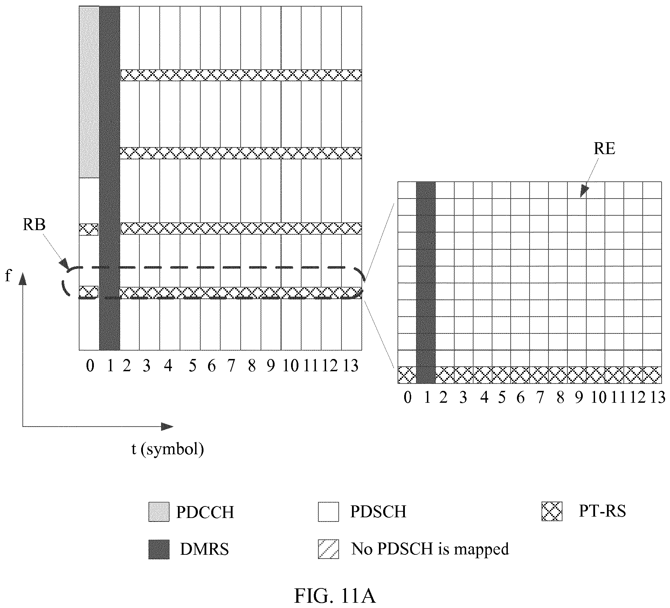

Downlink transmission is used as an example. FIG. 11A to FIG. 11C show examples of schematic diagrams of a time-domain PT-RS mapping rule provided in this embodiment. FIG. 11A to FIG. 11C show examples of several typical schematic PT-RS mapping diagrams obtained through mapping according to the time-domain PT-RS mapping rule provided in this embodiment under different DMRS configurations, PDCCH configurations, or PDSCH configurations.

In an example shown in FIG. 11A, a time-domain density of the PT-RS is 1, that is, L = 1.

As shown in FIG. 11A, a front-loaded DMRS is mapped to a symbol 1, that is, a second symbol is the symbol 1. A PDCCH and a PDSCH share a symbol 0, that is, a symbol preceding the symbol carrying the front-loaded DMRS, in a manner of frequency division multiplexing. In an example shown in FIG. 11A, before the symbol 1, the PT-RS is mapped to the 1st symbol carrying a data signal (namely, the symbol 0). After the symbol 1, the PT-RS is mapped to the last symbol carrying the data signal (namely, a symbol 13), and is mapped to a symbol with a largest index among every one (L = 1) symbol in descending order of symbol indexes. Finally, the PT-RS is mapped to the symbol 0 and symbols 2 to 13.

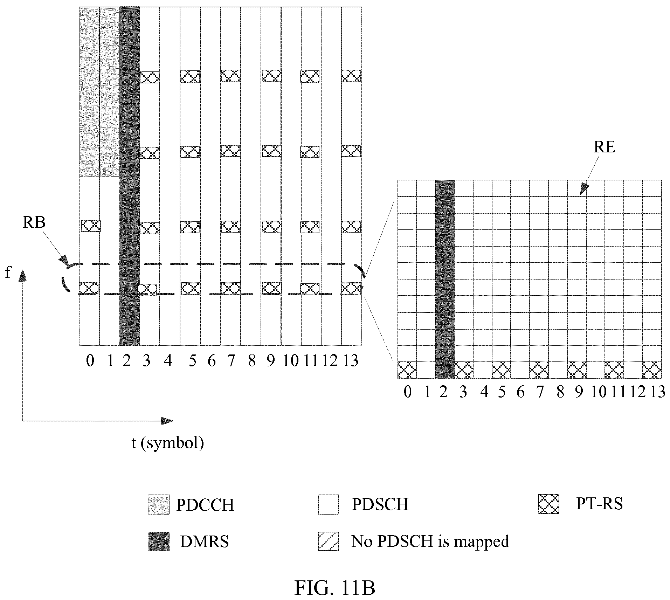

In an example shown in FIG. 11B, a time-domain density of the PT-RS is 1/2, that is, L = 2.

As shown in FIG. 11B, a front-loaded DMRS is mapped to a symbol 2, that is, a second symbol is the symbol 2. A PDCCH and a PDSCH share a symbol 0 and a symbol 1, that is, symbols preceding the symbol carrying the front-loaded DMRS, in a manner of frequency division multiplexing. In an example shown in FIG. 11B, before the symbol 2, the PT-RS is mapped to the 1st symbol carrying a data signal (namely, the symbol 0). After the symbol 2, the PT-RS is mapped to the last symbol carrying the data signal (namely, a symbol 13), and is mapped to a symbol with a largest index among every two (L = 2) symbols in descending order of symbol indexes. Finally, the PT-RS is mapped to the symbol 0, a symbol 3, a symbol 5, a symbol 7, a symbol 9, a symbol 11, and the symbol 13.

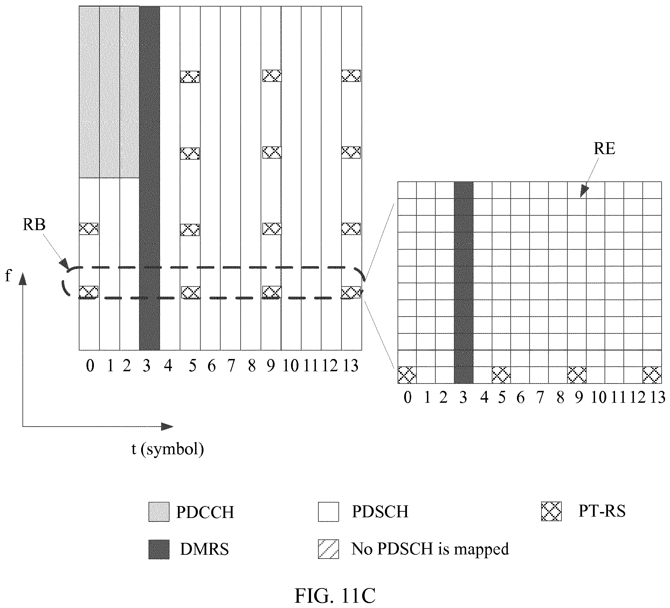

In an example shown in FIG. 11C, a time-domain density of the PT-RS is 1/4, that is, L = 4.

As shown in FIG. 11C, a front-loaded DMRS is mapped to a symbol 3, that is, a second symbol is the symbol 3. A PDCCH and a PDSCH share symbols 0 to 2, that is, symbols preceding the symbol carrying the front-loaded DMRS, in a manner of frequency division multiplexing. In an example shown in FIG. 11C, before the symbol 3, the PT-RS is mapped to the 1st symbol carrying a data signal (namely, the symbol 0). After the symbol 3, the PT-RS is mapped to the last symbol carrying the data signal (namely, a symbol 13), and is mapped to a symbol with a largest index among every four (L = 4) symbols in descending order of symbol indexes. Finally, the PT-RS is mapped to the symbol 0, a symbol 5, a symbol 9, and the symbol 13.

It should be noted that FIG. 11A to FIG. 11C show merely examples of some implementations of this embodiment. In actual applications, a resource (a subcarrier and a symbol) to which a DMRS is mapped, a resource (a subcarrier and a symbol) to which a PDCCH is mapped, a resource (a subcarrier and a symbol) to which a PDSCH is mapped, and the like may be alternatively different. This should not be construed as a limitation.

Similar to Embodiment 1, in this embodiment, a mapping priority of the PT-RS is lower than that of at least one of the following: a physical downlink control channel (PDCCH), a physical uplink control channel (PUCCH), a synchronization signal block (SS block), a channel state information reference signal (CSI-RS), a sounding reference signal (SRS), a demodulation reference signal (DMRS), and a physical broadcast channel (PBCH).

It can be learned from the foregoing that according to the time-domain PT-RS mapping rule provided in Embodiment 2, PT-RS mapping starts from the 1st symbol and the last symbol of a data channel towards to a symbol in between. It is ensured that the PT-RS is mapped to an edge symbol of the data channel, thereby ensuring interpolation estimation performance of the PT-RS. In addition, it is ensured that the PT-RS is also mapped to a symbol to which a data channel is mapped and that precedes a symbol carrying the front-loaded DMRS, thereby ensuring phase noise estimation performance.

**(3) Embodiment 3**

In this embodiment, a location of a symbol carrying a PT-RS may be related to a location of a symbol carrying a front-loaded DMRS (namely, a second symbol). Optionally, the location of the symbol carrying the PT-RS is further related to the symbol carrying the front-loaded DMRS (namely, the second symbol); a quantity of symbols, in a time-domain unit, whose symbol indexes are smaller than an index of the 1st symbol carrying the front-loaded DMRS; and a quantity of symbols, in the time-domain unit, whose symbol indexes are larger than an index of the last symbol carrying the front-loaded DMRS.

In this application, the time-domain unit may be a slot, an aggregate slot, a subframe, a transmission time interval (Transmission Time Interval, TTI), or the like.

Specifically, in the time-domain unit, an index of the last symbol that carries the PT-RS and that precedes the second symbol is related to a first difference. In addition, starting from the index of the last symbol carrying the PT-RS, in descending order of symbol indexes, the PT-RS is evenly mapped to a symbol that carries a data signal and that precedes the second symbol. Specifically, in the time-domain unit, an index of a symbol that carries the PT-RS and that precedes the second symbol is related to the first difference. Herein, the first difference ($H_2$) is a difference between the index ($I_0$) of the 1st symbol carrying the front-loaded DMRS and an index of the 1st symbol carrying a data signal (PDSCH/PUSCH). Herein, the evenly mapping means performing mapping evenly based on a time-domain density 1/L of the PT-RS. L is a reciprocal of a symbol-level time-domain density of the PT-RS. A value of L may be determined based on the symbol-level time-domain density of the PT-RS. For example, the value may be {1, 2, 4}.

Specifically, in the time-domain unit, an index of the 1st symbol that carries the PT-RS and that follows the second symbol is related to a quantity of symbols following the second symbol. In addition, starting from the index of the 1st symbol carrying the PT-RS, the PT-RS is evenly mapped to a symbol following the second symbol in ascending order of symbol indexes. Herein, the evenly mapping means performing mapping evenly based on a time-domain density 1/L of the PT-RS. L is a reciprocal of a symbol-level time-domain density of the PT-RS. A value of L may be determined based on the symbol-level time-domain density of the PT-RS. For example, the value may be {1, 2, 4}.

In this application, the quantity of symbols following the second symbol may be represented by $H_1$, the first difference may be represented by $H_2$, the index of the 1st symbol carrying the front-loaded DMRS may be represented by $I_0$, and an index of the last symbol carrying the front-loaded DMRS may be represented by $I_{DM-RS}$. In this embodiment, a location of a symbol carrying the PT-RS is related to $H_1$ and $H_2$. The following provides some time-domain PT-RS mapping manners.

(1) The time-domain density of the PT-RS is 1/2, that is, L = 2.

If the difference $H_1$ between the index of the last symbol carrying the front-loaded DMRS and an index of the last symbol that carries the data signal (PDSCH/PUSCH) and that follows the symbol carrying the front-loaded DMRS is an odd number, the PT-RS is mapped to a symbol whose index is $I_{DM-RS}$ + 1. Optionally, starting from the symbol whose index is $I_{DM-RS}$ + 1, the PT-RS may be evenly mapped to a symbol following the second symbol in ascending order of symbol indexes. If the difference $H_2$ between the index of the 1st symbol carrying the front-loaded DMRS and an index of the 1st symbol that carries the data signal (PDSCH/PUSCH) and that precedes the front-loaded DMRS is an odd number, the PT-RS is mapped to a symbol whose index is $I_0$ - 1. Optionally, starting from the symbol whose index is $I_0$ - 1, the PT-RS may be evenly mapped to a symbol preceding the second symbol in descending order of symbol indexes.

If the difference $H_1$ between the index of the last symbol carrying the front-loaded DMRS and an index of the last symbol that carries the data signal (PDSCH/PUSCH) and that follows the symbol carrying the front-loaded DMRS is an even number, the PT-RS is mapped to a symbol whose index is $I_{DM-RS}$ + 2. Optionally, starting from the symbol whose index is $I_{DM-RS}$ + 2, the PT-RS may be evenly mapped to a symbol following the second symbol in ascending order of symbol indexes. If the difference $H_2$ between the index of the 1st symbol carrying the front-loaded DMRS and an index of the 1st symbol that carries the data signal (PDSCH/PUSCH) and that precedes the front-loaded DMRS is an even number, the PT-RS is mapped to a symbol whose index is $l_0$ - 2. Optionally, starting from the symbol whose index is $l_0$ - 2, the PT-RS may be evenly mapped to a symbol preceding the second symbol in descending order of symbol indexes.

(2) The time-domain density of the PT-RS is 1/4, that is, L = 4.

If the difference $H_1$ between the index of the last symbol carrying the front-loaded DMRS and an index of the last symbol that carries the data signal (PDSCH/PUSCH) and that follows the symbol carrying the front-loaded DMRS is an integer multiple of 4, the PT-RS is mapped to a symbol whose index is $l_{DM-RS}$ + 4. Optionally, starting from the symbol whose index is $l_{DM-RS}$ + 4, the PT-RS may be evenly mapped to a symbol following the second symbol in ascending order of symbol indexes. If the difference $H_2$ between the index of the 1st symbol carrying the front-loaded DMRS and an index of the 1st symbol that carries the data signal (PDSCH/PUSCH) and that precedes the front-loaded DMRS is an integer multiple of 4, the PT-RS is mapped to a symbol whose index is $l_0$ - 4. Optionally, starting from the symbol whose index is $l_0$ - 4, the PT-RS may be evenly mapped to a symbol preceding the second symbol in descending order of symbol indexes.

If the difference $H_1$ between the index of the last symbol carrying the front-loaded DMRS and an index of the last symbol that carries the data signal (PDSCH/PUSCH) and that follows the symbol carrying the front-loaded DMRS satisfies Himod4 = 1, the PT-RS is mapped to a symbol whose index is $l_{DM-RS}$ + 1. Optionally, starting from the symbol whose index is $l_{DM-RS}$ + 1, the PT-RS may be evenly mapped to a symbol following the second symbol in ascending order of symbol indexes. If the difference $H_2$ between the index of the 1st symbol carrying the front-loaded DMRS and an index of the 1st symbol that carries the data signal (PDSCH/PUSCH) and that precedes the front-loaded DMRS satisfies $H_2$mod4 = 2, the PT-RS is mapped to a symbol whose index is $l_0$ - 1. Optionally, starting from the symbol whose index is $l_0$ - 1, the PT-RS may be evenly mapped to a symbol preceding the second symbol in descending order of symbol indexes.

If the difference $H_1$ between the index of the last symbol carrying the front-loaded DMRS and an index of the last symbol that carries the data signal (PDSCH/PUSCH) and that follows the symbol carrying the front-loaded DMRS satisfies Himod4 = 2, the PT-RS is mapped to a symbol whose index is $l_{DM-RS}$ + 2. Optionally, starting from the symbol whose index is $l_{DM-RS}$ + 2, the PT-RS may be evenly mapped to a symbol following the second symbol in ascending order of symbol indexes. If the difference $H_2$ between the index of the 1st symbol carrying the front-loaded DMRS and an index of the 1st symbol that carries the data signal (PDSCH/PUSCH) and that precedes the front-loaded DMRS satisfies $H_2$mod4 = 2, the PT-RS is mapped to a symbol whose index is $l_0$ - 2. Optionally, starting from the symbol whose index is $l_0$ - 2, the PT-RS may be evenly mapped to a symbol preceding the second symbol in descending order of symbol indexes.

If the difference $H_1$ between the index of the last symbol carrying the front-loaded DMRS and an index of the last symbol that carries the data signal (PDSCH/PUSCH) and that follows the symbol carrying the front-loaded DMRS satisfies Himod4 = 3, the PT-RS is mapped to a symbol whose index is $l_{DM-RS}$ + 3. Optionally, starting from the symbol whose index is $l_{DM-RS}$ + 3, the PT-RS may be evenly mapped to a symbol following the second symbol in ascending order of symbol indexes. If the difference $H_2$ between the index of the 1st symbol carrying the front-loaded DMRS and an index of the 1st symbol that carries the data signal (PDSCH/PUSCH) and that precedes the front-loaded DMRS satisfies $H_2$mod4 = 3, the PT-RS is mapped to a symbol whose index is $l_0$ - 3. Optionally, starting from the symbol whose index is $l_0$ - 3, the PT-RS may be evenly mapped to a symbol preceding the second symbol in descending order of symbol indexes.

In this embodiment, an index $l$ of a symbol carrying the PT-RS may be expressed by using the following formula:

$$l = \begin{cases} l_{\text{DM-RS}} + \left[ H_1 - \left( \left\lceil \frac{H_1}{L} \right\rceil - 1 \right) \times L \right] + L \cdot l', & if \ \ l > l_{\text{DM-RS}} \\ l_0 - \left[ H_2 - \left( \left\lceil \frac{H_2}{L} \right\rceil - 1 \right) \times L \right] - L \cdot l', & if \ \ l < l_0, H_2 > 0 \end{cases};$$

or

$$l = \begin{cases} l_{DM-RS} + [L - (-H_1) mod \ L] + L \cdot l', & if \ l > l_{DM-RS} \\ l_0 - [L - (-H_2) mod \ L] - L \cdot l', & if \ l < l_0, H_2 > 0 \end{cases}$$

where $l'$ is a positive integer, $l'$ = 0,1, 2, ..., $L$ represents the reciprocal of the symbol-level time-domain density of the PT-RS, $H_1$ represents the quantity of symbols following the second symbol, $H_2$ represents the foregoing first difference,

$I_0$ represents the index of the 1st symbol carrying the front-loaded DMRS, and $I_{DM\text{-}RS}$ represents the index of the last symbol carrying the front-loaded DMRS.

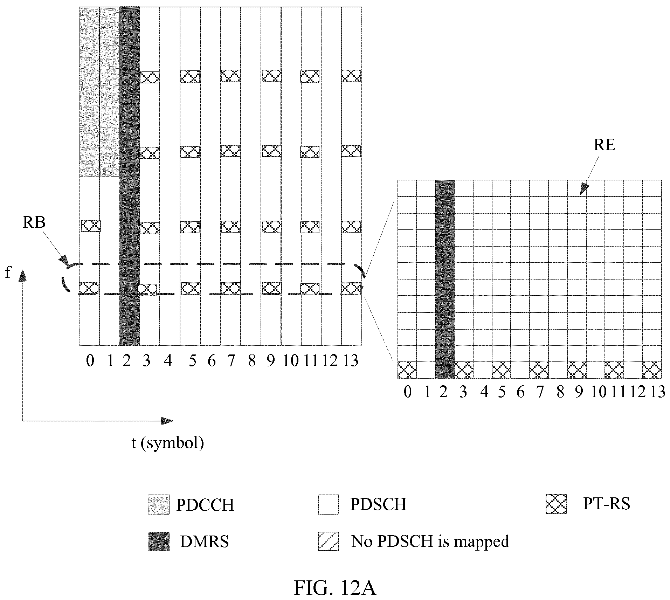

Downlink transmission is used as an example. FIG. 12A to FIG. 12D show examples of schematic diagrams of a time-domain PT-RS mapping rule provided in this embodiment. FIG. 12A to FIG. 12D show examples of several typical schematic PT-RS mapping diagrams obtained through mapping according to the time-domain PT-RS mapping rule provided in this embodiment under different DMRS configurations, PDCCH configurations, or PDSCH configurations.

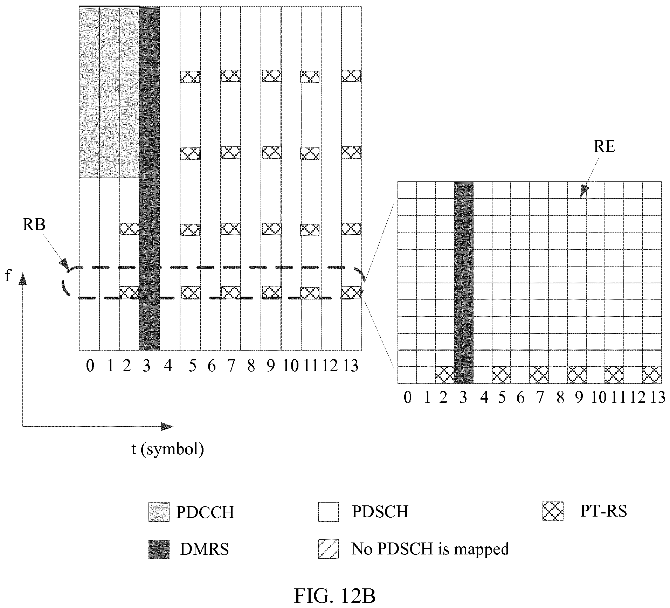

In examples shown in FIG. 12A and FIG. 12B, a time-domain density of the PT-RS is 1/2, that is, L = 2.

As shown in FIG. 12A, a front-loaded DMRS is mapped to a symbol 2, that is, a second symbol is the symbol 2. A PDCCH and a PDSCH share symbols 0 and 1, that is, symbols preceding the symbol carrying the front-loaded DMRS, in a manner of frequency division multiplexing. In an example shown in FIG. 12A, $H_1$= 11, and $H_2$ = 2. Before the symbol 2, the PT-RS is mapped to the symbol 0. After the symbol 2, the PT-RS is mapped to the symbol 3, and is mapped to a symbol with a smallest index among every two (L = 2) symbols in ascending order of symbol indexes. Finally, the PT-RS is mapped to the symbol 0, the symbol 3, a symbol 5, a symbol 7, a symbol 9, a symbol 11, and a symbol 13.

As shown in FIG. 12B, a front-loaded DMRS is mapped to a symbol 3, that is, a second symbol is the symbol 3. A PDCCH and a PDSCH share symbols 0 to 2, that is, symbols preceding the symbol carrying the front-loaded DMRS, in a manner of frequency division multiplexing. In an example shown in FIG. 12A, $H_1$ = 10, and $H_2$ = 3. Before the symbol 3, the PT-RS is mapped to the symbol 2. After the symbol 3, the PT-RS is mapped to a symbol 5, and is mapped to a symbol with a smallest index among every two (L = 2) symbols in ascending order of symbol indexes. Finally, the PT-RS is mapped to the symbol 2, the symbol 5, a symbol 7, a symbol 9, a symbol 11, and a symbol 13.

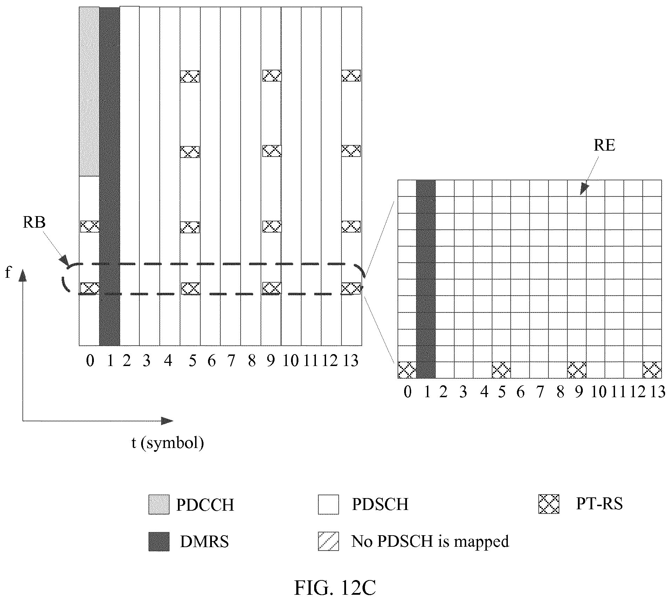

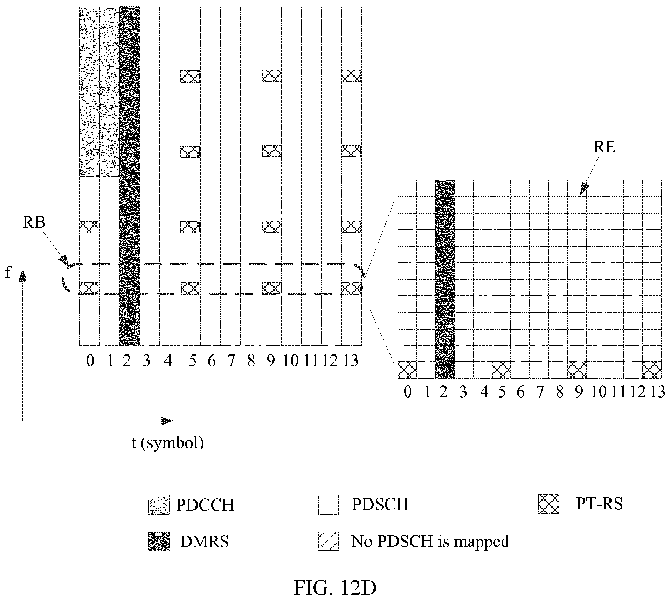

In examples shown in FIG. 12C and FIG. 12D, a time-domain density of the PT-RS is 1/4, that is, L = 4.

As shown in FIG. 12C, a front-loaded DMRS is mapped to a symbol 1, that is, a second symbol is the symbol 1. A PDCCH and a PDSCH share a symbol 0, that is, a symbol preceding the symbol carrying the front-loaded DMRS, in a manner of frequency division multiplexing. In an example shown in FIG. 12C, $H_1$ = 12, and $H_2$ = 1. Before the symbol 1, the PT-RS is mapped to the symbol 0. After the symbol 1, the PT-RS is mapped to a symbol 5, and is mapped to a symbol with a smallest index among every four (L = 4) symbols in ascending order of symbol indexes. Finally, the PT-RS is mapped to the symbol 0, the symbol 5, a symbol 9, and a symbol 13.

As shown in FIG. 12D, a front-loaded DMRS is mapped to a symbol 2, that is, a second symbol is the symbol 2. A PDCCH and a PDSCH share symbols 0 and 1, that is, symbols preceding the symbol carrying the front-loaded DMRS, in a manner of frequency division multiplexing. In an example shown in FIG. 12D, $H_1$ = 11, and $H_2$ = 2. Before the symbol 2, the PT-RS is mapped to the symbol 0. After the symbol 2, the PT-RS is mapped to a symbol 5, and is mapped to a symbol with a smallest index among every four (L = 4) symbols in ascending order of symbol indexes. Finally, the PT-RS is mapped to the symbol 0, the symbol 5, a symbol 9, and a symbol 13.

It should be noted that FIG. 12A to FIG. 12D show merely examples of some implementations of this embodiment. In actual applications, a resource (a subcarrier and a symbol) to which a DMRS is mapped, a resource (a subcarrier and a symbol) to which a PDCCH is mapped, a resource (a subcarrier and a symbol) to which a PDSCH is mapped, and the like may be alternatively different. This should not be construed as a limitation.

It can be learned from the foregoing that according to the time-domain PT-RS mapping rule provided in Embodiment 3, a location of a symbol carrying the DMRS is bound to a location of a symbol carrying the PT-RS, and the location of the symbol carrying the PT-RS may be determined based on a time-domain DMRS mapping pattern, thereby reducing signaling overheads. According to this embodiment, it can be ensured that the PT-RS is mapped to the last symbol of a data channel, thereby ensuring interpolation estimation performance of the PT-RS. In addition, it is ensured that the PT-RS is also mapped to a symbol to which a data channel is mapped and that precedes the symbol carrying the front-loaded DMRS, thereby ensuring phase noise estimation performance.

In some optional embodiments of this application, higher layer signaling, such as RRC signaling, includes one or more groups of data resource mapping indication (PDSCH-RE-MappingConfig) information. The data resource mapping indication information includes identification information (pdsch-RE-MappingConfigId) of the data resource mapping indication information and related information of a time-frequency resource location of a PT-RS. For example, the related information may indicate a phase tracking reference signal pattern (PT-RS pattern) and/or a phase tracking reference signal antenna port (PT-RS port).

A specific signaling implementation is as follows:

```
PDSCH-RE-MappingConfig ::= SEQUENCE {
        pdsch-RE-MappingConfigId        Identification information of the data resource
                                        mapping indication information,
        PT-RS ports        ENUMERATED {7, 8, 9, 10, 11, 12, 13, 14, spare 1}, and/or
        PT-RS pattern              ENUMERATED {pattern 1, pattern 2};
or
        PT-RS port group  ENUMERATED {group number 1, group number 2, ...},
        }
    }
```

Based on the foregoing signaling implementation, content included in a type of data resource mapping indication information in the RRC signaling is shown. The data resource mapping indication information includes identification information (pdsch-RE-MappingConfigId) of the data resource mapping indication information and related information of a time-frequency resource location of a PT-RS. Herein, the related information includes PT-RS ports and/or a PT-RS pattern; or a PT-RS port group. Herein, the PT-RS ports represent PT-RS antenna port information (for example, the antenna port information herein includes a port number of an antenna port), and the PT-RS pattern represents a PT-RS pattern; or the PT-RS port group represents information about a PT-RS antenna port group. For the related information of the time-frequency resource location of the PT-RS, refer to specific descriptions in the following context of this application.

In this embodiment of this application, optionally, a DCI indicates a specific group of data resource mapping indication information configured by using RRC signaling. For example, identification information (for example, pdsch-RE-MappingConfigId) of the data resource mapping indication information configured in the RRC signaling may be indicated by a bit of a data resource mapping and quasi-co-location indicator (PDSCH RE Mapping and Quasi-Co-Location Indicator, PQI) field in the DCI. For a specific implementation, refer to Table 1. In Table 1, an example in which the data resource mapping and quasi-co-location indicator field is represented by using two bits is used for description.

**Table 1**

| Data resource mapping and quasi-co-location indicator field (bit value) | Description |
|---|---|
| 00 | Identifier 1 of data resource mapping indication information configured by using RRC |
| 01 | Identifier 2 of data resource mapping indication information configured by using RRC |
| 10 | Identifier 3 of data resource mapping indication information configured by using RRC |
| 11 | Identifier 4 of data resource mapping indication information configured by using RRC |

Herein, the data resource mapping and quasi-co-location indicator field may also be understood as a specific implementation of second indication information carried in the DCI. The second indication information indicates a corresponding identifier, so that related information, in the RRC signaling and corresponding to the identifier, of a time-frequency resource location of a phase tracking reference signal can be determined. For example, in the foregoing example RRC signaling, the identification information of the data resource mapping indication information is the identifier 1, and bit values of the data resource mapping and quasi-co-location indicator field in the DCI are "00". Therefore, it can be determined that the DCI indicates related information, corresponding to the identifier 1, of a time-frequency resource location of a phase tracking reference signal. Further, it can be determined that the related information is the PT-RS ports ENUMERATED {7, 8, 9, 10, 11, 12, 13, 14, spare 1}, and/or the PT-RS pattern ENUMERATED {pattern 1, pattern 2}; or the PT-RS port group ENUMERATED {group number 1, group number 2, ...}.

It can be understood that a receive end (namely, the foregoing second device) may obtain the time-frequency resource location of the PT-RS in the data resource mapping indication information, and then may learn that data is not mapped to the time-frequency resource location of the PT-RS. That is, the receive end does not receive data in the time-frequency resource location of the PT-RS.

In addition, this application further provides another signal transmission method. In a non-coherent joint transmission (non-coherent joint transmission, NCJT) scenario, rate matching may be performed on data (that is, the data is not mapped) on a resource on which another transmission and reception point (transmission and reception point, TRP) sends a PT-RS. This can avoid PT-RS interference caused by data sent by different transmission and reception points, thereby ensuring PT-RS phase noise estimation performance.

First, the non-coherent joint transmission scenario is described.

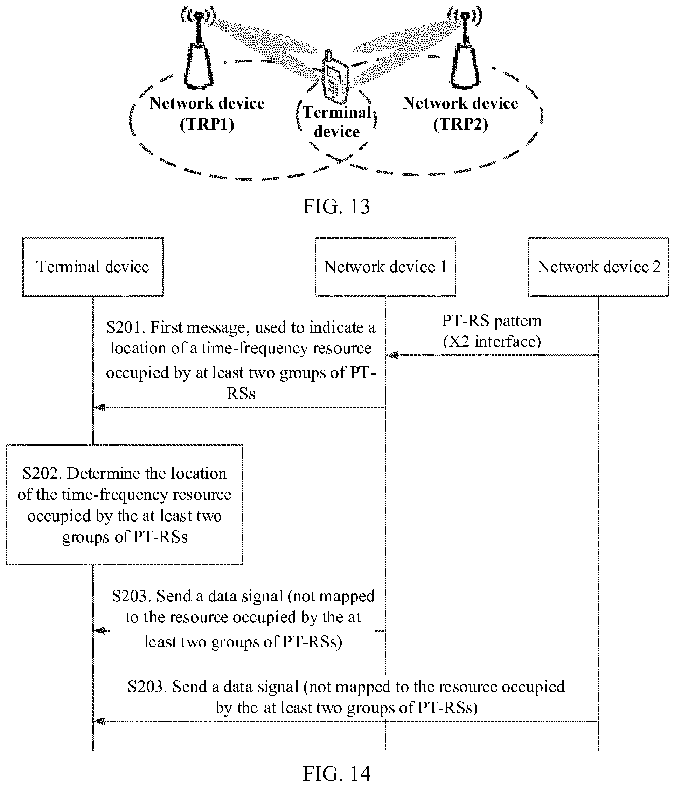

In an LTE system, a TM10 supports coordinated multipoint transmission/reception (Coordinated multipoint transmission/reception, CoMP). In the CoMP, signals may come from a plurality of transmission and reception points. As shown in FIG. 13, in the non-coherent joint transmission (NCJT) scenario, different transmission and reception points may transmit different MIMO streams (MIMO streams) to a same terminal device on a same time-frequency resource.

To support the coordinated multipoint transmission/reception (Coordinated multipoint transmission/reception, CoMP), a concept of quasi-co-located (quasi-co-located, QCL) is introduced, requiring that an antenna port meet a specific QCL limitation.

In CoMP communication, signals may come from a plurality of transmission and reception points (transmission and reception point, TP, or transmission reception point, TRP), and an antenna port in the CoMP needs to meet the QCL limitation. A plurality of groups of QCL information may sometimes need to be configured for a network device, to notify a terminal device. For example, in a case of non-coherent joint transmission (non-coherent Joint Transmission, NCJT), different transmission and reception points (for example, network devices) may transmit different multiple-input multiple-output (multiple-input multiple-output, MIMO) streams (MIMO streams) to a same terminal device on a same time-frequency resource in a same carrier. Therefore, a demodulation reference signal (demodulation reference signal, DMRS) antenna port (sometimes also referred to as DMRS ports), and a channel state information reference signal (channel state information reference signal, CSI-RS) antenna port and/or a PT-RS antenna port that are on a first transmission and reception point are QCL (that is, satisfy a QCL relationship); and a DMRS antenna port, and a CSI-RS antenna port and/or a PT-RS antenna port that are on a second transmission and reception point are QCL. However, an antenna port on the first transmission and reception point and that on the second transmission and reception point are non-QCL (that is, do not satisfy a QCL relationship).

For a definition of the QCL in this embodiment of this application, refer to a definition in LTE. To be specific, signals sent by QCL antenna ports undergo same large-scale fading. The large-scale fading includes one or more of the following: a delay spread, a Doppler spread, a Doppler shift, an average channel gain, an average delay, and the like. Alternatively, for a definition of the QCL in this embodiment of this application, refer to a definition of QCL in 5G. A definition of QCL in a new radio NR system is similar to that in an LTE system, but spatial information is added. For example, signals sent by QCL antenna ports undergo same large-scale fading. The large-scale fading includes one or more of the following parameters: a delay spread, a Doppler spread, a Doppler shift, an average channel gain, an average delay, a spatial parameter, and the like. The spatial parameter may be one or more of an angle of departure (AOA), a dominant angle of departure (Dominant AoA), an average angle of arrival (Average AoA), an angle of arrival (AOD), a channel correlation matrix, a power azimuth spread spectrum of an angle of arrival, an average angle of departure (Average AoD), a power azimuth spread spectrum of an angle of departure, a transmit channel correlation, a receive channel correlation, a transmission beamforming, a reception beamforming, a spatial channel correlation, a filter, a spatial filter parameter, or a spatial reception parameter.

The QCL relationship includes one or more of a channel state information-reference signal (channel state information-reference signal, CSI-RS), a DMRS, a phase tracking reference signal (phase tracking reference signal, PT-RS) (also referred to as a phase compensation reference signal (phase compensation reference signal, PCRS) or a phase noise reference signal (referred to as a phase noise reference signal for short)), a synchronization signal block (SS block) (including one or more of a synchronization signal and a broadcast channel, where the synchronization signal includes a primary synchronization signal PSS and/or a secondary synchronization signal SSS), and an uplink reference signal (for example, an uplink sounding signal sounding reference signal, SRS, or an uplink DMRS) that satisfy the QCL relationship.

It can be understood that if a transmission and reception point 2 (TRP2) sends data on a time-frequency resource on which a transmission and reception point 1 (TRP1) sends a PT-RS, when a backhaul link between a plurality of transmission and reception points is a non-ideal backhaul link, locations of PT-RSs of two transmission and reception points cannot be exchanged in time; therefore the data sent by the transmission and reception point 2 (TRP2) interferes with the PT-RS sent by the transmission and reception point 1 (TRP1), thereby affecting performance of a terminal device in receiving the PT-RS sent by the transmission and reception point 1 (TRP1). On the contrary, if the transmission and reception point 1 (TRP1) sends data on a time-frequency resource on which the transmission and reception point 2 (TRP2) sends a PT-RS, the data sent by the transmission and reception point 1 (TRP1) interferes with the PT-RS sent by the transmission and reception point 2 (TRP2).

The following describes in detail another signal transmission method for resolving the foregoing technical problem. As shown in FIG. 14, details are provided below.

A network device 1 and a network device 2 exchange PT-RS (namely, the foregoing first reference signal) mapping resource sets. Optionally, the network device 2 may send PT-RS information to the network device 1 through an X2 interface. The PT-RS information is used to determine a time-frequency resource occupied by a PT-RS that comes from the network device 2, that is, a PT-RS mapping resource set of the network device 2. Herein, the PT-RS mapping resource set of the network device 2 is a time-frequency resource on which the network device 2 may transmit a PT-RS. However, the network device 2 may transmit a PT-RS on only some resources in the set, or the network device 2 actually transmits no PT-RS.

Specifically, the network device 1 and the network device 2 need to notify each other of respective PT-RS resource mapping sets, for example, notify each other of the following parameters of each other: transmission enabling information of a PT-RS, indication information of a DMRS port that is in a DMRS port group and that is associated with an antenna port of a PT-RS, indication information of a DMRS port group, indication information of an association relationship between a frequency-domain density of a PT-RS and a schedulable bandwidth threshold, indication information of an association relationship between a time-domain density of a PT-RS and an MCS threshold, or the like.

Similarly, the network device 1 may also send PT-RS information to the network device 2 through the X2 interface. This is not limited in the present invention.

S201. The network device 1 (or the network device 2) sends first indication information to a terminal device. The first indication information sent by the network device 1 (or the network device 2) is used to indicate a location of a time-frequency resource occupied by at least two groups of PT-RSs. Each group of PT-RSs has a QCL relationship with another reference signal (for example, a DMRS, a CSI-RS, an SS block, or an SRS), and is corresponding to one network device. Each group of PT-RSs has a different QCL relationship. In other words, different groups of PT-RSs are non-QCL. For example, an antenna port in a PT-RS antenna port group 1 satisfies a first QCL relationship, and an antenna port in a PT-RS antenna port group 2 satisfies a second QCL relationship. The first QCL relationship is different from the second QCL relationship. The first QCL relationship may be corresponding to the network device 1, and the second QCL relationship may be corresponding to the network device 2. In this application, the another reference signal may be referred to as a third reference signal.

Optionally, the first indication information sent by the network device 1 (or the network device 2) to the terminal device may be higher layer signaling, or a joint indication of higher layer signaling and physical layer signaling. For example, the first indication information is higher layer signaling. For example, the first indication information is RRC signaling. The RRC signaling includes at least two groups of data resource mapping indication (PDSCH-RE-Mapping-Config) information. The data resource mapping indication information includes identification information (pdsch-RE-MappingConfigId) of the data resource mapping indication information and related information of a time-frequency resource location of a PT-RS. The related information may indicate a PT-RS pattern (PT-RS pattern) and/or a PT-RS antenna port (PT-RS port), or a PT-RS group identifier, or the like.

A specific signaling implementation is as follows:

```
PDSCH-RE-MappingConfig ::= SEQUENCE {
    pdsch-RE-MappingConfigId        Identification information of the data resource
                                    mapping indication information,
    PT-RS ports        ENUMERATED {7, 8, 9, 10, 11, 12, 13, 14, spare 1}, and/or

    PT-RS pattern              ENUMERATED {pattern 1, pattern 2};
    or
    PT-RS port group   ENUMERATED {group number 1, group number 2, ...},
    }
}
```

Based on the foregoing signaling implementation, content included in a type of data resource mapping indication information in the RRC signaling is shown. The data resource mapping indication information includes identification information (pdsch-RE-MappingConfigId) of the data resource mapping indication information and related information of a time-frequency resource location of a PT-RS. Herein, the related information includes PT-RS ports and/or a PT-RS pattern; or a PT-RS port group. Herein, the PT-RS ports represent PT-RS antenna port information (for example, the antenna port information herein includes a port number of an antenna port), and the PT-RS pattern represents PT-RS pattern information; or the PT-RS port group represents information about a PT-RS antenna port group. For the related information of the time-frequency resource location of the PT-RS, refer to specific descriptions in the following context of this application.

In this embodiment of this application, optionally, the first indication information may be physical layer signaling DCI and higher layer signaling. For example, the physical layer signaling DCI indicates a specific group of data resource mapping indication information configured by using RRC signaling. For example, identification information (for example, pdsch-RE-MappingConfigId) of the data resource mapping indication information configured in the RRC signaling may be indicated by a data resource mapping bit in the DCI. For a specific implementation, refer to Table 2. In Table 2, an example in which a data resource mapping and quasi-co-location indicator field is represented by using two bits is used for description.

**Table 2**

| Data resource mapping and quasi-co-location indicator field (bit value) | Description |
| --- | --- |
| 00 | Identifier 1 of data resource mapping indication information configured by using RRC |
| 01 | Identifier 2 of data resource mapping indication information configured by using RRC |
| 10 | Identifier 3 of data resource mapping indication information configured by using RRC |
| 11 | Identifier 4 of data resource mapping indication information configured by using RRC |

For example, in the foregoing example RRC signaling, the identification information of the data resource mapping indication information is the identifier 1, and bit values of the data resource mapping and quasi-co-location indicator field in the DCI are "00". Therefore, it can be determined that the DCI indicates related information, corresponding to the identifier 1, of a time-frequency resource location of a phase tracking reference signal. Further, it can be determined that the related information is the PT-RS ports ENUMERATED {7, 8, 9, 10, 11, 12, 13, 14, spare 1}, and/or the PT-RS pattern ENUMERATED {pattern 1, pattern 2}; or the PT-RS port group ENUMERATED {group number 1, group number 2, ...}.

It can be understood that a receive end (namely, the terminal device) may obtain the time-frequency resource location of the at least two groups of PT-RSs in the data resource mapping indication information, and then may learn that data is not mapped to a time-frequency resource location of the second DMRS. That is, data transmission is not performed in the time-frequency resource location of the second DMRS.

S202. The terminal device determines the time-frequency resource location of the at least two groups of PT-RSs in the data resource mapping indication information based on the first indication information sent by the network device 1 (or the network device 2), and then may learn that data is not mapped to the time-frequency resource location of the second DMRS. That is, data transmission is not performed in the time-frequency resource location of the second DMRS.

S203. The network device 1 and/or the network device 2 sends a data signal to the terminal device and performs rate matching on a to-be-sent data signal. To be specific, the data signal is not mapped to the time-frequency resource location of the PT-RS that is indicated by the first indication information. Alternatively, the data signal is mapped to a time-frequency resource location other than the time-frequency resource location of the PT-RS that is indicated by the first indication information.

Optionally, the first indication information (higher layer signaling, or a joint indication of higher layer signaling and physical layer signaling) may include first information and second information. The first information is used to determine a subcarrier occupied by the PT-RS, and the second information is used to determine a symbol occupied by the PT-RS. Specifically, the first information may include at least one of the following: transmission enabling information of the PT-RS, indication information of a DMRS port that is in a DMRS port group and that is associated with an antenna port of the PT-RS, indication information of a DMRS port group, or indication information of an association relationship between a frequency-domain density of the PT-RS and a schedulable bandwidth threshold. Specifically, the second information may include indication information of an association relationship between a time-domain density of the PT-RS and an MCS threshold.

Optionally, the terminal device may determine a PT-RS subcarrier mapping set of the network device 1 (or the network device 2), that is, a subcarrier set that may be occupied by the network device 1 (or the network device 2), based on the first information sent by the network device 1 (or the network device 2). Optionally, the PT-RS subcarrier mapping set of the network device 1 (or the network device 2) may include (all possible) subcarriers at a frequency-domain density corresponding to maximum schedulable bandwidth scheduled by the network device 1 for the terminal device. For a relationship between a schedulable bandwidth and a frequency-domain density, refer to descriptions about a frequency-domain density of a PT-RS in subsequent content. Details are not described herein.

Optionally, the terminal device may determine a PT-RS symbol mapping set of the network device 1 (or the network device 2), that is, a symbol set that may be occupied by the network device 1 (or the network device 2), based on the second information sent by the network device 1 (or the network device 2). Optionally, the PT-RS symbol mapping set of the network device 1 (or the network device 2) may include (all possible) symbols at a time-domain density corresponding to a maximum MCS scheduled by the network device 1 for the terminal device. For a relationship between an MCS and a time-domain density, refer to descriptions about a time-domain density of a PT-RS in subsequent content. Details are not described herein.

It should be understood that an execution sequence of the steps in the foregoing method is not limited to that shown in FIG. 14 and may alternatively change. This is not limited in this application.

Optionally, when current transmission is non-coherent joint transmission (NCJT), the network device and the terminal device perform rate matching on the foregoing PT-RS. For example, whether current transmission is NCJT may be determined based on a quantity of DCIs requiring blind detection or a maximum quantity of DCIs requiring blind detection, where the quantity is configured by the network device for UE by using RRC signaling, and further, whether to perform rate matching on the PT-RS by using the foregoing method is determined. For another example, whether current transmission is NCJT may be indicated by using explicit signaling (physical layer DCI signaling, or DCI signaling), and whether to perform rate matching on the PT-RS by using the foregoing method is determined. Alternatively, whether current transmission is NCJT may be implicitly determined based on a quantity of QCL relationships that is indicated by DCI signaling, and further, whether to perform rate matching on the PT-RS by using the foregoing method is determined. A method for determining NCJT is not limited in this application.

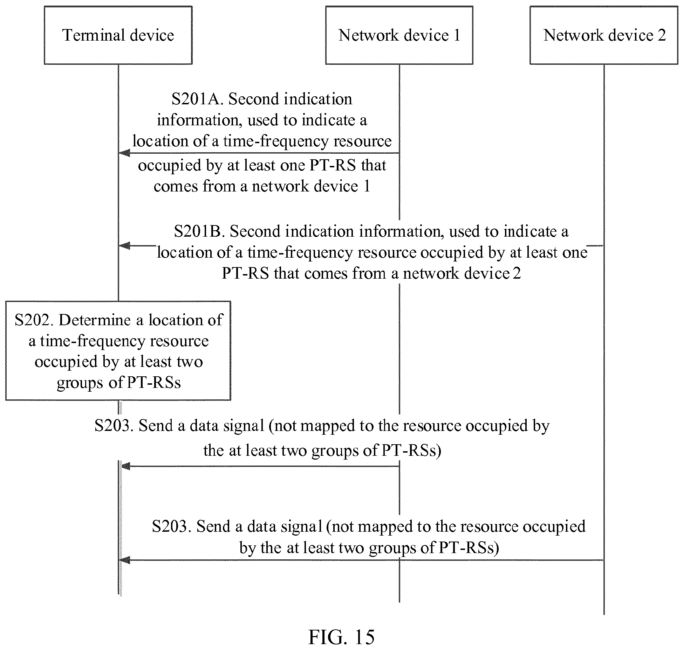

In addition to that shown in FIG. 14, as shown in FIG. 15, the network device 1 and the network device 2 may alternatively send second indication information to the terminal device separately. Refer to S201A and S201B. Specifically, the second indication information sent by the network device 1 (or the network device 2) is used to indicate a time-frequency resource occupied by a PT-RS that comes from the network device 1 (or the network device 2). It can be understood that the second indication information separately sent by the network device 1 and the network device 2 may be jointly used to indicate the location of the time-frequency resource occupied by the at least two groups of PT-RSs mentioned in the embodiment of FIG. 14. A PT-RS from the network device 1 and a PT-RS from the network device 2 do not have a QCL relationship.

For steps, other than S201A and S201B, in an embodiment of FIG. 15, refer to the embodiment of FIG. 14. Details are not described herein again.

The following describes manners of determining a time-domain density and a frequency-domain density of a PT-RS.

(1) Time-domain density of the PT-RS

In this application, the time-domain density of the PT-RS may be related to at least one of a cyclic prefix (Cyclic Prefix, CP) type, a subcarrier spacing, and a modulation and coding scheme.

Specifically, there is a correspondence between the time-domain density of the PT-RS and the at least one of the CP type, the subcarrier spacing, and the modulation and coding scheme. Different CP types, subcarrier spacings, or modulation and coding schemes are corresponding to different time-domain densities. Specifically, the correspondence may be predefined by a protocol, or may be configured by the network device by using higher layer signaling (for example, RRC signaling).

It can be learned from the foregoing content that the time-domain density of the PT-RS may include the following types: The PT-RS may be continuously mapped to every symbol of a PUSCH (or a PDSCH), or may be mapped to every 2nd symbol of a PUSCH (or a PDSCH), or may be mapped to every 4th symbol of a PUSCH (or a PDSCH).

In this application, the time-domain density of the PT-RS may be determined based on the subcarrier spacing and the modulation and coding scheme. Specifically, for a determined subcarrier spacing value, one or more modulation and coding scheme thresholds may be predefined, or may be configured by using higher layer signaling. All modulation and coding schemes between two adjacent modulation and coding scheme thresholds are corresponding to a same time-domain density of the PT-RS, as shown in Table 3.

**Table 3**

| Modulation order | Time-domain density |
|---|---|
| 0 <= MCS < MCS_1 | 0 |
| MCS_1 <= MCS < MCS_2 | 1/4 |
| MCS_2 <= MCS < MCS_3 | 1/2 |
| MCS_3 <= MCS | 1 |

MCS_1, MCS_2, and MCS_3 are modulation and coding scheme thresholds. "1", "1/2", and "1/4" in the time-domain density are three time-domain densities shown in FIG. 1.

Specifically, at a determined subcarrier spacing, the time-domain density of the PT-RS may be determined based on a modulation and coding scheme threshold interval into which an actual modulation and coding scheme MCS falls. For example, assuming that Table 3 shows modulation and coding scheme thresholds at a default subcarrier spacing SCS_1 = 15 kHz, if the actual modulation and coding scheme MCS falls into an interval [MCS_2, MCS_3], the time-domain density of the PT-RS is 1/2. This example is merely used to explain this embodiment of the present invention, and should not be construed as a limitation.

In this application, different subcarrier spacings may be corresponding to different modulation and coding scheme thresholds. To be specific, different correspondence tables of a modulation and coding scheme threshold and a time-domain density may be configured for different subcarrier spacings.

Specifically, modulation and coding scheme thresholds corresponding to different subcarrier spacings may be predefined by a protocol, or may be configured by the network device by using higher layer signaling (for example, RRC signaling).

In some optional embodiments, a default subcarrier spacing (expressed as SCS_1), for example, 15 kHz, and one or more default thresholds (expressed as MCS') corresponding to the default subcarrier spacing may be predefined by a protocol, or may be configured by using higher layer signaling. In addition, for another non-default subcarrier spacing, a corresponding modulation and coding scheme offset (expressed as MCS_offset, which is an integer) may be predefined by a protocol, or may be configured by using higher layer signaling. MCS_offset + MCS = MCS', where MCS represents an actual modulation and coding scheme at the another non-default subcarrier spacing. At the another non-default subcarrier spacing, the time-domain density of the PT-RS may be determined by adding the actual modulation and coding scheme MCS up to the modulation and coding scheme offset MCS _offset.

For example, if Table 4 shows modulation and coding scheme thresholds at the default subcarrier spacing SCS_1 = 15 kHz, at a non-default subcarrier spacing 60 kHz, if a sum of the actual modulation and coding scheme MCS and MCS_offset falls into an interval [0, MCS_1], the time-domain density of the PT-RS is 0; or if a sum of the actual modulation and coding scheme MCS and MCS_offset falls into an interval [MCS_1, MCS_2], the time-domain density of the PT-RS is 1/4. This example is merely used to explain this embodiment of the present invention, and should not be construed as a limitation.

**Table 4**

| Modulation order | Time-domain density |
|---|---|
| 0 <= MCS' < MCS_1 | 0 |
| MCS_1 <= MCS' < MCS_2 | 1/4 |
| MCS_2 <= MCS' < MCS_3 | 1/2 |
| MCS_3 <= MCS' | 1 |

In some optional embodiments, a default subcarrier spacing (expressed as SCS_1) and one or more default modulation and coding scheme thresholds (expressed as MCS') corresponding to the default subcarrier spacing may be predefined by a protocol, or may be configured by using higher layer signaling. In addition, for another non-default subcarrier spacing (expressed as SCS_n), a corresponding scale factor $\beta$ ($0 < \beta < 1$) may be predefined by a protocol, or may be configured by using higher layer signaling. It may be defined that $\beta = SCS\_1/SCS\_n$. At the another non-default subcarrier spacing, a default modulation and coding scheme threshold interval into which an MCS falls may be determined by using an actual modulation and coding scheme MCS and the default modulation and coding scheme threshold MCS'. Then an actual time-domain density of the PT-RS is determined by multiplying the scale factor β by a time-domain density corresponding to the default modulation and coding scheme threshold interval.

For example, if Table 4 shows modulation and coding scheme thresholds at a default subcarrier spacing SCS_1 = 60 kHz, at a non-default subcarrier spacing 120 kHz, if the actual modulation and coding scheme MCS falls into [MCS_2, MCS_3], the actual time-domain density of the PT-RS is a time-domain density closest to a product of the time-domain density "1/2" and the scale factor β. Because β = 60/120 = 1/2, the actual time-domain density of the PT-RS is 1/4. This example is merely used to explain this embodiment of the present invention, and should not be construed as a limitation.

In this application, for different CP types or lengths, a correspondence between the time-domain density of the PT-RS and at least one of the subcarrier spacing and the modulation and coding scheme may be predefined by a protocol, or may be configured by using higher layer signaling (for example, RRC signaling).

Optionally, for an extended cyclic prefix (Extended Cyclic Prefix, ECP), the time-domain density of the PT-RS may be predefined by a protocol, or may be configured by using higher layer signaling as follows: The PT-RS is continuously mapped to every symbol of a PUSCH (or a PDSCH). In this way, the PT-RS can be used to help with Doppler shift estimation in a high-speed large-delay extension scenario.

It should be noted that Table 3 and Table 4 are merely used to explain this embodiment of the present invention, and should not be construed as a limitation.

(2) Frequency-domain density of the PT-RS

In this application, the frequency-domain density of the PT-RS may be related to at least one of a CP type, a user schedulable bandwidth, a subcarrier spacing, and a modulation and coding scheme. To be specific, a total quantity $L_{PT-RS}$ of subcarriers to which the PT-RS is mapped within the user schedulable bandwidth may be related to at least one of the CP type, the user schedulable bandwidth, the subcarrier spacing, and the modulation and coding scheme.

Specifically, there is a correspondence between the frequency-domain density of the PT-RS and the at least one of the CP type, the user schedulable bandwidth, the subcarrier spacing, and the modulation and coding scheme. Different CP types, user schedulable bandwidths, subcarrier spacings, or modulation and coding schemes are corresponding to different frequency-domain densities. Specifically, the correspondence may be predefined by a protocol, or may be configured by the network device by using higher layer signaling (for example, RRC signaling).

Specifically, for a determined subcarrier spacing, one or more schedulable bandwidth thresholds may be predefined, or may be configured by using higher layer signaling. All schedulable bandwidths between two adjacent schedulable bandwidth thresholds are corresponding to a same frequency-domain density of the PT-RS, as shown in Table 5.

**Table 5**

| Schedulable bandwidth threshold | Frequency-domain density (a quantity of subcarriers in each resource block) |
|---|---|
| 0 <= BW < BW_1 | 0 |
| BW_1 <= BW < BW_2 | 1 |
| BW_2 <= BW < BW_3 | 1/2 |
| BW_3 <= BW < BW_4 | 1/4 |
| BW_4 <= BW < BW_5 | 1/8 |
| BW_5 <= BW | 1/16 |

BW_1, BW_2, BW_3, BW_4, and BW_5 are schedulable bandwidth thresholds. A schedulable bandwidth threshold may be represented by a quantity of resource blocks included in a schedulable bandwidth, or may be represented by a frequency-domain range corresponding to a schedulable bandwidth. This is not limited herein. The frequency-domain density "1/2" indicates that the PT-RS occupies one subcarrier in every two resource blocks. Meanings of the frequency-domain densities "1/4", "1/8", and "1/16" may be obtained by analogy. Details are not described again.

Specifically, at a determined subcarrier spacing, the frequency-domain density of the PT-RS may be determined based on a schedulable bandwidth threshold interval into which an actual schedulable bandwidth BW falls. For example, assuming that Table 1 shows schedulable bandwidth thresholds at a default subcarrier spacing SCS_1 = 15 kHz, if the actual schedulable bandwidth BW falls into an interval [BW_2, BW_3], the frequency-domain density of the PT-RS is 1/2. This example is merely used to explain this embodiment of the present invention, and should not be construed as a limitation.

In this application, different subcarrier spacings may be corresponding to different schedulable bandwidth thresholds. To be specific, different correspondence tables of a schedulable bandwidth threshold and a frequency-domain density may be configured for different subcarrier spacings.

Specifically, schedulable bandwidth thresholds corresponding to different subcarrier spacings may be predefined by a protocol, or may be configured by the network device by using higher layer signaling (for example, RRC signaling).

In some optional embodiments, a default subcarrier spacing (expressed as $SCS\_1$), for example, 15 kHz, and one or more default schedulable bandwidth thresholds (expressed as BW') corresponding to the default subcarrier spacing may be predefined by a protocol, or may be configured by using higher layer signaling. In addition, for another non-default subcarrier spacing, a corresponding schedulable bandwidth offset (expressed as BW_offset, which is an integer) may be predefined by a protocol, or may be configured by using higher layer signaling. BW_offset + BW = BW', where BW represents an actual schedulable bandwidth at the another non-default subcarrier spacing. At the another non-default subcarrier spacing, the frequency-domain density of the PT-RS may be determined by adding the actual schedulable bandwidth BW up to the schedulable bandwidth offset BW_offset.

For example, if Table 6 shows schedulable bandwidth thresholds at the default subcarrier spacing $SCS\_1 = $ 15 kHz, at a non-default subcarrier spacing 60 kHz, if a sum of the actual schedulable bandwidth BW and BW_offset falls into an interval [BW_1, BW_2], the frequency-domain density of the PT-RS is 1; or if a sum of the actual schedulable bandwidth BW and BW_offset falls into an interval [BW_2, BW_3], the frequency-domain density of the PT-RS is 1/2. This example is merely used to explain this embodiment of the present invention, and should not be construed as a limitation.

**Table 6**

| Schedulable bandwidth threshold | Frequency-domain density (a quantity of subcarriers in each resource block) |
|---|---|
| 0 <= BW' < BW_1 | 0 |
| BW_1 <= BW' < BW_2 | 1 |
| BW_2 <= BW < BW_3 | 1/2 |
| BW_3 <= BW' < BW_4 | 1/4 |
| BW_4 <= BW < BW_5 | 1/8 |
| BW_5 <= BW' | 1/16 |

In some optional embodiments, a default subcarrier spacing (expressed as $SCS\_1$) and one or more default schedulable bandwidth thresholds (expressed as BW') corresponding to the default subcarrier spacing may be predefined by a protocol, or may be configured by using higher layer signaling. In addition, for another non-default subcarrier spacing (expressed as $SCS\_n$), a corresponding scale factor $\beta$ ($0 < \beta < 1$) may be predefined by a protocol, or may be configured by using higher layer signaling. It may be defined that $\beta = SCS\_n/SCS\_1$. At the another non-default subcarrier spacing, a default schedulable bandwidth threshold interval into which a BW falls may be determined by using an actual schedulable bandwidth BW and the default schedulable bandwidth threshold BW'. Then an actual frequency-domain density of the PT-RS is determined by multiplying the scale factor $\beta$ by a frequency-domain density corresponding to the default schedulable bandwidth threshold interval.

For example, if Table 6 shows schedulable bandwidth thresholds at a default subcarrier spacing $SCS\_1 = 60$ kHz, at a non-default subcarrier spacing 120 kHz, if the actual schedulable bandwidth BW falls into [BW_3, BW_4], the actual frequency-domain density of the PT-RS is a frequency-domain density closest to a product of the frequency-domain density "1/4" and the scale factor $\beta$. Because $\beta = 120/60 = 2$, the actual frequency-domain density of the PT-RS is 1/2. This example is merely used to explain this embodiment of the present invention, and should not be construed as a limitation.

It should be noted that Table 5 and Table 6 are merely used to explain this embodiment of the present invention, and should not be construed as a limitation.

In addition, this application further provides another signal transmission method.

First, a non-coherent joint transmission scenario is described.

Currently, a network device and a terminal device may communicate with each other based on a multiple-input multiple-output technology. In an uplink communication process, the network device may configure the terminal device to send a sounding reference signal. The sounding reference signal (sounding reference signal, SRS) is a reference signal used to measure an uplink channel. The network device measures an uplink channel based on the SRS sent by the terminal device, to obtain channel state information (channel state information, CSI) of the uplink channel and schedule an uplink resource. When uplink and downlink channels have reciprocity, the network device may further obtain downlink CSI by measuring the SRS, that is, first obtaining uplink CSI and then determining the downlink CSI based on the channel reciprocity.

In LTE, an SRS of a one-transmitter, two-receiver (1T2R) terminal device can be switched between different antennas. In this case, in uplink sending of the terminal device, only one antenna or one port may be used for sending at the same time; and in downlink receiving, two antennas may be used for receiving. Therefore, in this case, the network device cannot obtain channels of the two downlink receive antennas based on an SRS of a single antenna. To enable the network device to obtain channels of all downlink antennas, the terminal device needs to send SRSs on a plurality of antennas at different times, that is, send the SRSs in a manner of SRS antenna switchover.

The following describes in detail still another signal transmission method for resolving the foregoing technical problem. Details are provided below.

Step 1. A network device sends SRS configuration information to a terminal device. A quantity of antenna ports that is indicated in antenna port information needs to be not greater than a quantity of antennas of the terminal device that can simultaneously perform uplink transmission.

Optionally, the network device configures a period of an SRS. The period of the SRS may be an absolute time, for example, 1 ms, 0.5 ms, or 10 ms. In addition, the network device indicates, by using signaling, an identifier corresponding to the period. The network device may alternatively configure a relative time, for example, a quantity of slots such as one slot or two slots. Alternatively, the network device may configure the period as a value smaller than 1, for example, 0.5 slots, so as to enable the SRS to be sent for a plurality of times in one slot.

Optionally, the terminal device needs to report, in a message 3 (Msg3) or higher layer signaling such as RRC signaling, a maximum quantity of antennas that can perform sending simultaneously. In this embodiment, a quantity of ports is u = 2.

Optionally, the network device sends signaling to the terminal device. The signaling is used to instruct the terminal device to send an SRS in a manner of SRS antenna switchover, or instruct the terminal device to support an antenna selection function.

Optionally, the network device notifies the terminal device of a total quantity of available antennas. For example, in this embodiment, the total quantity of antennas is v = 4. If u = 2, the terminal device performs sending by using two antennas at a time, and sends SRSs on four antennas in total.

Step 2. The terminal device sends SRSs on v antennas in a time division manner based on the configuration information of the network device, and sends SRSs by using u ports or u antennas at the same time. An example in which u = 2 and v = 4 is used in this step. Specifically, there are the following solutions.

Solution 1: An antenna identifier may be denoted as $a(n_{SRS})$. $n_{SRS}$ is determined based on a quantity of times of sending an uplink reference signal or based on at least one of a frame number, a subframe number, a slot number, or a symbol number of a current SRS, a quantity of symbols of an SRS resource, and a period of the SRS. Alternatively, $n_{SRS}$ represents a count of current SRS transmission within a period of time. For example, $n_{SRS}$ is the quantity of times of sending the uplink reference signal or the quantity of times minus 1, or $n_{SRS}$ is a count of a time-domain location of the SRS in a cycle of a frame or a frame number. For example, in LTE, $n_{SRS}$ is defined as follows:

$$n_{SRS} = \begin{cases} 2N_{SP}n_f + 2(N_{SP} - 1)\left\lfloor \frac{n_s}{10} \right\rfloor + \left\lfloor \frac{T_{offset}}{T_{offset_{max}}} \right\rfloor & \text{The period of the SRS is 2 ms in TDD.} \\ \left\lfloor (n_f \times 10 + \lfloor n_s/2 \rfloor)/T_{SRS} \right\rfloor & \text{Other cases} \end{cases}$$

where $N_{SP}$ is a quantity of times of downlink-to-uplink switchover in one frame, $n_f$ is a frame number, $n_s$ is a slot number in a frame, $T_{SRS}$ is the period of the SRS, $T_{offset}$ is determined based on a symbol location in a special subframe and a symbol quantity of the SRS, and $T_{offset\_max}$ is a maximum value of $T_{offset}$. It can be learned that $n_{SRS}$ in this calculation formula is a count of the currently sent SRS in all locations that satisfy the period of the SRS and that are in a period of 0-1023 of a frame number.

When no frequency hopping is performed:

$$a(n_{SRS}) = 2 \cdot [n_{SRS} \bmod 2] + \gamma \quad (1)$$

When frequency hopping is performed:

$$a(n_{SRS}) = \begin{cases} 2 \cdot [(n_{SRS} + \lfloor n_{SRS}/2 \rfloor + \beta \cdot \lfloor n_{SRS}/K \rfloor) mod\ 2] + \gamma & K \text{ is an even number.} \\ 2 \cdot [n_{SRS} mod\ 2]\ + \gamma, & K \text{ is an odd number.} \end{cases} \quad (2)$$

where $\beta = \begin{cases} 1, & K mod\ 4 = 0 \\ 0, & others \end{cases}$, and $\gamma = 0,1,$

where K is a total quantity of hops of the frequency hopping. Herein, a frequency hopping scenario in which K = 2 is used as an example. The following table shows a relationship between an antenna port, a quantity of transmission times, and a transmission bandwidth.

**Table 7**

| $n_{SRS}$ | First bandwidth of frequency hopping | Second bandwidth of frequency hopping |
|---|---|---|
| 0 | Antennas {0, 1} | |
| 1 | | Antennas {2, 3} |
| 2 | Antennas {2, 3} | |
| 3 | | Antennas {0, 1} |

It can be learned that because $\gamma$ has two values, two antennas that perform transmission simultaneously may be obtained based on one $n_{SRS}$ and calculation of (1). Therefore, in first transmission, the terminal device sends an SRS in a first frequency hopping location by using the antennas 0 and 1; in second transmission, the terminal device sends an SRS in a second frequency hopping location by using the antennas 2 and 3; in third transmission, the terminal device sends an SRS in the first frequency hopping location by using the antennas 2 and 3; and in fourth transmission, the terminal device sends an SRS in the second frequency hopping location by using the antennas 0 and 1.

Optionally, this solution may be applied to a case in which there are u transmit antennas and 2u receive antennas. In this case, (1) and (2) may change to the following. When no frequency hopping is performed:

$$a(n_{SRS}) = u \cdot [n_{SRS}\ mod\ 2] + \gamma \quad (3)$$

$$a(n_{SRS}) = \begin{cases} u \cdot [(n_{SRS} + \lfloor n_{SRS}/2 \rfloor + \beta \cdot \lfloor n_{SRS}/K \rfloor) mod\ 2] + \gamma & K \text{ is an even number.} \\ u \cdot [n_{SRS} mod\ 2]\ + \gamma & K \text{ is an odd number.} \end{cases} \quad (4)$$

where $\beta = \begin{cases} 1, & K mod\ 4 = 0 \\ 0, & others \end{cases}$, and $\gamma = 0,1,...,u - 1$.

Optionally, this solution is not limited to a correspondence between $\alpha(n_{SRS})$ and $n_{SRS}$ in the foregoing formulas. For example, there may be the following expression of a correspondence between $\alpha(n_{SRS})$ and $n_{SRS}$:

$$a(n_{SRS}) = u \cdot f(n_{SRS}) + \gamma \quad (5)$$

where $\gamma = 0, 1, ..., u-1$, and $f(n_{SRS})$ is a function of $n_{SRS}$.

Optionally, $\gamma$ and $\beta$ in this solution may have other values. For example, $\gamma = 0,2$ or $\gamma = 0,2, ... 2u - 2$. This is not limited herein. Alternatively, $\gamma$ and $\beta$ may be values configured by the network device by using signaling. The signaling may be RRC signaling, MAC CE signaling, or a DCI.

Solution 2: An antenna identifier may be denoted as $\alpha(n_{SRS})$. For $n_{SRS}$, refer to the definition in Solution 1.

When no frequency hopping is performed:

$$\hat{a}(n_{SRS}) = n_{SRS}\ mod\ 2 \quad (6)$$

When frequency hopping is performed:

$$\hat{a}(n_{SRS}) = \begin{cases} (n_{SRS} + \lfloor n_{SRS}/2 \rfloor + \beta \cdot \lfloor n_{SRS}/K \rfloor) mod\ 2. & K \text{ is an even number.} \\ n_{SRS} mod\ 2. & K \text{ is an odd number.} \end{cases} \quad (7)$$

where $\beta = \begin{cases} 1, & K mod\ 4 = 0 \\ 0, & others \end{cases}$, and a value of $\alpha(n_{SRS})$ is obtained as follows:

$$a(n_{SRS}) = \begin{cases} 0,1, & \hat{a}(n_{SRS}) = 0 \\ 2,3, & \hat{a}(n_{SRS}) = 1 \end{cases} \quad (8)$$

where K is a total quantity of hops of the frequency hopping. Herein, a frequency hopping scenario in which K = 2 is used as an example. The following table shows a relationship between an antenna port, a quantity of transmission times, and a transmission bandwidth.

**Table 8**

| $n_{SRS}$ | First bandwidth of frequency hopping | Second bandwidth of frequency hopping |
|---|---|---|
| 0 | Antennas {0, 1} | |
| 1 | | Antennas {2, 3} |
| 2 | Antennas {2, 3} | |
| 3 | | Antennas {0, 1} |

It can be learned that because $\gamma$ has two values, two antennas that perform transmission simultaneously may be obtained based on one $n_{SRS}$ and calculation of (1). Therefore, in first transmission, the terminal device sends an SRS in a first frequency hopping location by using the antennas 0 and 1; in second transmission, the terminal device sends an SRS in a second frequency hopping location by using the antennas 2 and 3; in third transmission, the terminal device sends an SRS in the first frequency hopping location by using the antennas 2 and 3; and in fourth transmission, the terminal device sends an SRS in the second frequency hopping location by using the antennas 0 and 1.

Optionally, a correspondence between $\hat{\alpha}(n_{SRS})$ and $\alpha(n_{SRS})$ in the formula (8) in this solution may be expressed by using a table or another formula. This is not limited herein. The correspondence between $\hat{\alpha}(n_{SRS})$ and $\alpha(n_{SRS})$ may be alternatively a value configured by the network device by using signaling. The signaling may be RRC signaling, MAC CE signaling, or a DCI.

Optionally, this solution may be applied to a case in which there are u transmit antennas and 2u receive antennas. In this case, (8) may change to the following:

$$a(n_{SRS}) = \begin{cases} 0,1 \dots u - 1, & \hat{a}(n_{SRS}) = 0 \\ u, u + 1, \dots, 2u - 1, & \hat{a}(n_{SRS}) = 1 \end{cases} \quad (9)$$

Likewise, optionally, a correspondence between $\hat{\alpha}(n_{SRS})$ and $\alpha(n_{SRS})$ in the formula (9) in this solution may be expressed by using a table or another formula. This is not limited herein. The correspondence between $\hat{\alpha}(n_{SRS})$ and $\alpha(n_{SRS})$ may be alternatively a value configured by the network device by using signaling. The signaling may be RRC signaling, MAC CE signaling, or a DCI.

Optionally, this solution is not limited to a correspondence between $\alpha(n_{SRS})$ and $n_{SRS}$ in the formulas (6) and (7) either.

Optionally, $\hat{\alpha}(n_{SRS})$ in this solution may be understood as an identifier of an antenna group.

Optionally, according to Solution 1 or Solution 2 and another feasible solution, the network device configures a plurality of SRS resources for the terminal device by using the SRS configuration information. For example, the plurality of SRS resources form one SRS resource group. Therefore, that the network device instructs the terminal device to send an SRS in a manner of SRS antenna switchover, or instructs the terminal device to support an antenna selection function may be understood as configuring that an SRS is sent in a manner of antenna switchover in the SRS resource group.

Optionally, in this case, at least one different antenna is used to send SRSs on at least two SRS resources in the SRS resource group. For example, a different antenna may be used to send an SRS on each SRS resource in the SRS resource group. Optionally, there is a correspondence between an SRS resource and an antenna sending an SRSS on the SRS resource. For example, for a user with two transmit antennas and four receive antennas, one SRS resource group may include two SRS resources. A first SRS resource is corresponding to two antennas, for example, antennas 0 and 1. A second SRS resource is corresponding to the other two antennas, for example, antennas 2 and 3. Therefore, a time-frequency location to which the SRS resource is mapped may be determined based on a transmit antenna determined in a transmission scheme with SRS antenna switchover, for example, Solution 1 and Solution 2. For example, when it is determined that transmit antennas are 0 and 1, a sent SRS belongs to the first SRS resource, for example, an SRS resource 0; or when it is determined that transmit antennas are 2 and 3, a sent SRS belongs to the other SRS resource, for example, an SRS resource 1. It should be noted that, because the transmission scheme with SRS antenna switchover may be used to determine an antenna used by an SRS, an SRS resource or a number of an SRS resource may also be determined by using a same calculation formula. Forexample, a method for determining an SRS resource based on the formulas (1) and (2) is an follows:

When no frequency hopping is performed:

$$b(n_{SRS}) = n_{SRS} \ mod \ 2 \quad (1)$$

When frequency hopping is performed:

$$b(n_{SRS}) = \begin{cases} (n_{\text{SRS}} + \lfloor n_{\text{SRS}}/2 \rfloor + \beta \cdot \lfloor n_{\text{SRS}}/K \rfloor) mod \ 2 & K \ \text{is an even number.} \\ n_{\text{SRS}} mod \ 2 & K \ \text{is an odd number.} \end{cases} \quad (2)$$

where $\beta = \begin{cases} 1, & K mod \ 4 = 0 \\ 0, & \text{others} \end{cases}$.

$b(n_{SRS})$ is an identifier or a relative identifier of an SRS resource, or an identifier of an SRS resource in an SRS resource group. It should be noted that $n_{SRS}$ herein is determined based on a total quantity of times of sending SRSs on an SRS resource in the SRS resource group, or determined based on at least one of a frame number, a subframe number, a slot number, or a symbol number of an SRS resource in the current SRS resource group, a quantity of symbols of an SRS resource, and a period of an SRS. Alternatively, $n_{SRS}$ represents a count of current SRS transmission on all SRS resources in the SRS resource group within a period of time. For details, refer to the descriptions in Solution 1. The SRS refers to SRSs on all the SRS resources in the SRS resource group.

In the foregoing example, $n_{SRS}$ is not an SRS count of a specific SRS resource in the SRS resource group, but is a count of SRSs on all the SRS resources in the SRS resource group. Optionally, $n_{SRS}$ may be alternatively an SRS count of a specific SRS resource in the SRS resource group. To be specific, $n_{SRS}$ is determined based on a quantity of times of sending SRSs on one SRS resource in the SRS resource group, or determined based on at least one of a frame number, a subframe number, a slot number, or a symbol number of an SRS resource in the current SRS resource group, a quantity of symbols of an SRS resource, and a period of an SRS. Alternatively, $n_{SRS}$ represents a count of current SRS transmission on one SRS resource in the SRS resource group within a period of time. For details, refer to the descriptions in Solution 1. The SRS is an SRS on one SRS resource in the SRS resource group. In this case, time-domain and frequency-domain resources are configured for a plurality of SRS resources in the SRS resource group, different SRS resources are used to measure a same frequency-domain resource, and different SRS resources are corresponding to different antennas or antenna groups, to switch SRS transmit antennas on different SRS resources. For example, it is configured that the SRS resource 0 is corresponding to the antennas 0 and 1, and the SRS resource 1 is corresponding to the antennas 2 and 3. The SRS resource group includes the SRS resource 0 and the SRS resource 1. The network device configures time-frequency locations of the SRS resource 0 and the SRS resource 1, and instructs the terminal device to send an SRS on an SRS resource in the SRS resource group, or on the SRS resource 0 and the SRS resource 1, so as to send SRSs on all antennas through switchover between different SRS resources.

Compared with a solution in LTE, this solution can further support antenna switchover for a terminal device with u Tx (transmit) antennas and v Rx (receive) antennas, where u > 1 or v > 2, and u < v.

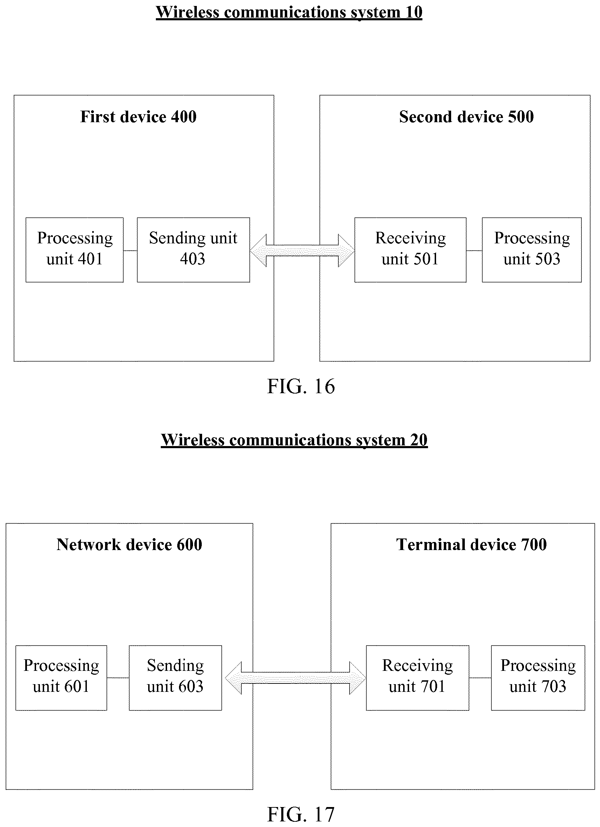

FIG. 16 shows a wireless communications system, a terminal, and a network device provided in this application. The wireless communications system 10 includes a first device 400 and a second device 500. In an uplink transmission process, the first device 400 may be the terminal 200 in the embodiment of FIG. 4, and the second device 500 may be the network device 300 in the embodiment of FIG. 5. In a downlink transmission process, the first device 400 may be the network device 300 in the embodiment of FIG. 5, and the second device 500 may be the terminal 200 in the embodiment of FIG. 4. The wireless communications system 10 may be the wireless communications system 100 shown in FIG. 3. The following separately provides descriptions.

As shown in FIG. 16, the first device 400 may include a processing unit 401 and a sending unit 403.

The processing unit 401 may be configured to map a first reference signal to a first symbol. The first reference signal is used for phase tracking. The first symbol includes a symbol that carries a data signal and that precedes a second symbol in a time-domain unit. The second symbol is the 1st symbol carrying a demodulation reference signal in the time-domain unit. Alternatively, the second symbol is a plurality of consecutive symbols in the time-domain unit, and the plurality of consecutive symbols include the 1st symbol carrying the demodulation reference signal.

The sending unit 403 may be configured to send the first reference signal to the second device 500.

The processing unit 401 may map a PT-RS according to the time-domain PT-RS mapping rules described in Embodiment 1 to Embodiment 3. For details, refer to Embodiment 1 to Embodiment 3. Details are not described herein again.

It can be understood that for specific implementations of the function units included in the first device 400, reference may be made to the foregoing embodiments. Details are not described herein again.

As shown in FIG. 16, the second device 500 may include a receiving unit 501 and a processing unit 503.

The receiving unit 501 may be configured to receive a first reference signal sent by the first device. The first reference signal is used for phase tracking. The first reference signal is mapped to a first symbol. The first symbol includes a symbol that carries a data signal and that precedes a second symbol. The second symbol is the 1st symbol carrying a demodulation reference signal in a time-domain unit. Alternatively, the second symbol is a plurality of consecutive symbols in a time-domain unit, and the plurality of consecutive symbols include the 1st symbol carrying the demodulation reference signal.

The processing unit 503 may be configured to perform phase tracking by using the first reference signal.

For a time-domain PT-RS mapping rule, refer to Embodiment 1 to Embodiment 3. Details are not described herein again.

It can be understood that for specific implementations of the function units included in the second device 500, reference may be made to the foregoing embodiments. Details are not described herein again.

FIG. 17 shows a wireless communications system, a terminal, and a network device provided in this application. The wireless communications system 20 includes a network device 600 and a terminal device 700. The network device 600 may be the network device 300 in the embodiment of FIG. 5, and the terminal device 700 may be the terminal 200 in the embodiment of FIG. 4. The wireless communications system 20 may be the wireless communications system 100 shown in FIG. 3. The following separately provides descriptions.

As shown in FIG. 17, the network device 600 may include a processing unit 601 and a sending unit 603.

The processing unit 601 may be configured to generate first indication information. The first indication information indicates a location of a time-frequency resource occupied by at least two groups of first reference signals. Antenna ports separately associated with the at least two groups of first reference signals are not quasi-co-located.

The sending unit 603 may be configured to send the first indication information.

The sending unit 603 may be further configured to send a data signal. The data signal is not mapped to the time-frequency resource occupied by the at least two groups of first reference signals.

It can be understood that for specific implementations of the function units included in the network device 600, reference may be made to the embodiment of FIG. 14 or FIG. 15. Details are not described herein again.

As shown in FIG. 17, the terminal device 700 may include a receiving unit 701 and a processing unit 703.

The receiving unit 701 may be configured to receive first indication information. The first indication information indicates a location of a time-frequency resource occupied by at least two groups of first reference signals. Antenna ports separately associated with the at least two groups of first reference signals are not quasi-co-located.

The processing unit 703 may be configured to determine, based on the first indication information, the time-frequency resource occupied by at least two groups of first reference signals.

The receiving unit 701 may be further configured to receive a data signal. The data signal is not mapped to the time-frequency resource occupied by the at least two groups of first reference signals.

It can be understood that for specific implementations of the function units included in the terminal device 700, reference may be made to the embodiment of FIG. 14 or FIG. 15. Details are not described herein again.

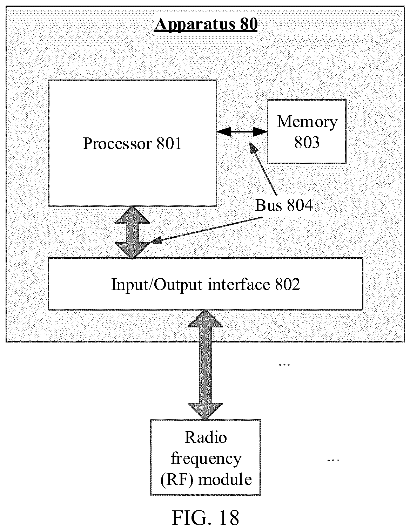

FIG. 18 is a schematic structural diagram of an apparatus according to this application. As shown in FIG. 18, the apparatus 80 may include a processor 801 and one or more interfaces 802 coupled to the processor 801. Optionally, the apparatus 80 may further include a memory 803. Optionally, the apparatus 80 may be a chip.

The processor 801 may be configured to read and execute a computer readable instruction. In specific implementation, the processor 801 may mainly include a controller, an arithmetic unit, and a register. The controller is mainly responsible for decoding an instruction and sending a control signal for an operation corresponding to the instruction. The arithmetic unit is mainly responsible for performing a fixed-point or floating-point arithmetic operation, a shift operation, a logic operation, and the like, or may perform an address operation and address translation. The register is mainly responsible for storing a register operand, an intermediate operation result, and the like that are temporarily stored in an instruction execution process. In actual implementation, a hardware architecture of the processor 801 may be an application-specific integrated circuit (Application-Specific Integrated Circuit, ASIC) architecture, an MIPS architecture, an ARM architecture, an NP architecture, or the like. The processor 801 may have a single core or a plurality of cores.

The memory 803 may be configured to store program code including a computer accessible instruction, and may be further configured to store input/output data of the processor 801.

The input/output interface 802 may be configured to input to-be-processed data to the processor 801, and may output a processing result of the processor 801. In specific implementation, the interface 802 may be a general purpose input/output (General Purpose Input/Output, GPIO) interface, and may be connected to a plurality of peripheral devices (for example, a display (LCD), a camera, and a radio frequency module). The interface 802 may further include a plurality of independent interfaces, for example, an Ethernet interface, an LCD interface, and a camera interface, which are responsible for communication between different peripheral devices and the processor 801.

In this application, the processor 801 may be configured to invoke, from the memory, an implementation program, on a first device side, of the signal transmission method provided in the embodiment of FIG. 8, or an implementation program of the embodiment of FIG. 14 or FIG. 15 on a network device side; and execute an instruction included in the program. The interface 802 may be configured to output an execution result of the processor 801.

It should be noted that a function corresponding to each of the processor 801 and the interface 802 may be implemented by using a hardware design, or may be implemented by using a software design, or may be implemented by combining software and hardware. This is not limited herein.

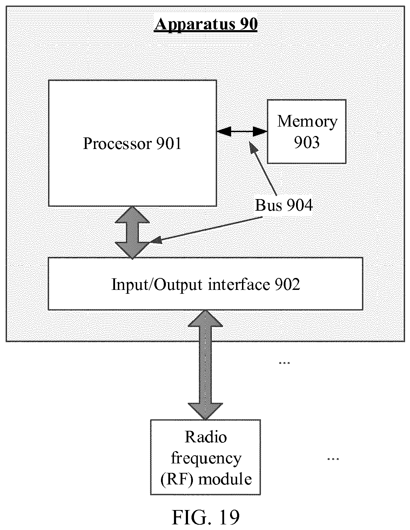

FIG. 19 is a schematic structural diagram of an apparatus according to this application. As shown in FIG. 19, the apparatus 90 may include a processor 901 and one or more interfaces 901 coupled to the processor 902. Optionally, the apparatus 90 may further include a memory 903. Optionally, the apparatus 90 may be a chip.

The processor 901 may be configured to read and execute a computer readable instruction. In specific implementation, the processor 901 may mainly include a controller, an arithmetic unit, and a register. The controller is mainly responsible for decoding an instruction and sending a control signal for an operation corresponding to the instruction. The arithmetic unit is mainly responsible for performing a fixed-point or floating-point arithmetic operation, a shift operation, a logic operation, and the like, or may perform an address operation and address translation. The register is mainly responsible for storing a register operand, an intermediate operation result, and the like that are temporarily stored in an instruction execution process. In specific implementation, a hardware architecture of the processor 901 may be an application-specific integrated circuit (Application-Specific Integrated Circuit, ASIC) architecture, or the like. The processor 901 may have a single core or a plurality of cores.

The memory 903 may be configured to store program code including a computer accessible instruction, and may be further configured to store input/output data of the processor 901.

The input/output interface 902 may be configured to input to-be-processed data to the processor 901, and may output a processing result of the processor 901.

In this application, the processor 901 may be configured to invoke, from the memory, an implementation program, on a second device side, of the signal transmission method provided in the embodiment of FIG. 8, or an implementation program of the embodiment of FIG. 14 or FIG. 15 on a terminal device side; and execute an instruction included in the program. The interface 902 may be configured to output an execution result of the processor 901.

It should be noted that a function corresponding to each of the processor 901 and the interface 902 may be implemented by using a hardware design, or may be implemented by using a software design, or may be implemented by combining software and hardware. This is not limited herein.

To sum up, according to the technical solutions provided in this application, it can be ensured that a PT-RS is also mapped to a symbol to which a data channel is mapped and that precedes a symbol carrying a DMRS, thereby ensuring phase noise estimation performance.

A person of ordinary skill in the art may understand that all or some of the processes of the methods in the embodiments may be implemented by a computer program instructing relevant hardware. The program may be stored in a computer readable storage medium. When being executed, the program may include the procedures of the foregoing method embodiments. The storage medium includes any medium that can store program code, such as a ROM, a random access memory RAM, a magnetic disk, or a compact disc.

**Claims**

**1.** A signal transmission method performed by a first device, the method comprising:

> • mapping (S101) a first reference signal, the first reference signal being a phase tracking reference signal, PT-RS, to a first symbol according to a time-domain density of the first reference signal and according to a time-domain mapping rule of the first reference signal, the time-domain mapping rule being predefined by a protocol,

○ wherein the time-domain density is determined based on at least one of a cyclic prefix, CP, type of the first reference signal, a subcarrier spacing of the first reference signal, and a modulation and coding scheme, MCS, of the first reference signal,

- wherein different CP types correspond to different time-domain densities of the first reference signal,
- wherein different subcarrier spacings correspond to different time-domain densities of the first reference signal, and
- wherein different MCSs correspond to different time-domain densities of the first reference signal,

○ wherein the first symbol is a symbol that carries a physical downlink shared channel, PDSCH, and a physical downlink control channel, PDCCH, and that precedes, in the time-domain, a second symbol, and the second symbol is, in the time-domain, a starting symbol carrying a demodulation reference signal, DMRS,
○ wherein the first reference signal, the PDSCH and the PDCCH are arranged in a manner of frequency-division multiplexing in the first symbol, and, in the frequency-domain, the first reference signal is mapped to a resource other than a resource for the PDCCH in the first symbol;

• sending (S 102) the first reference signal to a second device on the first symbol.

2. The method according to claim 1, wherein starting from a starting symbol carrying PDSCH, the first reference signal is evenly mapped to one or more symbols preceding the second symbol.

3. The method according to claim 1, further comprising:
mapping the first reference signal to a resource other than a first resource that comprises one or more of:

○ a synchronization signal block, a channel state information reference signal, or a demodulation reference signal.

4. The method according to claim 1, wherein an index of the first symbol used to carry the first reference signal and that precedes the second symbol is related to a first difference, and the first difference is a difference between an index of the starting symbol carrying the DMRS and an index of a starting symbol carrying PDSCH.

5. The method according to claim 1, wherein, in the time domain, the first reference signal is evenly mapped to one or more symbols whose index is larger than an index of the second symbol.

6. The method according to claim 5, wherein the first reference signal is mapped to a last symbol that carries the data signal and that follows the second symbol, and, in time domain, the first reference signal is evenly mapped to one or more symbols following the second symbol in descending order of index values of symbols.

7. A first device configured to perform the method according to any one of claims 1 - 6.

8. A signal reception method performed by a second device, the method comprising:

• determining a first symbol for carrying a first reference signal, the first reference signal being a phase tracking reference signal, PT-RS, based on a time-domain density of the first reference signal and according to a time-domain mapping rule of the first reference signal, the time-domain mapping rule being predefined by a protocol,

○ wherein the time-domain density is determined based on at least one of a cyclic prefix, CP, type of the first reference signal, a subcarrier spacing of the first reference signal, and a modulation and coding scheme, MCS, of the first reference signal,

- wherein different CP types correspond to different time-domain densities of the first reference signal,
- wherein different subcarrier spacings correspond to different time-domain densities of the first reference signal, and
- wherein different MCSs correspond to different time-domain densities of the first reference signal,

○ wherein the first symbol is a symbol that carries a physical downlink shared channel, PDSCH, and a physical downlink control channel, PDCCH, and that precedes, in the time-domain, a second symbol, and the second symbol is, in the time-domain, a starting symbol carrying a demodulation reference signal, DMRS,
○ wherein the first reference signal, the PDSCH and the PDCCH are arranged in a manner of frequency-division multiplexing in the first symbol, and, in the frequency-domain, the first reference signal is mapped to a resource other than a resource for the PDCCH in the first symbol;

• receiving the first reference signal on the first symbol from a first device;
• performing phase tracking based on the first reference signal.

9. The method according to claim 8, wherein starting from a starting symbol carrying PDSCH, the first reference signal is evenly mapped to one or more symbols preceding the second symbol.

10. The method according to claim 8, wherein:
the first reference signal is mapped to a resource other than a first resource that comprises one or more of:

◦ a synchronization signal block, a channel state information reference signal, or a demodulation reference signal.

11. The method according to claim 8, wherein an index of the first symbol used to carry the first reference signal and that precedes the second symbol is related to a first difference, and the first difference is a difference between an index of the starting symbol carrying the DMRS and an index of a starting symbol carrying PDSCH.

12. The method according to claim 8, wherein, in the time domain, the first reference signal is evenly mapped to one or more symbols whose index is larger than an index of the second symbol.

13. The method according to claim 12, wherein the first reference signal is mapped to a last symbol that carries the data signal and that follows the second symbol, and, in time domain, the first reference signal is evenly mapped to one or more symbols following the second symbol in descending order of index values of symbols.

14. A second device configured to perform the method according to any one of claims 8 - 13.

15. A computer readable storage medium, wherein the readable storage medium stores program code, and the program code comprises an executable instruction for performing the method according to any one of claims 1 to 6 or any one of claim 8 to 13.


**Patentansprüche**

1. Signalübertragungsverfahren, das durch eine erste Vorrichtung durchgeführt wird, wobei das Verfahren Folgendes umfasst:

• Zuordnen (S 101) eines ersten Referenzsignals, wobei das erste Referenzsignal ein Phasennachverfolgungsreferenzsignal (phase tracking reference signal - PT-RS) für ein erstes Symbol gemäß einer Zeitbereichsdichte des ersten Referenzsignals und gemäß einer Zeitbereichszuordnungsregel des ersten Referenzsignals ist, wobei die Zeitbereichszuordnungsregel durch ein Protokoll vordefiniert ist,

◦ wobei die Zeitbereichsdichte basierend auf einem zyklischen Präfix(cyclic prefix- CP)-Typ des ersten Referenzsignals, einem Unterträgerabstand des ersten Referenzsignals und/oder einem Modulations- und Codierschema (MCS) des ersten Referenzsignals bestimmt wird,

▪ wobei unterschiedliche CP-Typen unterschiedlichen Zeitbereichsdichten des ersten Referenzsignals entsprechen,
▪ wobei unterschiedliche Unterträgerabstände unterschiedlichen Zeitbereichsdichten des ersten Referenzsignals entsprechen, und
▪ wobei unterschiedliche MCSs unterschiedlichen Zeitbereichsdichten des ersten Referenzsignals entsprechen,

◦ wobei das erste Symbol ein Symbol ist, das einen gemeinsam genutzten physikalischen Downlink-Kanal (physical downlink shared channel - PDSCH) und einen physikalischen Downlink-Steuerkanal (physical downlink control channel - PDCCH) trägt und das in dem Zeitbereich einem zweiten Symbol vorausgeht und das zweite Symbol in dem Zeitbereich ein Ausgangssymbol ist, das ein Demodulationsreferenzsignal (DMRS) trägt,

◦ wobei das erste Referenzsignal, der PDSCH und der PDCCH in einer Art von Frequenzmultiplexverfahren in dem ersten Symbol angeordnet sind, und in dem Frequenzbereich das erste Referenzsignal einer anderen Ressource als einer Ressource für den PDCCH in dem ersten Symbol zugeordnet wird;

• Senden (S 102) des ersten Referenzsignals an eine zweite Vorrichtung auf dem ersten Symbol.

2. Verfahren nach Anspruch 1, wobei ausgehend von einem Ausgangssymbol, das den PDSCH trägt, das erste Referenzsignal gleichmäßig einem oder mehreren Symbolen zugeordnet wird, die dem zweiten Symbol vorausgehen.

3. Verfahren nach Anspruch 1, das ferner Folgendes umfasst:
Zuordnen des ersten Referenzsignals zu einer anderen Ressource als einer ersten Ressource, die Folgendes umfasst:

o einen Synchronisationssignalblock, ein Kanalzustandsinformationsreferenzsignal und/oder ein Demodulationsreferenzsignal.

4. Verfahren nach Anspruch 1, wobei ein Index des ersten Symbols, der verwendet wird, um das erste Referenzsignal zu tragen, und der dem zweiten Symbol vorausgeht, auf einen ersten Unterschied bezogen ist, und der erste Unterschied ein Unterschied zwischen einem Index des Ausgangssymbols, das das DMRS trägt, und einem Index eines Ausgangssymbols ist, das den PDSCH trägt.

5. Verfahren nach Anspruch 1, wobei in dem Zeitbereich das erste Referenzsignal gleichmäßig einem oder mehreren Symbolen zugeordnet wird, deren Index größer als ein Index des zweiten Symbols ist.

6. Verfahren nach Anspruch 5, wobei das erste Referenzsignal einem letzten Symbol zugeordnet wird, das das Datensignal trägt und das dem zweiten Symbol folgt, und in dem Zeitbereich das erste Referenzsignal gleichmäßig einem oder mehreren Symbolen zugeordnet wird, das dem zweiten Symbol in absteigender Reihenfolge von Indexwerten von Symbolen folgt.

7. Erste Vorrichtung, die konfiguriert ist, um das Verfahren nach einem der Ansprüche 1-6 durchzuführen.

8. Signalempfangsverfahren, das durch eine zweite Vorrichtung durchgeführt wird, wobei das Verfahren Folgendes umfasst:

• Bestimmen eines ersten Symbols zum Tragen eines ersten Referenzsignals, wobei das erste Referenzsignal ein Phasennachverfolgungsreferenzsignal (PT-RS) ist, basierend auf einer Zeitbereichsdichte des ersten Referenzsignals und gemäß einer Zeitbereichszuordnungsregel des ersten Referenzsignals, wobei die Zeitbereichszuordnungsregel durch ein Protokoll vordefiniert ist,

◦ wobei die Zeitbereichsdichte basierend auf einem zyklischen Präfix(CP)-Typ des ersten Referenzsignals, einem Unterträgerabstand des ersten Referenzsignals und/oder einem Modulations- und Codierschema (MCS) des ersten Referenzsignals bestimmt wird,

▪ wobei unterschiedliche CP-Typen unterschiedlichen Zeitbereichsdichten des ersten Referenzsignals entsprechen,
▪ wobei unterschiedliche Unterträgerabstände unterschiedlichen Zeitbereichsdichten des ersten Referenzsignals entsprechen, und
▪ wobei unterschiedliche MCSs unterschiedlichen Zeitbereichsdichten des ersten Referenzsignals entsprechen,

◦ wobei das erste Symbol ein Symbol ist, das einen gemeinsam genutzten physikalischen Downlink-Kanal (physical downlink shared channel - PDSCH) und einen physikalischen Downlink-Steuerkanal (physical downlink control channel - PDCCH) trägt und das in dem Zeitbereich einem zweiten Symbol vorausgeht und das zweite Symbol in dem Zeitbereich ein Ausgangssymbol ist, das ein Demodulationsreferenzsignal (DMRS) trägt,
◦ wobei das erste Referenzsignal, der PDSCH und der PDCCH in einer Art von Frequenzmultiplexverfahren in dem ersten Symbol angeordnet sind, und in dem Frequenzbereich das erste Referenzsignal einer anderen Ressource als einer Ressource für den PDCCH in dem ersten Symbol zugeordnet wird;

• Empfangen des ersten Referenzsignals auf dem ersten Symbol von einer ersten Vorrichtung;
• Durchführen einer Phasennachverfolgung basierend auf dem ersten Referenzsignal.

9. Verfahren nach Anspruch 8, wobei ausgehend von einem Ausgangssymbol, das den PDSCH trägt, das erste Referenzsignal gleichmäßig einem oder mehreren Symbolen zugeordnet wird, die dem zweiten Symbol vorausgehen.

10. Verfahren nach Anspruch 8, wobei:
das erste Referenzsignal einer anderen Ressource als einer ersten Ressource zugeordnet wird, die Folgendes umfasst:

∘ einen Synchronisationssignalblock, ein Kanalzustandsinformationsreferenzsignal und/oder ein Demodulationsreferenzsignal.

11. Verfahren nach Anspruch 8, wobei ein Index des ersten Symbols, der verwendet wird, um das erste Referenzsignal zu tragen, und der dem zweiten Symbol vorausgeht, auf einen ersten Unterschied bezogen ist und der erste Unterschied ein Unterschied zwischen einem Index des Ausgangssymbols, das das DMRS trägt, und einem Index eines Ausgangssymbols ist, das den PDSCH trägt.

12. Verfahren nach Anspruch 8, wobei in dem Zeitbereich das erste Referenzsignal gleichmäßig einem oder mehreren Symbole zugeordnet wird, deren Index größer als ein Index des zweiten Symbols ist.

13. Verfahren nach Anspruch 12, wobei das erste Referenzsignal einem letzten Symbol zugeordnet wird, das das Datensignal trägt und das dem zweiten Symbol folgt, und in dem Zeitbereich das erste Referenzsignal gleichmäßig einem oder mehreren Symbolen zugeordnet wird, das dem zweiten Symbol in absteigender Reihenfolge von Indexwerten von Symbolen folgt.

14. Zweite Vorrichtung, die konfiguriert ist, um das Verfahren nach einem der Ansprüche 8-13 durchzuführen.

15. Computerlesbares Speichermedium, wobei das lesbare Speichermedium Programmcode speichert und der Programmcode eine ausführbare Anweisung zum Durchführen des Verfahrens nach einem der Ansprüche 1 bis 6 oder nach einem der Ansprüche 8 bis 13 umfasst.

**Revendications**

1. Procédé de transmission de signal réalisé par un premier dispositif, le procédé comprenant :

• le mappage (S 101) d'un premier signal de référence, le premier signal de référence étant un signal de référence de suivi de phase, PT-RS, sur un premier symbole selon une densité de domaine temporel du premier signal de référence et selon une règle de mappage de domaine temporel du premier signal de référence, la règle de mappage de domaine temporel étant prédéfinie par un protocole,

∘ la densité de domaine temporel étant déterminée sur la base d'un type de préfixe cyclique, CP, du premier signal de référence et/ou un espacement de sous-porteuse du premier signal de référence et/ou un schéma de modulation et de codage, MCS, du premier signal de référence,

▪ différents types de CP correspondant à différentes densités de domaine temporel du premier signal de référence,
▪ différents espacements de sous-porteuses correspondant à différentes densités de domaine temporel du premier signal de référence, et
▪ différents MCS correspondant à différentes densités de domaine temporel du premier signal de référence,

∘ le premier symbole étant un symbole qui transporte un canal physique partagé de liaison descendante, PDSCH, et un canal physique de commande de liaison descendante, PDCCH, et qui précède, dans le domaine temporel, un second symbole, et le second symbole étant, dans le domaine temporel, un symbole de départ transportant un signal de référence de démodulation, DMRS,
∘ le premier signal de référence, le PDSCH et le PDCCH étant disposés d'une manière de multiplexage par répartition en fréquence dans le premier symbole, et, dans le domaine fréquentiel, le premier signal de référence étant mappé sur une ressource autre qu'une ressource pour le PDCCH dans le premier symbole ;

• l'envoi (S 102) du premier signal de référence à un second dispositif sur le premier symbole.

**2.** Procédé selon la revendication 1, à partir d'un symbole de départ transportant le PDSCH, le premier signal de référence étant mappé uniformément sur un ou plusieurs symboles précédant le second symbole.

**3.** Procédé selon la revendication 1, comprenant en outre :
le mappage du premier signal de référence sur une ressource autre qu'une première ressource qui comprend :

◦ un bloc de signal de synchronisation et/ou un signal de référence d'informations d'état de canal et/ou un signal de référence de démodulation.

**4.** Procédé selon la revendication 1, un index du premier symbole utilisé pour transporter le premier signal de référence et qui précède le second symbole étant lié à une première différence, et la première différence étant une différence entre un index du symbole de départ transportant le DMRS et un index d'un symbole de départ transportant le PDSCH.

**5.** Procédé selon la revendication 1, dans le domaine temporel, le premier signal de référence étant mappé uniformément sur un ou plusieurs symboles dont l'index est supérieur à un index du second symbole.

**6.** Procédé selon la revendication 5, le premier signal de référence étant mappé sur un dernier symbole qui transporte le signal de données et qui suit le second symbole, et, dans le domaine temporel, le premier signal de référence étant mappé uniformément sur un ou plusieurs symboles suivant le second symbole dans l'ordre décroissant des valeurs d'index des symboles.

**7.** Premier dispositif, configuré pour réaliser le procédé selon l'une quelconque des revendications 1 à 6.

**8.** Procédé de réception de signal réalisé par un second dispositif, le procédé comprenant :

• la détermination d'un premier symbole permettant de transporter un premier signal de référence, le premier signal de référence étant un signal de référence de suivi de phase, PT-RS, sur la base d'une densité de domaine temporel du premier signal de référence et selon une règle de mappage de domaine temporel du premier signal de référence, la règle de mappage de domaine temporel étant prédéfinie par un protocole,

◦ la densité de domaine temporel étant déterminée sur la base d'un type de préfixe cyclique, CP, du premier signal de référence et/ou d'un espacement de sous-porteuses du premier signal de référence et/ou d'un schéma de modulation et de codage, MCS, du premier signal de référence,

▪ différents types de CP correspondant à différentes densités de domaine temporel du premier signal de référence,
▪ différents espacements de sous-porteuses correspondant à différentes densités de domaine temporel du premier signal de référence, et
▪ différents MCS correspondant à différentes densités de domaine temporel du premier signal de référence,

◦ le premier symbole étant un symbole qui transporte un canal physique partagé de liaison descendante, PDSCH, et un canal physique de commande de liaison descendante, PDCCH, et qui précède, dans le domaine temporel, un second symbole, et le second symbole étant, dans le domaine temporel, un symbole de départ transportant un signal de référence de démodulation, DMRS,
◦ le premier signal de référence, le PDSCH et le PDCCH étant disposés d'une manière de multiplexage par répartition en fréquence dans le premier symbole, et, dans le domaine fréquentiel, le premier signal de référence étant mappé sur une ressource autre qu'une ressource pour le PDCCH dans le premier symbole ;

• la réception du premier signal de référence sur le premier symbole à partir d'un premier dispositif ;
• la réalisation d'un suivi de phase sur la base du premier signal de référence.

**9.** Procédé selon la revendication 8, à partir d'un symbole de départ transportant le PDSCH, le premier signal de référence étant mappé uniformément sur un ou plusieurs symboles précédant le second symbole.

10. Procédé selon la revendication 8 :
le premier signal de référence étant mappé sur une ressource autre qu'une première ressource qui comprend :

◦ un bloc de signal de synchronisation et/ou un signal de référence d'informations d'état de canal et/ou un signal de référence de démodulation.

11. Procédé selon la revendication 8, un index du premier symbole utilisé pour transporter le premier signal de référence et qui précède le second symbole de référence étant lié à une première différence, et la première différence étant une différence entre un index d'un symbole de départ transportant le DMRS et un index d'un symbole de départ transportant le PDSCH.

12. Procédé selon la revendication 8, dans le domaine temporel, le premier signal de référence étant mappé uniformément sur un ou plusieurs symboles dont l'index est supérieur à un index du second symbole.

13. Procédé selon la revendication 12, le premier signal de référence étant mappé sur un dernier symbole qui transporte le signal de donnée et qui suit le second symbole, et, dans le domaine temporel, le premier signal de référence étant mappé uniformément sur un ou plusieurs symboles suivant le second symbole dans l'ordre décroissant des valeurs d'index des symboles.

14. Second dispositif configuré pour réaliser le procédé selon l'une quelconque des revendications 8 à 13.

15. Support de stockage lisible par ordinateur, le support de stockage lisible stockant un code de programme, et le code de programme comprenant une instruction exécutable permettant de réaliser le procédé selon l'une quelconque des revendications 1 à 6 ou l'une quelconque des revendications 8 à 13.

FIG. 1

FIG. 2

Wireless communications system 100

Core network

FIG. 3

EP 3 605 977 B1

FIG. 4

Network device 300

FIG. 5

FIG. 6

FIG. 7

```
┌─────────────────────────┐                    ┌─────────────────────────┐
│      First device       │                    │     Second device       │
└────────────┬────────────┘                    └────────────┬────────────┘
             │                                               │
┌────────────┴─────────────────────────────┐                │
│ S101. Map a first reference signal to a   │                │
│ first symbol, where the first symbol      │                │
│ includes a symbol that carries a data     │                │
│ signal and that precedes a second symbol, │                │
│ the second symbol is at least one         │                │
│ consecutive symbol carrying a DMRS, and   │                │
│ the at least one symbol includes the 1ˢᵗ  │                │
│ symbol carrying the DMRS                  │                │
└────────────┬─────────────────────────────┘                │
             │                                               │
             │  S102. Send the first reference signal        │
             │  (PT-RS)                                      │
             ├──────────────────────────────────────────────▶│
             │                              ┌────────────────┴──────────────┐
             │                              │ S103. Perform phase tracking   │
             │                              │ based on the first reference   │
             │                              │ signal                         │
             │                              └────────────────┬──────────────┘
             │                                               │
```

FIG. 8

RE

RB

f

t (symbol)

0 1 2 3 4 5 6 7 8 9 10 11 12 13

0 1 2 3 4 5 6 7 8 9 10 11 12 13

PDCCH     PDSCH     PT-RS

DMRS     No PDSCH is mapped

FIG. 9A

RB

RE

f

0 1 2 3 4 5 6 7 8 9 10 11 12 13

0 1 2 3 4 5 6 7 8 9 10 11 12 13

t (symbol)

▨ PDCCH          ☐ PDSCH          ⊠ PT-RS

■ DMRS          ▨ No PDSCH is mapped

FIG. 9B

RE

RB

f

0 1 2 3 4 5 6 7 8 9 10 11 12 13

0 1 2 3 4 5 6 7 8 9 10 11 12 13

t (symbol)

PDCCH     PDSCH     PT-RS

DMRS     No PDSCH is mapped

FIG. 9C

FIG. 9D

FIG. 9E

FIG. 9F

FIG. 9G

RE

RB

f

0 1 2 3 4 5 6 7 8 9 10 11 12 13

0 1 2 3 4 5 6 7 8 9 10 11 12 13

t (symbol)

PDCCH          PDSCH          PT-RS

DMRS          No PDSCH is mapped

FIG. 9H

RE

RB

f

0 1 2 3 4 5 6 7 8 9 10 11 12 13

0 1 2 3 4 5 6 7 8 9 10 11 12 13

t (symbol)

PDCCH     PDSCH     PT-RS

DMRS     No PDSCH is mapped

FIG. 9I

RE

RB

f

t (symbol)

| | PDCCH | | | PDSCH | | | PT-RS |

| | DMRS | | | No PDSCH is mapped |

FIG. 9J

FIG. 9K

FIG. 9L

RE

RB

f

0 1 2 3 4 5 6 7 8 9 10 11 12 13

0 1 2 3 4 5 6 7 8 9 10 11 12 13

t (symbol)

| | PDCCH | | PDSCH | | PT-RS |
| --- | --- | --- | --- | --- | --- |
| | DMRS | | No PDSCH is mapped | | |

FIG. 10A

FIG. 10B

RB

RE

f

0 1 2 3 4 5 6 7 8 9 10 11 12 13

0 1 2 3 4 5 6 7 8 9 10 11 12 13

t (symbol)

PDCCH     PDSCH     PT-RS

DMRS     No PDSCH is mapped

FIG. 10C

FIG. 10D

FIG. 10E

RE

RB

f

0 1 2 3 4 5 6 7 8 9 10 11 12 13

0 1 2 3 4 5 6 7 8 9 10 11 12 13

t (symbol)

▨ PDCCH     ☐ PDSCH     ⊠ PT-RS

■ DMRS     ▨ No PDSCH is mapped

FIG. 10F

EP 3 605 977 B1

FIG. 10G

Legend:
- PDCCH
- DMRS
- PDSCH
- No PDSCH is mapped
- PT-RS

67

RE

RB

f

0 1 2 3 4 5 6 7 8 9 10 11 12 13

0 1 2 3 4 5 6 7 8 9 10 11 12 13

t (symbol)

▨ PDCCH     ☐ PDSCH     ▨ PT-RS

■ DMRS     ▨ No PDSCH is mapped

FIG. 10H

RE

RB

f

0 1 2 3 4 5 6 7 8 9 10 11 12 13

0 1 2 3 4 5 6 7 8 9 10 11 12 13

t (symbol)

PDCCH     PDSCH     PT-RS

DMRS     No PDSCH is mapped

FIG. 10I

FIG. 10J

FIG. 10K

RE

RB

f

t (symbol)

0 1 2 3 4 5 6 7 8 9 10 11 12 13

0 1 2 3 4 5 6 7 8 9 10 11 12 13

PDCCH  PDSCH  PT-RS

DMRS  No PDSCH is mapped

FIG. 10L

EP 3 605 977 B1

FIG. 11A

73

FIG. 11B

RE

RB

f

0 1 2 3 4 5 6 7 8 9 10 11 12 13

0 1 2 3 4 5 6 7 8 9 10 11 12 13

t (symbol)

PDCCH    PDSCH    PT-RS

DMRS    No PDSCH is mapped

FIG. 11C

RE

RB

f

0 1 2 3 4 5 6 7 8 9 10 11 12 13

0 1 2 3 4 5 6 7 8 9 10 11 12 13

t (symbol)

▦ PDCCH          ☐ PDSCH          ⊠ PT-RS

■ DMRS           ▧ No PDSCH is mapped

FIG. 12A

FIG. 12B

FIG. 12C

FIG. 12D

FIG. 13

FIG. 14

| Terminal device | Network device 1 | Network device 2 |
|---|---|---|

S201A. Second indication
information, used to indicate a
location of a time-frequency resource
occupied by at least one PT-RS that
comes from a network device 1

S201B. Second indication information, used to indicate a
location of a time-frequency resource occupied by at least one
PT-RS that comes from a network device 2

S202. Determine a location of
a time-frequency resource
occupied by at least two
groups of PT-RSs

S203. Send a data signal (not mapped to the resource occupied by
the at least two groups of PT-RSs)

S203. Send a data signal (not mapped to the resource occupied
by the at least two groups of PT-RSs)

FIG. 15

**Wireless communications system 10**

| First device 400 | Second device 500 |
|---|---|
| Processing unit 401 — Sending unit 403 | Receiving unit 501 — Processing unit 503 |

FIG. 16

**Wireless communications system 20**

| Network device 600 | Terminal device 700 |
|---|---|
| Processing unit 601 — Sending unit 603 | Receiving unit 701 — Processing unit 703 |

FIG. 17

**Apparatus 80**

Processor 801

Memory 803

Bus 804

Input/Output interface 802

...

Radio frequency (RF) module

...

FIG. 18

**Apparatus 90**

Processor 901

Memory 903

Bus 904

Input/Output interface 902

...

Radio frequency (RF) module

...

FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CATT.** Further discussion on phase tracking for UL. *3GPP DRAFT; R1-1700233, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE,* 16 January 2017, vol. RAN WG1, http://www.3gpp.org/ftp/Meetings_3GPP_SYNC/RAN 1/Docs

- **ZTE et al.** Simulation results for downlink DMRS. *3GPP DRAFT; R1-1700137 SIMULATION RESULTS FOR DOWNLINK, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE,* 16 January 2017, vol. RAN WG1, http://www.3gpp.org/ftp/Meetings_3GPP_SYNC/RAN 1/Docs
- **ZTE et al.** Resource sharing between PDCCH and PDSCH. *3GPP DRAFT; R1-1701587,* 12 February 2017, http://www.3gpp.org/ftp/Meetings_3GPP_SYNC/RAN 1/Docs